(19) Europäisches Patentamt
European Patent Office
Office européen des brevets

(11) Publication number: 0 275 826 A1

(12) EUROPEAN PATENT APPLICATION

(21) Application number: 87810739.0

(22) Date of filing: 10.12.87

(51) Int. Cl.[4]: G05B 19/00, G01N 35/00, G01N 1/28

(30) Priority: 16.12.86 US 942196
09.07.87 US 71698

(43) Date of publication of application:
27.07.88 Bulletin 88/30

(84) Designated Contracting States:
BE CH DE FR GB LI NL

(71) Applicant: CIBA-GEIGY AG
Klybeckstrasse 141
CH-4002 Basel(CH)

(72) Inventor: Nau, Vance J.
22404 Riverside Drive
Cupertino California 95014(US)
Inventor: Grant, Keith H.
6230 E. Joaquin Muerieta Avenue
Newark California 94560(US)

(74) Representative: Dipl.-Ing. Schwabe, Dr. Dr. Sandmair, Dr. Marx
Stuntzstrasse 16 Postfach 86 02 45
D-8000 München 86(DE)

# (54) Control system for a sample preparation system.

(57) There is disclosed herein a system for controlling an electromechanical system comprised of a number of electromechanical devices (e.g., 30, 32, 34, 36, 38, 40, etc.) such as solenoid operated valves, motor, relays and other devices. The control system is comprised of a central processing unit (20) and control software plus suitable interface circuitry to convert the digital data from the central processing unit into suitable control signals to operate the electromechanical devices. The control software allows users to either select preprogrammed sequences of commands to be executed by the computer or to program unique sequence at either of two levels of complexity. User access privileges may defined by the system manager such that certain users may not be allowed to program their own sequences, while other users may be allowed to program their own sequences only on the first level of complexity but not the second, while a third group of users may be allowed to program on either of the programming levels or to run the preprogrammed sequence as defined by the system manager. The two levels of programming complexity are a high level and an expert level where the command set on the high level consists of a plurality of commands each of which represents a macro. A macro is a collection of more detailed commands from the expert level each of which represents a single operation to be performed or a very small group of operations by the electromechanical devices being controlled. Collections of these commands from the expert level are then put together in prearranged sequences to define predetermined functions of the system which may be performed by the single high level command representing that macro. The command set on the expert level is therefore comprised of commands which define single operation such as valve openings and closures or relay openings or closures or the turning on of a motor or the turning off of a motor.

EP 0 275 826 A1

FIG. 2

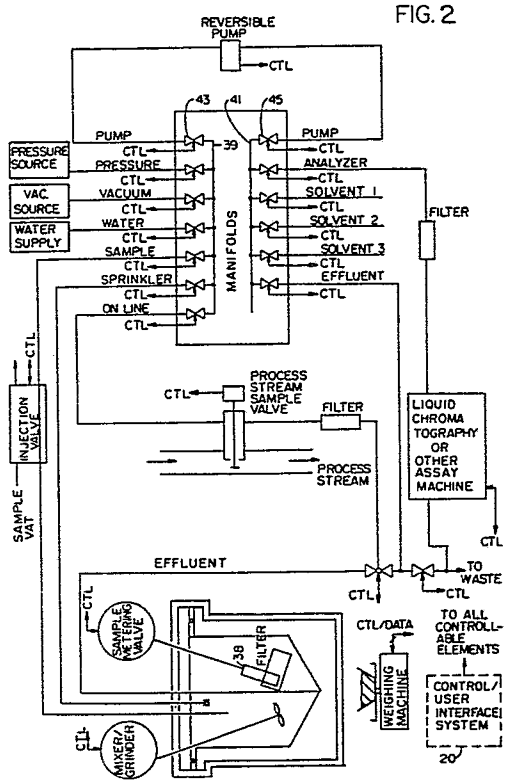
REVERSIBLE PUMP
CTL
43
41
45
39
PUMP
PRESSURE SOURCE
PRESSURE
VAC. SOURCE
VACUUM
WATER SUPPLY
WATER
SAMPLE
SPRINKLER
ON LINE
MANIFOLDS
ANALYZER
SOLVENT 1
SOLVENT 2
SOLVENT 3
EFFLUENT
FILTER
INJECTION VALVE
SAMPLE VAT
PROCESS STREAM SAMPLE VALVE
PROCESS STREAM
LIQUID CHROMA TOGRAPHY OR OTHER ASSAY MACHINE
TO WASTE
CTL/DATA
TO ALL CONTROLL-ABLE ELEMENTS
SAMPLE METERING VALVE
38
WEIGHING MACHINE
CONTROL/USER INTERFACE SYSTEM
20
MIXER/GRINDER

# CONTROL SYSTEM FOR A SAMPLE PREPARATION SYSTEM

## Background of the Invention

The invention pertains to the field of sample preparation systems, and more particularly, to the field of control systems for automated sample preparation systems.

In many industrial production facilities and laboratories, there is a need to assay sample chemicals being prepared, analyzed or otherwise processed. Such samples can come in many different forms. For example, they may be solid, liquid, two phase liquid or liquid-solid, and may or may not be highly viscous. Many types of assay systems require liquid samples of known viscosity and concentration. An example would be a liquid chromatography system.

Obviously, there is a need for systems which can prepare many different types of samples for assay by such machines. Preferably such systems are automatic in the sense that after the user defines the type of sample preparation needed, the system automatically carries out this processing on samples until told to stop or until the sample preparation runs out of samples.

Because of the many different types of sample formats and because of the many different types of sample preparation processes which exist for various types of assays, there is a need for flexibility and programmability in a control system for an automated sample preparation system. The user must be provided the facility with which the particular types of samples he or she intends to process may be prepared in a process for which the steps and sequence of steps are defined by the user. In this way the user can tailor the automatic sample preparation system for use in the environment peculiar to that particular user.

Prior art automatic sample preparation systems exist in the form of robots. One particular type of robot of which the applicants are aware is a robot manufactured by Zymark. These robots may be programmed to emulate all the movements a human being would make in doing a sample preparation process manually. Unfortunately, such systems are complicated and expensive and difficult to use because of the complexity of the mechanical machinery and control computers and software needed. Thus, a need has arisen for a control system for a sample preparation system which is flexible, programmable, easy to use, and relatively inexpensive to manufacture.

## Summary of the Invention

In accordance with the teachings of the invention, there is provided a control system for a sample prepara tion system to fully automate the system and allow users to program their own sample preparation procedures or to use preprogrammed procedures. Further, the control system allows a user acting as a system manager to define the necessary sample preparation procedures for various types of samples likely to be encountered. Then the system manager may lock out users without system manager privileges to prevent them from altering the procedures while allowing such users to use the procedures programmed for them by the system manager.

The control system of the invention allows user interaction with the system at three levels. At the first level, users may only give the sample identification (in embodiments with no bar code reader), the sample weight, the user initials, the date and time, the lot number to run, and the method of sample preparation to be followed. These methods of sample preparation will have been programmed into nonvolatile memory before the control system is obtained by the user or will have been previously programmed in by the system manager.

The next level of user interaction is a high level language level. At this level, the user has various high level sample preparation system control commands at his disposal. Such commands include fill, mix, isolate, flush, dilute, inject, wash, etc. Each of these commands represents a predetermined sequence of events which will be caused by the control system to happen in the sample preparation system when the particular command is executed in the course of performing a sample preparation procedure. The user at this level may string a series of such high level commands together into a sample preparation procedure and give it a name. Upon selection of a high level command, the control system would prompt the programmer for any necessary variables or parameters, such as solvent selection, volumes, flow rates, mixing times, etc. Thereafter, by identifying the particular procedure the user wishes to run, the same sequences of events may be caused to occur in the sample preparation system of the invention. Some of the high level commands have parameters which are accessible to the user and may be set to accommodate the particular needs of the user. These parameters allow the user to control, for example, the amount of time a mixing step is carried out and the level of energy that is input to the mixer by the homogenizer.

The key to breaking up sample preparation procedures into a series of standard preparation steps, which can be chained or re-chained together in any useful sequence the user needs to accomplish his desired sample preparation procedure, is to design the hardware and software control logic to allow each standard preparation step and each programmed series od standard preparation steps to be completely independent of the preceding or following step or series of steps. For example, upon completion of a dilution sequence or cup wash cycle, the diluent or wash solvent from a prior dilution or rinse should not be left in the instrument connecting tubings or modules. If there is such leftover solvent etc, it may inadvertently contaminate the next dilution or wash with the wrong or an undesired solvent. If this undesired solvent could not be removed from all tubings and connections prior to the next step or sequence of steps, the next step would be restricted to using a solvent deemed compatable with the undesired solvent and thereby place undesired restrictions on the next step.

At the most detailed level, the control system according to the invention provides the user access to and programmability for elemental operations of the type that are combined into the sequences which make up each high level command. Such elemental operations control individual events in the system such as the opening and closing of a particular valve, the turning on of the homogenizer, setting of the power level of the homogenizer, etc. The user may program the system at this level by stringing names. These sequences may be thought of as user definable high level commands, or "macros." The user may string any number of macros together to form a procedure which may then be labelled and executed by referring to it by its name.

## Brief Description of the Drawings

Figure 1 is block diagram of the hardware of the control system and the system electromechanical devices which are read and controlled by the control system.

Figure 2 is a schematic diagram of a typical sample preparation system which may be controlled by the control system of the invention.

Figure 3 is a schematic diagram of another embodiment of a sample preparation system which may be controlled using the control system of the invention.

Figure 4 is a flow diagram of the overall control flow of the control system software.

Figure 5 is a flow diagram of the various routines of the control system of the invention.

Figure 6 is a flow diagram of the create, modify and delete routine of the control system of the invention that the allows a user to create new sequences of commands at either of two levels of detail and complexity.

## Detailed Description of the Preferred Embodiment

Figure 1 is a block diagram of the electronics of the control system in accordance with the teachings of the invention. The control system is centered around a CPU 20 which could be a microprocessor, personal computer, minicomputer, or mainframe. Included within the CPU block is RAM memory for storing programs and data while the computer is running. Mass storage of data, programs, and other information such as data bases, macros, user defined parameters, user defined sample processing routines, etc., is performed by mass storage unit 22. This unit could be a disk drive, tape transport, bubble memory, or any other bulk storage device with sufficient access speed and stor age capacity for the particular application involved. The user controls the computer 20 through a terminal comprised of keyboard 24 and any type of display 26.

The computer 20 is coupled to the various operating units in the sample preparation system by bus 28. This bus 28 is actually comprised of the address, data, and control signal lines of the computer 20. The bus is coupled to the ports for addresses, data, and control signals such as read/write, interrupt, ready, etc. on the various drivers and interfaces to the various functional elements of the system. A more complete description of the sample preparation system for which the control system is intended to be used with is given in the following U.S. patent applications: "System for Preparation of Samples for Analysis" by Nau, Metzger, Orimm, Nohl, serial number 942,197, filed 12/16/86 and "Sample Preparation Chamber with Mixer/Grinder and Sample Aliquot Isolation" by Nau, Metzger, Grimm, Andre, and Nohl, serial number 942,198, filed 12/16/86, both of which are hereby incorporated by reference.

Because the sample preparation system is intended for use in applications where either the samples will be brought into the system in cups or other containers with bar codes thereon or pumped into the cup through a 6-way valve, a bar code reader 30 is provided. This allows sample identification data such as lot number and batch number or other types of information pertaining to the incoming samples to be read from bar codes on the sample containers. This information may then be read by the computer 20 and stored in the mass storage unit 22 for later correlation with the test results for that group of samples. Bar code readers are known and systems for moving sample containers by bar code readers so that the bar codes may be read are also known.

In the preferred embodiment, a network interface controller 32 is provided to allow other computers and units on a network in the user facility such as terminals in the offices of scientists to offices, program the system or inquire as to the status of a particular sample preparation routine. Further, the users may have access to the data which resulted from a particular sample run. For the network interface, this user can have the sample data resulting from the assay of a particular lot of sample communicated directly into the data based in the other computer.

A sample loader 34 functions to mechanically load samples arriving in containers. The particular design of the sample loader is not critical to the invention. It may load sample from one or more containers brought in by the user such as a tray of test tubes into the sample preparation chamber. In such a system, the sample from each test tube would be loaded into the sample preparation chamber, homogenized, diluted, and pumped through the assay system. At some point in the process, the sample would be identified either by the user keying in the identification data or by the bar code reader 30 reading the bar code on the test tube. The analysis data from the assay would then be stored in the mass storage unit 22 along with the corresponding identification data. The sample loader would then load the sample from the next test tube into the sample preparation chamber, and the process would be completed for the sample from the next text tube. The design of such a sample loader is known and a commercially available unit which could be programmed to do the job would be the PRO/GROUP(tm) automatic assay machine available from Cetus Corporation in Emeryville, California. In alternative embodiments, the sample loader 34 could be any mechanical system which could take a cup like that used in the sample preparation chamber described in the patent applications incorporated by reference and attach it to the cap. Any mechanical arrangement that can load a copy from a tray, conveyor belt, or carousel of cups into mechanical, sealing engagement with the cap of the sample preparation chamber described in the patent applications incorporated by reference will suffice. In some embodiments, this unit may be omitted altogether where sample is pumped in from a process stream or injected from a 6-way valve coupled to a sample vat. The design of suitable sample loaders which will suffice to practice this aspect of the invention is known.

There is also provided electronic scales 36 in the preferred embodiment. These provide the facility for weighing of solid samples or samples which are too viscous to pump into the sample preparation chamber where such samples are placed manually in the sample preparation chamber. The purpose of weighing such samples is to provide the user with an indication of the amount of sample that has been placed in the sample preparation chamber. This is important because the samples will later be diluted with solvents or diluent to a user defined concentration. In order to do this properly, the weight of sample in the sample preparation chamber prior to addition of the diluent must be known. The electronic scales also provide an RS232 or parallel interface to the computer 20 via the bus 28 so that the computer 20 may read the sample weight directly. The electronic scales may be eliminated in some embodiments. Without the electronic scales, if the user is dealing with a solid sample, the weight of sample placed in the sample preparation chamber must be keyed in by the user through the keyboard 24. A suitable electronic scale 36 would be the Mettler AE160 available from Mettler in Switzerland.

A pump interface 38 provides the facility for the computer 20 to control the reversible pump used in the sample preparation chamber. The pump motor may be a stepper motor or a D.C. servo motor with an optical or other type of encoder so that the pump interface circuit 38 can determine the position of the motor shaft at all times. Any type of motor with sufficient power and a system to positively control the pump shaft position or otherwise control the exact volume pumped will suffice. The pump interface obviously needs to be designed to interface between the particular type of pump motor and pump chosen and the particular type of computer 20 chosen.

Figure 2 shows one embodiment of a sample preparation system with which the control system of the invention may be used. In this embodiment of the sample preparation system, the details of the structure and operation of which are as described in the patent applications incorporated herein by reference, two manifolds 39 and 41 are used as central terminals in what amounts to a fluid switching multiplexer. Each manifold is coupled to various sources of material or various destinations in the system by a plurality of remotely controllable valves of which valves 43 and 45 are typical. These valves are typically solenoid operated or pneumatically operated under the control of the computer 20. The purpose of the valve interface 40 in Figure 1 is to electrically translate the address, data, and control signals on the bus 28 into the proper electrical or pneumatic control signals to cause the proper valve in the system to assume the proper state. Such interface circuits are well known for either solenoid operated valves or pneumatically operated valves. For example, in the case of solenoid operated valves, a motor controller chip can decode the address on the bus 28 and a data word indicating whether the valve is to be opened or closed along with an active write signal. All these signals define an action desired for a particular valve. The address specifies which valve is to be operated, and the active write signal indicates when the computer 20 is addressing a particular valve. The data word defines whether the valve is to be opened or closed or which of its multiple states to assume in the case of a multistate valve.

The motor controller chip then activates a particular output signal line coupled to a solenoid driver such as a relay or a triac in such a manner as to cause the desired change in the state of the addressed valve.

In the case of pneumatic valves, the address, data and control signals are decoded, as above, but the activated output signal from the motor controller chip is used to control a pneumatic pressure source to either apply pneumatic pressure or remove it from the particular valve addressed.

Figure 3 shows the preferred embodiment of the sample preparation system with which the control system in accordance with the teachings of the invention is used. The difference between this sample preparation system and the sample preparation system of Figure 2 is that the manifolds 39 and 41 and the associated valves such as valves 43 and 45 are replaced with two rotary, multistate valves 47 and 49. All other details of the system structure and operation are as described in the patent applications incorporated by reference herein. Each of these valves has a central input pipe, pipes 51 and 53 respectively, which is connected to only one of a plural ity of output ports coupled to various sources of material or destinations in the system. A stepper motor or D.C. servo motor with optical encoder is used to drive the valve to its various states. In such an embodiment, the valve drivers 40 are the interface circuits needed to control the stepper motors or D.C. servo motors.

Integrated circuits for stepper motor control are commonly available. These circuits allow the computer 20 to send address and data words to the stepper motor controllers after enabling the chip with a proper chip select signal. The address signals indicate which of the two rotary valves is being addressed, and the data words indicate the desired state in which the rotary valve is to be placed. Typically, these integrated stepper motor controllers have a command set. Typical commands include commands to start and stop the controlled motor, commands to control the acceleration and deceleration profiles to use, commands to control the step number to which the controlled motor's shaft is to be moved, and commands to read the particular step at which the controlled motor's shaft is currently resident. Such chips may be used to control the stepper motors used to drive the rotary valves 47 and 49. In the preferred embodiment of the sample preparation system, these rotary valves 47 and 49 are manufactured by Hamilton Company of Reno, Nevada.

A typical D.C. servo motor which could be used to drive the rotary valves 47 and 49 is manufactured by Galil Motion Control, Inc. of Mountain View, California under the model designation DMC 100. These servo motors have optical encoders which are used to provide feedback as to the shaft position to an interface board for the Galil motor plus motor controller chips for the other remotely controlled valves in the system.

The RS232 port interface 42 may be a simple commercially available UART. The analyzer 48 may be coupled to the computer 20 through the RS232 interface 42, or the network interface 32.

The mixer 55 in Figures 1 and 2 may be an ultrasonic mixer such as is made by Sonic and Materials of Danbury, Connecticut under the trademark VIBRA CELL. In alternative embodiments, a high speed homogenizer could be used such as are made by Brinkman (shroud with a high speed rotating shaft therein rotating at 28,000 RPM, thereby creating a high shear in the liquid and disintegrating particles therein). These units come with their own interfaces which may be used for the mixer interface 44. The basic control functions needed to control the mixer are the time of mixing and the power level which controls the amount of turbulence generated in the liquid. The mixer interface will be necessary electronics to interface with the mixer control circuit for the selected mixer. The details of how to interface the computer 20 to the interface circuits that come with the mixers will be apparent to those skilled in the art. A good reference for interfacing computers such as the computer 20 to control external instrumentalities is Libes and Garetz, Interfac ing S-100/IEEE 696 Microcomputers, (Osborne/McGraw Hill 1981) which is hereby incorporated by reference. An auxiliary interface 46 is provided to allow the computer 20 to control external instrumentalities such as valves, solenoids, etc. which are outside the sample preparation system. Typically, this interface will be digital, programmable ports such as are commonly available in integrated circuit form where the characteristics of the ports may be set by the user.

Figure 4 is a high level functional diagram of the control program in the computer 20 which allows users to program and run their own sequences of events to be performed in the sample preparation system under control by the control system of the invention. The control program runs the user defined sequences by generating the proper control signals to cause the desired sequence of events to occur in said sample preparation system.

At power up in some embodiments, the system will perform a self test to verify the integrity of the system prior to performing any operations. This is symbolized by block 50. Next, the system displays a user identification request/sample identification request screen as symbolized by block 52 (hereafter references to blocks will be understood to mean reference to those source code computer instructions organized as routines and subroutines in the control program which perform the function indicated in the block referred to). The purpose of block 52 is to supply query fields on the terminal or display 26 for the user to respond to by filling in the requested data via the keyboard 24. The requested data is to identify the user, to give various data items regarding the sample, to give the date and the time and to identify the sequence the user desires to run. The data items regarding the sample to be filled in may include the sample ID, the sample weight, and the lot number from which the sample came. The user identification number is used by the control system to determine the access privileges which the user has.

The control system has three levels of access. At the simple level, the user may only run sequences that have been previously programmed by the system manager. At the high level, users having access privileges at this level may program their own sequences of events using commands from a high level language command set. These commands represent predetermined building block functions which are necessary to perform sample preparation. Such building block functions include: mix, isolate known sample volume, flush the remaining liquid out of the sample preparation chamber, release the isolated sample volume, dilute the sample volume with a user defined volume of a user identified solvent, pump the diluted sample to the analyzer, etc. At the expert level, users having access to this level may program their own "macros" using system commands at a more detailed level than the high level commands identified above. These more detailed commands allow the user to control the system at a finer level of resolution. For example, a typical command may be "open valve #1" or "rotate multiport valve #2 to state #3." Each of the high level commands is comprised of a predetermined sequence of expert level commands.

The identification data entered by the user in block 52 via the keyboard 24 is stored on the mass storage device 22 in block 54. Next the system, in block 56, determines the access privileges of the user by comparing the user ID to the list of ID numbers supplied by the system manager for each level of access.

Block 58 represents the step of displaying an option menu by which the user, by selecting an option, may express a request regarding what the user wishes the system to do or what the user desires to do with the system. Typical menu options include: start, status, method, directory, report, load, print, system, control, defaults, functions, and options. The meaning of these options will be explained more below.

After the user has entered his or her request via the keyboard 24, the control system verifies that the user has the access privilege necessary to perform the function requested in block 60. If so, the control system branches to the routine which performs the desired function or provides the facility requested by the user in block 62. If the user does not have the required access privilege, a message to that effect is displayed in block 64, and processing proceeds to block 58.

Referring to Figure 5 there shown a flow chart of the various routines which are available for selection by the user in Step 58 of Figure 4. The first routine, symbolized by block 64, is a routine which allows the user to create, modify, or delete an operation sequence. An operation sequence is a collection of commands which are executed by the central processing unit in order to generate control signals to control the electromechanical devices in the system. The control signals cause them to perform a physical sequence of events to process a sample where the sequence is defined by the particular sequence of commands in the program. The routine of block 64 allows the user to program his own sequences of commands at either of two levels of complexity. At a first level of complexity, the user may have access to a set of commands each of which represents a specified function that the system is capable of performing and each of which causes a predetermined sequence of events to occur in the proper order to cause the physical event symbolized by that command. The second level of complexity allows the user to have access to a set of commands which are very detailed. These commands each represent a single action or a very small group of actions that one or a very small group of electromechanical devices performs. Essentially, the commands at this second level are the component commands which are grouped together in a predetermined sequence to implement one of the commands on the first level. Essentially then, the commands on the first level are macros which are collections of commands on the second level but arranged in a predetermined sequence for each particular command on the first level.

Block 66 is a routine which allows the user to print a hard copy of a sequence which has been programmed by the user.

Block 68 is a routine which allows the user to load a predetermined sequence, i.e., a method of sample preparation which has been preprogrammed by the system manager. The system manager is a user which has access to all functions of the system. That is, the system manager can define the access privileges of all the other users on the system, and he may program preprogrammed sequences which are available for certain users who are not allowed to program their own sequences. Block 68 is the routine which the user calls when one of these preprogrammed sequences is to be loaded.

Block 70 is a routine which allows the user to print a directory of all the methods or sequences which are stored in the system and available for execution. Block 72 represents a routine which allows the user to start the selected sample preparation routine and which causes the CPU to begin generating the control signals which cause the physical actions to occur.

Block 74 represents a routine which displays the system status. Block 76 is a routine which allows the user to print the system status which is displayed in the routine of Block 74.

Block 78 is a routine which allows the user to change the system default parameters. Typically, each command on either the first or second programming level will have parameters or arguments associated therewith. These arguments are variable values which define the specific manner in which the command is to be performed. For example, a mix command may have as an argument the power level at which the mix is to be performed, the time duration of the mix, and the RPM that the mixer is to use.

The routine represented by block 80 allows the user to have access to the various valve and relay controls such that the user may open certain valves or close certain relays manually by causing the CPU to generate the proper command to cause the proper operation of the valve, relay or other electromechanical device.

Block 82 represents a routine which allows the system manager to create new system functions.

Block 84 is a routine which allows the user to print a report. Such reports may consist of reports of user activity, the sequences which have been run, the volume of activity for a particular sequence, and so on. Block 86 is a routine which allows the user to change the print parameters. This routine allows the format of the report to be set such as margins, spacing, headers, and other types of formatting commands common to database report routines.

Block 88 is a routine which displays for the user the system options which have been elected and which are operable.

Block 90 is a routine which allows the user to use the print mode of the system for various functions.

Block 92 is a routine which allows the system manager access to certain system functions.

Referring to Figure 6 there is shown a more detailed flow diagram of the create, modify and delete routine of block 67 in Figure 5. The first step when the user elects to program his own sequence is to inquire whether the user wishes to program on the first level or on the second level noted above. The first level will be called the high level for purposes here, and this level will provide the user access to the macro commands. The second level will be called the expert level and grants the user access to the detailed commands which essentially allow the user to define each valve opening and closing and each operation of each motor or other electromechanical device individually. The levels are named the high level and the expert level for purposes of indicating the relative amounts of skill needed to program on these levels. Programming at the high level is similar to calling subroutines or macros on any computer. Programming on the expert level is similar to programming in source code and requires a some programming skill and a great deal of knowledge regarding the hardware aspects of the system being programmed.

The process of determining which level the user wishes to have access to is symbolized by step 94. This step also determines the user's access privilege by checking the user's identification code and comparing it to a table or other such database defined by the system manager which indicates which users have access to the high level command set and which users have access to the expert level programming command set. If the user elects to program at the high level, the next step is symbolized by block 100. In this step, the user is prompted for a name for the sequence which he is about to program. After the sequence has been named, step 102 is performed wherein the user selects the first high level command which is to be executed in the sequence. In some embodiments, the list of high level commands from which the user may choose may be displayed and the user may simply choose a command by positioning the cursor on the proper command and pressing a select key. In other embodiments, the user may be required to know the high level commands and select the particular command desired by an acronym.

As noted above, most commands have certain parameters or arguments. Step 104 represents the process of prompting the user for parameter values for the command selected in step 102. Each command will have default parameters which are set by the user in step 78 of Figure 5. If the user wishes to use the default parameters, he need do nothing in step 104. If however, the user wishes to define the specific manner in which the particular command is to be executed, then the parameters for that command may be adjusted in step 104.

After step 104 is performed, the control software causes the central processing unit to prompt the user to determine if the command just defined is the last command in the sequence. This step is symbolized by block 106 in Figure 6. If the user is done picking commands, the processing proceeds to step 108 where the method is stored in permanent storage such as on a floppy disk or hard disk. Processing then returns to the main menu symbolized by block 58 in Figure 4.

If the user is not finished programming, then processing proceeds from block 106 to block 110 where the user is prompted to select the next high level command in the sequence. Processing then proceeds to block 112 where the parameters for the command selected in block 110 are displayed and the user is prompted for new values for these parameters. If the user responds with new parameters, these are stored with the command as a permanent part of the sequence being programmed. After step 112 is performed, step 114 is performed to again to test for completion of programming. Step 114 represents the process of prompting the user to determine if the user is done programming. If he is, then processing continues at step 108 as described above to store the method. If the user is not done programming as determined in step 114, then processing returns to step 110 where the user is prompted to select the next command in the sequence.

Returning again for a moment to step 94 in Figure 6, if the user is determined to have no access to either the high level or expert level programming command sets, then step 94 vectors processing to a step 96 wherein a "no access privilege for selected level" message is displayed on the terminal. Thereafter, in step 98, processing is returned to the main menu of step 58 in Figure 4.

If the user selects the expert level for programming, a similar sequence of events occurs starting with step 116. There the user is prompted to name the sequence he is about to define. The next step, 118, prompts the user to select the first expert level command to be executed in the sequence. Then, in step 120, the user is prompted to select new parameters for the expert level command selected in step 118. Again, the expert level commands also have default values which may be altered by the user in step 120. Step 122 represents a test to determine if programming has been completed. If it has, then step 108 is performed as described above. If programming is not completed, processing proceeds to step 124. There the user is prompted to select the next expert level command and define the parameters for that command.

Step 126 represents a test to determine whether the user is done programming. If he is, then step 108 is performed and control is returned to the main menu. If the user is not done programming, then control returns to step 124 where the user is prompted to select the next expert level command.

Appendix A is a listing of the source code for the preferred embodiment of the invention. This source code runs on an IBM PC running the Forth and DOS programs.

Although the invention has been described in terms of the preferred and alternative embodiments detailed herein, those skilled in the art will appreciate that many modifications may be made. All such modifications are intended to be included within the scope of the claims appended hereto.

## Claims

1. A control system for an apparatus having a plurality of electromechanical devices controlled by said control system, said control system having a CPU (20) wherein the improvement comprises software means (Figures 4, 5, 6) for allowing a user to cause said CPU to run any of a plurality of fixed command sequences or to program one or more new sequences using commands at any of a plurality of complexity levels where at least one complexity level is populated by commands which are macro commands in the sense that each is a concatenations of commands from at least one other of said complexity levels.

2. The apparatus of claim 1 wherein said software means includes means (Figure 6) for allowing a user to program sequences at a first level with macro commands each of which causes a predetermined sequence of events to be performed by said electromechanical devices.

3. The apparatus of claim 2 wherein said software means is also for allowing said user to modify the parameters of each command from default parameters where said parameters characterize some physical characteristic of the sequence of physical events that will be caused by execution of said command by said CPU.

4. The apparatus of claim 3 wherein said software means includes means for allowing said user to program a new sequence of commands to cause said electromechanical devices to perform at least one physical event where the commands available to the user are more primitive than the commands on said first level in the sense that each command represents a predetermined sequence of events which is less complex than the predetermined sequences of events caused by the commands at said first level.

5. The apparatus of claim 4 wherein said software means includes means for allowing each user to be identified by a code and further includes means for allowing at least one user to define the access privileges of all the other users and encode this access privilege data such that said software means can determine from said user identification code the access privileges each said user has.

6. The apparatus of claim 5 wherein said software means includes means to allow a first group of users to have access to and to run only said fixed sequences of commands and to allow a second group of users to run any of said fixed sequences of commands or to program a new sequence using only the commands at said first level and to allow a third group of users the ability to program a new sequence using commands at either of said first level or said second level or to run any of said fixed sequences.

7. A control system for an apparatus having a plurality of electromechanical devices comprising:

computer means for allowing a user to run fixed sequences of commands or sequences of commands the user programs himself and for generating control signals during the execution of these sequences which are coupled to said electromechanical devices and which cause these devices to perform the sequence of physical operations defined by the sequence being run; and

control means for said computer means for allowing said user to select and run any of one or more fixed sequences of operations or to program a new sequence at either of two levels of complexity.

8. The control system of claim 7 wherein said control means includes means to allow a user to program a new sequence using commands on a first level each of which represents a specific function of the system involving one or more physical actions of one or more of said electromechanical devices or to program a new sequence at a second level using commands each of which represents a single operation by a single electromechanical device.

9. The control system of claim 7 wherein said control means includes means to program a new sequence of operations using commands at either of a first level or commands at a second level wherein the commands at said first level each represent one physical operation by one electromechanical device and wherein the commands at said second level each represent a predetermined sequence of said commands at said first level.

10. The control system of claim 9 wherein said control means includes means to block access by certain users to commands for programming at either said first or second levels or both.

# APPENDIX A

## SOFTWARE LISTING INDEX


| | |
|---|---|
| PREP, LOAD, TIME, ERRORS & FUNCTIONS | 351 330 321 324 327 333 348 402 408 |
| WINDOWS | 354 357 360 363 |
| FILE SYSTEM | 411 414 417 420 423 |
| SCREEN SUPPORT | 378 381 384 387 390 405 |
| NORMAL SCREENS | 393 399 429 |
| HELP & HELP SCREENS | 426 |
| EDITOR & EDIT SCREEN | 336 339 342 |
| SNAPSHOT | 366 |
| TASK SUPPORT | 438 441 444 |
| STATUS TASK | 447 450 |
| DEVICE STATUS DISPLAY | 462 465 468 471 474 477 |
| STATUS BACKGROUND | 453 456 459 |
| CONTROL TASK | 501 504 507 510 |
| METHOD EXECUTION | 513 |
| DEVICE CONTROL | 528 531 534 537 546 549 552 555 558 |
| CONFIG & TABLES | 561 621 |
| HELP SCREENS (DATA) | 630 633 636 639 |

351 30

This block loads the entire Sample Preparation System.
It loads all other load blocks that make up the system.
A word called SP (or sp) will cause this block to be loaded.

PREP is the main entry point to the system, so after a power up, just type "SP PREP" to load and run the system. Note that SP will perform an 8 DRIVE before loading, so you don't have to switch drives yourself.

```
\ SAMPLE PREPARATION SYSTEM LOAD BLOCK
EMPTY   : TRUE 1 ;   : FALSE 0 ;   : NULL 0 ;    DECIMAL

88  LOAD     \ function key execution
33  LOAD     \ screen windows
45  LOAD     \ key functions
90  LOAD     \ file system
117 LOAD     \ task support
240 LOAD     \ Configuration tables
126 LOAD     \ status task
100 LOAD     \ control task
57  LOAD     \ screens
81  LOAD     \ keycode tables
89  LOAD  \ Join this with PREP command load
87  LOAD     \ main command interpreter
```

352 31

353 32

321

0

```
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
```

```
\ TEST
```

322

The Status task updates the status header when things change.

The Control task is responsible for executing the user's method to control the sample preparation hardware. It is a background type task, which means that it can not use any printing words. Error messages must be passed back to the User task for display.

1

```
( Sample Prep Task definitions )

300 TERMINAL PSTATUS
PSTATUS CONSTRUCT

2000 TERMINAL CONTROL
CONTROL CONSTRUCT

: HALT  ACTIVATE STOP  ;

\ 6387 PSTATUS 'TYPE HIS !
\ 'TAB @ PSTATUS 'TAB HIS !
```

323

2

```

32 CONSTANT RBUFF-SIZE   \ **NOTE:** MUST be a power of 2
CREATE RBUFF   RBUFF-SIZE ALLOT   RBUFF RBUFF-SIZE ERASE
VARIABLE WRPTR   VARIABLE RCOUNT

CREATE SBUFF 6 ALLOT
VARIABLE SBCTR   VARIABLE SBPTR

1843200. 1 16 M*/ 2CONSTANT DIVIDEND
HEX : SET-HAMILTON-BAUD
   DIVIDEND ROT M/   DUP
   83 3FB OUTPUT   3F8 OUTPUT
   >< 3F9 OUTPUT   3 3FB OUTPUT
   3 3F9 OUTPUT   0B 3FC OUTPUT
   3F8 INPUT DROP   3FA INPUT DROP   ;   DECIMAL
9600 SET-HAMILTON-BAUD   FORGET DIVIDEND
```

330

This is the title that shows up in .DRIVES

9

```
\ Sample Prep precompile load block

: +P   S +DRIVE   ;   \ Allows loading other local blocks

10 +P LOAD         \ Pre compile preliminaries and general tools
\ 13 +P LOAD         \ Clock and calander words for RP5C15 chip
\ 12 +P LOAD         \ Set Forth's time and date
1 +P LOAD          \ Control and status task definitions
2 +P 4 +P THRU     \ Interrupt & buffers for Hamilton valves
5 +P 8 +P THRU     \ Interrupt driven keyboard input buffer
27 +P LOAD         \ Error handling basics




\ Sample Preperation System Source Code  11/26/86
```

331

SHADOW for configurations

SP loads the sample prep software.  Type PREP to run.

(t") run time code for t", returns address of counted string.
t" compiles an inline string; will return it's address.
INVERT returns the ones complement of a value.
This is the title that shows up in .DRIVES

10

```
  \ Precompile preliminaries and general tools

: F2 1 SCR +! SCR @ LIST ;   \ Useful functions:
: F1 -1 SCR +! SCR @ LIST ;
: F3 HEX ." HEX  " ;
: F4 DECIMAL ." DECIMAL  " ;

HEX 1F1F WIDTH ! DECIMAL   \ 32 Char definitions

: SP 8 DRIVE 30 LOAD ;     \  Sample Prep System load command
: ASCII<  32 WORD 1+ C@  ; \ Convert next char to ascii code
: BINARY 2 BASE ! ;
: (t")   1 ?R@    ;
: t"  COMPILE  (t")  34 STRING  ;  IMMEDIATE
: INVERT  ( n --- n')  NEGATE 1-  ;

```

332

11

324 3

```
CODE SEND>SER   HEX
   3F8 # 2 MOV   SBPTR W MOV
   W ) 0 MOV   (2) OUT   SBPTR INC   WAIT JMP

VARIABLE CALLER   0 CALLER !
ASSEMBLER BEGIN   0 PUSH   2 PUSH   W PUSH   DS PUSHS
   ZERO # 0 MOV   0 DS LSG
   3FA # 2 MOV   (2) IN   3F8 # 2 MOV   4 #B 0 TEST   0=
      IF   ( output interrupt)
         IS SEG   SBCTR DEC   0=
            IF   IS SEG   CALLER W MOV   WAKE # W ) MOV
            ELSE   IS SEG   SBPTR I XCHG   LODS B
               IS SEG   SBPTR I XCHG   (2) OUT
         THEN
```

325 4

```
                  HEX
      ELSE   ( input interrupt)   (2) IN
         IS SEG   WRPTR W MOV
         IS SEG   0 RBUFF W) MOV B
         W INC.  RBUFF-SIZE 1- # W AND
         IS SEG   W WRPTR MOV
         IS SEG   ' RCOUNT INC   THEN
   DS POPS   W POP   2 POP   0 POP
   0C INTERRUPT

DECIMAL
```

326 5

```
CREATE KBBUFF   32 ALLOT
VARIABLE KBRPTR
VARIABLE KBWPTR

CODE >KBBUFF      HEX
   IS SEG   KBWPTR 1 MOV   1 INC   1F # 1 AND
   IS SEG   KBRPTR 1 CMP   0= NOT
      IF   1 W MOV   IS SEG   0 KBBUFF W) MOV B
         IS SEG   1 KBWPTR MOV
   THEN   RET
```

327 6

```
CODE spascii          HEX
   1 0 MOV   7F # 0 AND
   IS SEG   SHIFT 0 ADD B
   0 W MOV   IS SEG   KEYS 1- W) 0 MOV B
   0 2 MOV   20 #B 2 OR   61 #B 2 CMP   0< NOT
      IF   7B #B 2 CMP   0<
         IF   IS SEG   LOCK 0 XOR B   THEN
   THEN   80 # 1 AND   0= NOT
      IF   0 0 OR   0= IF   IS SEG   0 #B SHIFT MOV   THEN
      ELSE   0 0 OR   0= NOT
         IF   0B #B 0 CMP   0= NOT
               IF  IS SEG   ' >KBBUFF          JMP   THEN
            IS SEG   20 #B LOCK XOR
         ELSE   IS SEG   53 #B SHIFT MOV
      THEN   THEN   RET
```

328 7

```
ASSEMBLER BEGIN        HEX
   0 PUSH   1 PUSH   2 PUSH   W PUSH
   IS SEG   8000 # OPERATOR @ 0A + TEST   0< IF
      IS SEG   WAKE # OPERATOR @ MOV   THEN
   60 IN   0 1 MOV   IS SEG   'KEY STA B
   61 IN   80 #B 0 OR   61 OUT   80 #B 0 XOR   61 OUT
   IS SEG   46 #B 1 CMP   0= IF   ( Int #7 ) 07CD ,   THEN
   IS SEG   ' spascii              CALL
   W POP   2 POP   1 POP   0 POP
   09 INTERRUPT   DECIMAL
```

329 8

```
CODE (BKEY?)
   KBRPTR 0 MOV   KBWPTR 0 SUB   0 PUSH   NEXT
: BKEY?
   PAUSE   (BKEY?)   ;
HEX
: (BKEY)
   BEGIN   BKEY?   UNTIL
   KBRPTR @ 1+ 1F AND   DUP KBBUFF + C@   SWAP KBRPTR !   ;
DECIMAL
' (BKEY) 2- ' (KEY) !
' EXIT 2- ' (KEY) 2+ !
```

402

PEXIT stops the other tasks, cleans up, and exits back to FORTH
It should prompt the user before exiting.

81

```
\ Function Keys - Load Block

: PEXIT
  ." Exit System? (Y/N)" YES?
     IF   NORMAL WINDOWOFF PAGE
        CONTROL HALT   PAUSE
        PSTATUS HALT   PAUSE
        QUIT
  THEN  ;

83 LOAD
EXIT
```

403

82

404

FKEYS is the function key execution table used by the main sample prep routine. Defined function keys have routines defined in this table.

83

```
   \ Function Keys - Sample Prep function key table


CREATE FKEYS1
( 80) ' ST/STP   , ' PS/CNT   , '  CMD    ,  ' PEXIT   ,
( 84)     0      ,     0      ,     0     ,     0      ,
( 88)     0      ,     0      ,     0     ,     0      ,
( 8C)     0      ,     0      ,     0     , ' DESELECT ,
( 90) ' -FUNC    ,     0      , ' +FUNC   , '  SELECT  ,
( 94)     0      ,     0      ,     0     ,     0      ,
( 98)     0      , ' DESELECT , '  SELECT , ' SNAPSHOT ,
```

## 408

>LOWER converts any alpha key to lowercase for comparison with the function command characters.

PREP is the main entry point for the Sample Prep System. It performs any required initialization and then interprets single letter commands from the keyboard.

## 87

```
\ Sample Prep - Initialization, Main Entry Point
HEX
: >LOWER  ( C --- c)  DUP  41 5B WITHIN  IF  20 OR   THEN  ;
DECIMAL
: PREP  ( --- )
   0 DRIVE  BKG WINDOW  WINDOWON
   .FRAME  ['] STAT_SCR  'SCREEN !
   ['] FKEYS1  'FKEYS !
   WORK WINDOW  (PAGE)
   CONTROL SYSTEM  PSTATUS RUNNING
   0 'SCREEN !  STAT-OFF  STAT_SCR
   BEGIN
      BEGIN   CTL_MSG?   NEWSTATE?   BKEY?   UNTIL
      KEY -FUNCTION?  ?DUP
         IF >LOWER  CHAR>FN  THEN
   AGAIN   ;
```

## 409

-FUNCTION? checks a keyboard character to see if it is a function key, executing it's routine if it is defined. Returns a false if it was a valid function, true (or the character) otherwise.

## 88

```
\ Function key execution
HEX
VARIABLE 'FKEYS
: KEYLOAD ( a ---)
    19 0 DO   I 80 + OVER   KEYS +   I + C!   LOOP   DROP  ;
3A KEYLOAD   80 KEYLOAD   99 KEYS C!   99 KEYS 53 + C! ( esc=99)
FORGET KEYLOAD
: -FUNCTION?  ( c --- c | 0)
   DUP  D F WITHIN  IF  80 +  THEN
   DUP  80 9C WITHIN
      IF 80 - 2* 'FKEYS @ +  @ ?DUP
         IF EXECUTE 0  ELSE 1
   THEN THEN   ;
DECIMAL
```

## 410

## 89

```
: CTL_MSG?  ( - )
  FROM_CONTROL C@
     IF   FROM_CONTROL GET_MSG
          DROP   .MSG
  THEN  ;
```

33

```
\ Windows -  Sample Prep Windowing for IBM monochrome screen
\ Current window parameters
VARIABLE X1            : X1@  X1 @ ;
VARIABLE Y1            : Y1@  Y1 @ ;
VARIABLE WWIDTH        : WIDTH@  WWIDTH @  ;
VARIABLE WHEIGHT       : HEIGHT@ WHEIGHT @  ;
VARIABLE C_ROW
VARIABLE C_COL

11 ( 0BH) CONSTANT CRTSEG

HEX  : UNDERLINE    100 ATTRIBUTE !   ;
     : INVERSE     7000 ATTRIBUTE !   ;
     : NORMAL       700 ATTRIBUTE !   ;    DECIMAL
34 +P 44 +P THRU  \ Load the rest of windows
```

354

X1 is the column offset to the left window edge (0..n).
Y1 is the number of lines down from the top (0..n).
WWIDTH contains the # of chars across the window. (1..79)
WHEIGHT is the height of the window in lines (0..24)
C_ROW is the absolute screen line # of the cursor.
C_COL is the absolute screen column of the cursor.

CRTSEG is the screen memory segment address (B0000)

REVERSE makes subsequent screen output reverse video.
NORMAL restores output to normal video.

34

```
   \ Windows -  Screen scrolling

CODE scroll  ( --- ) I PUSH
   3 PUSH   WWIDTH 3 MOV   Y1 0 MOV   80 # W MOV   W MUL
   X1 0 ADD   0 0 ADD   0 #B 2 MOV   WHEIGHT 2 HI MOV 8
   0 PUSH   DISPLAY LDA   0 DS LSG   0 ES LSG   0 POP   BEGIN
      0 W MOV   160 # 0 ADD   0 I MOV   I PUSH   3 1 MOV
      REP MOVS   0 POP   1 #B 2 ADD   1 #B 2 HI SUB
   0= UNTIL   3 POP   0 IS SSG   0 DS LSG   0 ES LSG
   I POP   RET

CODE 'cursor  ( --- )
   0 PUSH   80 # W MOV   C_ROW LDA   W MUL   C_COL 0 ADD
   0 0 ADD   0 W MOV   0 POP   RET

CODE 'CURSOR  ( --- n ) ' 'cursor CALL   W PUSH  NEXT
```

355

scroll  scrolls the current screen window contents up one line.

'cursor  returns the screen address of the cursor in register W.
Multiplies cursor row by 80, adds column, and multiplies by 2.

'CURSOR is high level access to 'cursor.

35

```
   \ Windows - Carriage return
CODE clear   HERE  DISPLAY LDA   0 ES LSG   ATTRIBUTE LDA
   REP STOS   0 IS SSG   0 ES LSG   RET
CODE BLANKS   ( a n --- )  1 POP   W POP   ( clear)  CALL   NEXT

CODE (cr)  ( --- )
   X1 0 MOV   0 C_COL MOV   C_ROW INC   Y1 0 MOV   WHEIGHT 0 ADD
   C_ROW 0 CMP   0< IF   0 C_ROW MOV   WHEIGHT 0 MOV  0 0 OR  0>
   IF  ' scroll CALL  THEN THEN  ' 'cursor CALL   W PUSH
   WWIDTH 1 MOV   ' clear CALL   W POP   RET
CODE ?CR  ( --- )
   0 PUSH   X1 LDA   WWIDTH 0 ADD   0 DEC   C_COL 0 CMP
   0< IF   1 PUSH   2 PUSH   I PUSH   ES PUSHS   DS PUSHS
      IS PUSHS   ' (cr) CALL   IS POPS   DS POPS   ES POPS
      I POP   2 POP   1 POP
   THEN   0 POP   RET
```

356

clear  erases screen memory pointed to by W with count in reg. I
BLANKS takes a count and screen address and blanks n chars.

(cr)  puts cursor in column 0 of the viewport window, and advances the cursor line #. If line # is beyond bottom of the window, it scrolls window contents up 1 line and puts cursor on last line. Returns cursor address in W.

?CR  Tests cursor column position. If off right edge of window, it does a carriage return. W is preserved for (type).

357

(type) copies the string pointed to by PTR with length given by CTR to the screen window at the cursor position. The cursor column is advanced for each char, and ?CR will carriage return when it points past right edge of window.

36

```
\ Windows -  (type)

CODE (type)  ( --- )  W PUSH
  I PUSH   PTR U) I MOV   CTR U) 1 MOV   ' 'cursor CALL
  DISPLAY LDA   0 ES LSG   ATTRIBUTE LDA   BEGIN
     ' ?CR CALL   LODS B   STOS   C_COL INC
 LOOP   0 IS SSG   0 ES LSG   I POP   W POP   NEXT
```

358

emit puts char from stack on screen at cursor.

LINADR returns the absolute screen address of the specified window line.

BLINE blanks the specified window line.

CLS blanks the current window.

37

```
\ Windows - emit

CODE emit  ( c --- )
  ' 'cursor CALL   DISPLAY LDA   0 ES LSG   0 POP
  ATTRIBUTE 0 OR   ' ?CR CALL   STOS   0 IS SSG
  0 ES LSG   NEXT

: LINADR   ( l --- a )
  Y1@  +  80 *  X1@  +  2*   ;
: BLINE   ( l --- )
  LINADR   WIDTH@  BLANKS  ;

: CLS  ( --- )
  HEIGHT@ 1+  0   DO  I BLINE   LOOP  ;
```

359

COLUMN returns the window column of the cursor. (0..width)

+CURSOR moves the cursor by signed amount. If in column 0, and the move is negative, it backs up one line.

38

```
\ Windows - cursor movement

: COLUMN   ( --- col)   C_COL @  X1@ -   ;

: +CURSOR  ( n --- )
  DUP   0<  COLUMN 0= AND IF
     -1 C_ROW +!  X1@ WIDTH@ +  C_COL !
  THEN   C_COL +!  ;
```

360

"expect" is an exact copy from screen 83 of level 4 listing. It has to be defined here because the original is headerless, and can't be found by WORD. (note the vert. bar in front of CODE expect in the source listing: it compiles a headerless definition)

This is the title that is used for program listings.

39

```
  \ Windows - expect
CODE expect ( n - n n n) ASSEMBLER 32 # W MOV
  1 1 SUB   1 2 MOV   0 POP   12 #B 0 CMP   0= IF
     CNT U) DEC B   0< IF   CNT U) INC B
        ELSE   PTR U) DEC   CTR U) DEC   -2 # 1 MOV
  SWAP ELSE   2 #B 1 MOV   13 #B 0 CMP   0= NOT IF
     PTR U) W MOV   0< IF ( Fn)   1 1 SUB   2 #B CNT U) ADD
        17967 # 0 ADD   0 0 HI XCHG B   STOS   32 # W MOV
     ELSE   STOS B   W PTR U) MOV   W 0 XCHG
        CNT U) INC B   CTR U) INC   0= IF
     SWAP THEN   SWAP THEN   2 CTR U) MOV   2 INC
  THEN THEN THEN   2 PUSH 1 SAR   1 PUSH   W PUSH   NEXT.



\ Sample Prep Ver 0.1
```

361

(CR) High level access to (cr). Performs carriage return.

(TAB) moves the cursor position to specified line and column. Allows only valid window coordinates.

(TYPE) New vector for 'TYPE.

(PAGE) vector for 'PAGE. Clears window, homes cursor.

(EXPECT) is called from EXPECT in FORTH to get n chars and put them to an address. PTR, CTR, CNT are setup by EXPECT and used by "expect". Advances cursor position.

40

```
  \ Windows - Screen output for FORTH
CODE (CR)  ( --- )   ' (cr) CALL   NEXT

: (TAB)  ( l c --- )
   0 MAX   WIDTH@ 1-  MIN   X1@ +   C_COL !
   0 MAX   HEIGHT@   MIN   Y1@ +   C_ROW !  ;
: (TYPE)  PAUSE  (type) ;

: (PAGE)   ( --- )   CLS  0 0 (TAB)  ;

: (EXPECT)   BEGIN  95 emit  (KEY)
    expect  emit  +CURSOR  UNTIL ;
```

362

These constants define the IBM characters for drawing boxes.

HWLINE draws a horizontal line the width of the window.
WSIDES draws the left and right window border.

4SIDES draws a box around the current screen window.

DRAWBOX clears the current window, draws a border around it, and puts the viewport just inside the border.

41

```
  \ Windows - Drawbox
203 CONSTANT TD   202 CONSTANT BD   \ up and down "t"s
205 CONSTANT HZ   186 CONSTANT VT   \ horz, vert bars
201 CONSTANT UL   187 CONSTANT UR   \ upper corners
200 CONSTANT LL   188 CONSTANT LR   \ lower corners

: HWLINE  ( --- )  WIDTH@ 2- 0 DO HZ EMIT LOOP ;
: WSIDES  ( --- )  HEIGHT@  1 DO
     I 0 TAB VT EMIT  I   WIDTH@ 1-  TAB VT EMIT
  LOOP  ;
: 4SIDES   ( --- )
 0 0  TAB  UL EMIT  HWLINE  UR EMIT
  WSIDES   HEIGHT@ 0 TAB  LL EMIT  HWLINE  LR EMIT  ;

: DRAWBOX   ( --- )
  CLS 4SIDES 1 X1 +! 1 Y1 +! -2 WWIDTH +! -2 WHEIGHT +! ;
```

363

WINDOW stores the window parameters, clears the window, and places the cursor at it's upper left corner.

BOX is the same as above, but draws a box around the specified window and makes the window 2 characters smaller in both height and width.

WORK The work window is the full width screen between the status header and the menu bar.
FULL uses the entire screen.
SELECTION is the small window on the right side used for selecting things.
WIDEDIR is used for full directory listings.
HELPSIZE is the help window.

42

```
\ Windows - Windowing

: WINDOW   ( x1 y1 w h --- )
  WHEIGHT !  WWIDTH !  Y1 !  X1 !  0 0 (TAB)  ;

: BOX    ( x1 y1 w h --- )
  WINDOW  DRAWBOX   0 0 (TAB)  ;

\  Window Types:
: WORK        0 2 80 17  ; \  use all these as prefixex to
: BKG         0 0 80 24  ; \  WINDOW or BOX i.e:
: SELECTION  67 2 13 17  ; \      "BKG WINDOW"
: WIDEDIR    14 2 66 17  ;
: HELPSIZE    0 2 66 17  ;
: EDITING     0 2 67 17  ;

```

364

These constants contain the addresses of the non-windowing output routines. Used when disconnecting the windowing functions, or writing directly to the screen.

$TYPE types chars to the un-windowed screen. It duplicates the code found in scr 78 of Level 4 listing.
( 1930 is address of (type) )

$TAB positions the cursor on the un-windowed screen.
$EMIT prints a char to screen without using windows.
$SPACE outputs a space directly to the screen.
$SPACES sends n spaces.
$CLINE clears the given full screen line.
$EXPECT expects n chars to addr and echoes to full screen.

43

```
 \ Windows - Full screen output
'TYPE @ CONSTANT [TYPE]    'EXPECT @ CONSTANT [EXPECT]
'PAGE @ CONSTANT [PAGE]    'TAB @    CONSTANT [TAB]
'CR @   CONSTANT [CR]
CODE $TYPE  ( a n --- ) HEX
   0 POP  PTR U) POP   0 0 OR  0> IF   0 CTR U) MOV
   0 C# U) ADD   [TYPE] $ W MOV  ' EXECUTE 1+ JMP  THEN NEXT
DECIMAL
: $TAB      ( --- )     [TAB]  EXECUTE ;
: $EMIT     ( c --- )  'S 1  $TYPE   DROP ;
: $SPACE    ( --- )     32 $EMIT   ;
: $SPACES   ( n --- )  BEGIN ?ANY WHILE $TYPE REPEAT  ;
: $CLINE    ( l --- )  160 $  80 BLANKS   ;
: $EXPECT   ( a n --- ) 'EXPECT @ >R [EXPECT] 'EXPECT !
   EXPECT R> 'EXPECT !  ;

```

365

WINDOWOFF restores FORTH's screen output routines.

WINDOWON connects FORTH to the window output

WINDOW? displays the current window parameters.

44

```
 \ Windows - Windowing on / off

: WINDOWOFF ( --- )
  [TYPE] 'TYPE !   [CR] 'CR !   [TAB] 'TAB !   [PAGE] 'PAGE !
  [EXPECT] 'EXPECT !   ;

: WINDOWON  ( --- )
 ['] (TYPE) 'TYPE !   ['] (CR) 'CR !   ['] (TAB) 'TAB !
 ['] (PAGE) 'PAGE !   ['] (EXPECT) 'EXPECT !   ;

: WINDOW?  ( --- )
  CR   ." X1, Y1: "   X1@ . SPACE   Y1@ . CR   ." WIDTH: "
  WIDTH@ . CR   ." HEIGHT: "   HEIGHT@ . CR   ;


```

legal Valve"

411

F# Current file number; directory index for this file.
FPTR first block of file.
BCT Number of blocks in file.
EOF 0 = not end of file.
UPDATED Flag indicates whether file was written to or not.
DETAILS Controls directory printing: 0=short 1=long format
LOADERR Not zero if a file was not found when loading.
'BAT is the block number containing the block allocation table.
MAXBLKS Number of blocks on disk that the file system uses.
1STBLK The first useable block on an empty disk.
BATSIZE is the number of bytes in the block allocation table.
BAT_BUF is a buffer to hold the block allocation table when a file is open.

90

```
\ Sample Prep File System - Load Block
VARIABLE F#     -1 F# !
VARIABLE BCT
VARIABLE EOF
VARIABLE UPDATED
VARIABLE DETAILS
VARIABLE LOADERR
  0 CONSTANT 'BAT
320 CONSTANT MAXBLKS
  4 CONSTANT 1STBLK
1STBLK 2* CONSTANT RESERVED
MAXBLKS 2* CONSTANT BATSIZE
CREATE BAT_BUF  BATSIZE ALLOT  BAT_BUF 30 ERASE
BAT_BUF CONSTANT FPTR
91 +P 104 +P THRU   \ Load the rest of the file system
EXIT
```

412

DBLOCK is used to read and write only to drive 0.

GET_BAT reads the block allocation table from the disk.
SAVE_BAT writes the BAT to the disk.

nBAT@ Returns the contents of the ith entry in BAT (a block #).
nBAT! Stores n into the ith entry of BAT.
INITBAT creates an empty block allocation table on the disk.

nthBLK returns the block # of the nth block of a file, or -1.

91

```
  \ File System - Block Allocation Table
: DBLOCK ( blk# --- a)  DUP 0 320 WITHIN NOT ABORT" blk error"
   OFFSET @ >R   0 OFFSET !   BLOCK   R> OFFSET !   ;

: GET_BAT   ( - )   'BAT DBLOCK RESERVED +
   BAT_BUF RESERVED +  BATSIZE RESERVED -  MOVE   ;
: SAVE_BAT ( - )  BAT_BUF  'BAT DBLOCK  BATSIZE  MOVE  UPDATE ;

: nBAT@ ( i --- blk# )   2* BAT_BUF  + @   ;
: nBAT! ( n i --- )   2* BAT_BUF + !   ;
: INITBAT   BAT_BUF BATSIZE ERASE ( BAT_BUF 1STBLK 2* -1 FILL )
   SAVE_BAT  FLUSH  ;
CODE nthBLK   -1 # 2 MOV   1 POP   FPTR 0 MOV   1NZ IF
   BEGIN  0 2 CMP 0= IF  1 1 SUB  ELSE  0 0 ADD  ' BAT_BUF # 0
   ADD  0 W MOV  W ) 0 MOV  1 DEC  THEN  0= UNTIL   THEN
   0 PUSH   NEXT
```

413

VBLK? aborts if the block number is invalid.
FREEBLK finds the first unallocated block on the disk. It aborts if the disk is full.

ENDBLK marks the given block as the end of file block in the BAT.
ALLOCATE adds the given block to the end of the current file.

OF_FILE determines if the given block is already part of the current file; returns true if so.

92

```
  \ File System - Block Allocation

: VBLK? ( blk#)  -1 MAXBLKS WITHIN NOT ABORT" bad blk#"  ;
: FREEBLK  ( --- blk# )   -1   MAXBLKS 1STBLK DO
     I nBAT@ 0= IF   DROP I LEAVE   THEN   LOOP
   DUP 0< ABORT" disk full"   ;
: PPTR   0 SWAP ?DUP   IF   0 DO   nBAT@   LOOP   THEN   ;
: nALLOCATE
   PPTR   DUP nBAT@   3 PICK nBAT!   nBAT!   1 BCT +!
   SAVE_BAT   ;
: nDEALLOCATE
   PPTR   DUP nBAT@ DUP nBAT@   ROT nBAT!
   0 SWAP nBAT!   -1 BCT +!   SAVE_BAT   ;
: OF_FILE?  ( blk# --- t )   >R  FPTR @ BEGIN   DUP VBLK?
   DUP -1 =  OVER I = OR NOT  WHILE   nBAT@   REPEAT   R> =   ;
```

414

FREECNT returns the number of free blocks left on the disk.

.BAT prints the block allocation table.

LINKS prints the block numbers that belong to the current file.

93

```
\ File System - Testing words

: FREECNT  ( --- n )  0 MAXBLKS 1STBLK DO
  I nBAT@ 0= + LOOP ;
: .BAT CR ." FILE= " F# @ . ." FPTR=" FPTR @ . ." BCT= "
  BCT @ . BAT_BUF BATSIZE  DUMP FREECNT . ." free blks" CR ;

: LINKS  CR FPTR @ BEGIN DUP 4 U.R nBAT@ DUP -1 = UNTIL DROP
  CR ;
```

415

OPEN? aborts if a file is already open.
-OPEN? aborts if a file is not open.
'LATEST returns a pointer to the most recently accessed block #.
LATEST returns the most recent block number (without update bit)
FLAGGED tests the update bit of LATEST.

?DRV returns true if the block belongs to drive 0.
FUPDATE is used in place of UPDATE when writing to a file. It allocates a new block to the end of the file if the written block is not already part of the file.
rBLOCK reads the nth block relative to the beginning of the current file.
FBLOCK is used in place of BLOCK to access a file block.

94

```
\ File System - File Block Accessing
: OPEN?   F# @ 1+ 0> ABORT" file is open!"  ;
: -OPEN?  F# @ 0< ABORT" file not open!"  ;    HEX
: 'LATEST  ( --- a )   PREV DUP @ + 4 +  ;
: LATEST   ( --- blk# )   'LATEST @  7FFF AND  ;
: ?FLAGGED ( --- )   'LATEST @ 8000 AND IF   R> DROP  THEN   ;
DECIMAL
: ?DRV     ( --- t )   LATEST 320 <  ;
: FUPDATE  ( --- )   -OPEN?  ?FLAGGED  UPDATE  1 UPDATED !  ;
: rBLOCK   ( rblk# --- a )  FPTR @ 0= ABORT" fptr=0"
   nthBLK  DBLOCK   ;
: FBLOCK   ( rblk# --- a )  -OPEN?  0 MAX   DUP BCT @ - 0<
      IF   rBLOCK
      ELSE   DROP   FREEBLK   DUP BCT @ nALLOCATE
         DBLOCK   DUP 1024 BLANK   FUPDATE
   THEN ;
```

416

MAXFILES is the number of files supported by the directory size.
ENTRYLEN Size of each directory entry.
NMLEN Number of characters in the filename.
'DIR is the first disk block of the directory.

#BLKS contains the file block count. Updated at FCLOSE.
BLK1 is the first block of the file. Use BAT to find the rest.
Creation date
" time
Modification date
" time
File attributes
'ENTRY returns the address of the directory entry for file n.
INITDIR initializes a directory.

95

```
\ File System - Directory Structure
96 CONSTANT MAXFILES
32 CONSTANT ENTRYLEN
11 CONSTANT NMLEN
 1 CONSTANT 'DIR
( Offsets into directory entry )
11 CONSTANT #BLKS
13 CONSTANT BLK1
15 CONSTANT CRDATE
17 CONSTANT CRTIME
19 CONSTANT MDATE
21 CONSTANT MTIME
23 CONSTANT FTYPE
: 'ENTRY  ( f# --- a )   ENTRYLEN 1024 */MOD 'DIR + DBLOCK +
: INITDIR  MAXFILES 0 DO I 'ENTRY ENTRYLEN 0 FILL UPDATE LOOP
```

417

SCANDIR takes a pointer to a filename and searches for a match to that name in the directory. If found, it returns a valid file number, else it returns -1.

GETENTRY returns the next empty directory entry for a new file.

FOUND is used after SCANDIR to test for finding a filename.

FILENTRY returns the address of the directory entry for the file in F#.

INITFILE copies the file pointer and block count into user variables and sets the indicator to "file not modified".

96

```
 \ File System - Directory accessing
: SCANDIR  ( 'name --- f# )  >R  -1  MAXFILES 0 DO
  I 'ENTRY NMLEN  J NMLEN -MATCH  0= IF  2DROP I  LEAVE
  ELSE  DROP  THEN  LOOP  R> DROP ;

: GETENTRY  ( --- f# )  -1  MAXFILES 0  DO  I 'ENTRY C@ 0=
  IF  DROP I LEAVE  THEN  LOOP  ;

: FOUND  ( f# --- t )  1+ 0>  ;
: FILENTRY  ( --- a )  F# @  'ENTRY  ;

: INITFILE  ( --- )  FILENTRY DUP  #BLKS + @ BCT !
  BLK1 + @ FPTR !  0 UPDATED !  ;
```

418

MAKEFILE constructs the directory entry for a new file. It allocates one block to the new file and sets the time and date of creation and modification. The directory entry will be written to the disk.

FCREATE Creates a new file if it doesnt already exist. The new file is opened for reading/writing. It returns 0 if successfull, 1 if the file already exists, and 2 if the directory is full.

97

```
 \ File System - File creation
: MAKEFILE  ( 'name f# - ) FREEBLK -1 OVER nBAT!  SWAP 'ENTRY
  DUP >R  ENTRYLEN 0 FILL  I BLK1 + !  I NMLEN MOVE
  1 I #BLKS + !  @TIME DUP I CRTIME + !  I MTIME + !
  TODAY @ DUP I CRDATE + !  I MDATE + !  0 R> FTYPE + !
  UPDATE  ;

: FCREATE  ( 'name --- t )
  OPEN?  DUP  SCANDIR FOUND NOT IF
     GETENTRY DUP 1+ 0> IF
        GET_BAT  SWAP OVER  ( f# 'nm f#)  MAKEFILE
        F# !  INITFILE  1 UPDATED !  0
     ELSE  DROP 2
     THEN
  ELSE  DROP 1
  THEN  ;
```

419

FOPEN opens an existing file for access. It sets F# to the file's directory index, and puts #BLKS into BCT and BLK1 into FPTR. Returns 0 if successfull, 1 if file does not exist.

FCLOSE Writes out the open file's new block count if the file has been modified, and updates the modification date and time.

FDELETE removes the given file from the directory (by putting a 0 in the first filename char), and releases it's blocks for other files to use.

98

```
 \ File System - Program access to files

: FOPEN ( 'name --- t )  OPEN?  SCANDIR DUP FOUND IF  F# !
  GET_BAT  INITFILE  0  ELSE  DROP 1  THEN  ;

: FCLOSE  ( --- )  -OPEN?  UPDATED @ 0> IF  SAVE_BAT  FILENTRY
  BCT @  OVER #BLKS + !  TODAY @ OVER MDATE + !  @TIME SWAP
  MTIME + !  0 UPDATED !  UPDATE  FLUSH  THEN  -1 F# !  ;

: FDELETE ( 'name --- t )  OPEN?  SCANDIR DUP FOUND IF  GET_BAT
  'ENTRY  DUP 0 OVER C!  UPDATE  BLK1 + @  BEGIN  DUP VBLK?
  DUP nBAT@  0 ROT nBAT!  DUP -1 = UNTIL
  2DROP 0  SAVE_BAT  FLUSH  THEN  ;
```

420

NAME gets the filename from the input and puts it in PAD.

MAKE makes a new file and leaves it open. "MAKE XXX"

OPEN opens an existing file for access. "OPEN XXX"

CLOSE closes file access, updating file information. "CLOSE"

DELETE removes a file from the directory. No file may be open when this command is used. "DELETE XXX"

99

```
\ File System - User file commands

: NAME   ( --- a )   32 TEXT PAD  ;
( EXIT )  \ TESTING WORDS
: MAKE    ( --- )    NAME FCREATE DUP 0> IF  1 = IF
   ." already exists" ELSE ." directory full" THEN
  ELSE DROP THEN   ;
: OPEN  ( --- )   NAME FOPEN 0> IF  ." can't find"  THEN  ;
: CLOSE ( --- )  FCLOSE  ;
: DELETE ( --- )   NAME FDELETE  0< IF ." can't find" THEN  ;

EXIT
: MULT-LOAD
   >IN 2@ >R >R   0 >IN 2!
   STATE @   IF ]  ELSE INTERPRET   THEN
   R> R> >IN 2!   DECIMAL   ;
```

421

(FLIST) types the contents of the given block from the current open file.

FLIST types all the blocks in the current open file.
(LOAD) causes FORTH to interpret from the disk file ( this is the normal loading process). Nested file loads are ok.

INCLUDE can be used in a source code file to cause another file to be "included" or loaded. Use: INCLUDE XYZZY

100

```
\ File System - Utilities
: (FLIST) ( n)   -OPEN?  BCT @  MIN 0 MAX
   ." File: " FILENTRY NMLEN TYPE ."   Block: "
   DUP .  16 0 DO  CR I 2 U.R  SPACE  DUP FBLOCK
   I 64 * +  64 >TYPE  LOOP   CR
   EOF @ IF ."       END OF FILE" THEN  SCR ! ;
: FLIST ( --)  BCT @ 0 DO  I 3 MOD 0= IF PAGE CR CR CR CR THEN
   I (FLIST) CR CR CR   LOOP   ;
: (LOAD)  ( 'nm  --- )    OFFSET @ >R  0 OFFSET !
   F# @ >R  FPTR @ >R  BCT @ >R  EOF @ >R  UPDATED @ >R  -1 F#
   FOPEN 0= IF   BCT @ 0 DO   I nthBLK LOAD   LOOP
   ELSE   1 LOADERR +!   THEN
   R> UPDATED !  R> EOF !  R> BCT !  R> FPTR !  R> F# !
   R> OFFSET !  ;

: INCLUDE  ( - )  NAME (LOAD)  ;
```

422

These word print the contents of a directory entry.

.ENTRY prints the directory entry for file n on one line. Format of directory depends on DETAILS.

.HEADER prints a heading for the directory command.

101

```
\ File System - Directory Support
: .NAME  ( f#)  'ENTRY  NMLEN TYPE  ;
: .#BLKS ( f#)  'ENTRY  #BLKS + @ 4 U.R   4 SPACES  ;
: .BLK1  ( f#)  'ENTRY  BLK1 + @ 4 U.R   ;
: .CRDT  ( f#)  'ENTRY  CRDATE + @ .DATE  3 SPACES  ;
: .CTIME ( f#)  'ENTRY  CRTIME + @ .TIME  ;
: .MDATE ( f#)  'ENTRY  MDATE + @ .DATE  SPACE   ;
: .MTIME ( f#)  'ENTRY  MTIME + @ .TIME  ;
: .FTYPE ( f#)  'ENTRY  FTYPE + @ 4 U.R  SPACE  ;

: .ENTRY ( f#)   DUP >R .NAME   DETAILS @  IF   SPACE I .FTYPE
   I .BLK1  I .#BLKS   I .CRDT   I .MDATE  I .MTIME   THEN
  R> DROP   ;
: .HEADER  ." Files:"  DETAILS @  IF  5 SPACES
   ."  Type Blk1 #blks"  4 SPACES  ." Created:" 6 SPACES
   ." Modified:"   THEN   ;
```

423

PG_TO finds the nth printable directory entry. Used for "pageing" the directory listing on the screen.

PG contains offset to the first valid directory entry to print.
NONE If true, no entries were printed.
(DIR) prints n valid directory entrys starting at PG in the format selected by DETAILS.

.DIR prints every directory entry (TESTING).

102

```
  \ File System - Directory Display
: PG_TO  ( n --- f#)   1+  -1  SWAP  0  DO
  1+ ( ptr)  DUP 'ENTRY C@   IF  1  ELSE  0  THEN
  OVER   MAXFILES 1- = IF   LEAVE   THEN    +LOOP   ;

VARIABLE PG
VARIABLE NONE
: (DIR) ( n -- )  .HEADER  TRUE NONE !   PG @ PG_TO  SWAP 0 DO
  DUP MAXFILES =  IF   LEAVE 0   ELSE   DUP 'ENTRY C@   IF
  FALSE NONE !   CR   DUP .ENTRY  1   ELSE  0   THEN
  SWAP 1+ SWAP   THEN   +LOOP   DROP   ;

: DIR .HEADER MAXFILES 0 DO  I 0> I 16 MOD 0= AND IF KEY DROP
  THEN
 CR  I .  I  .ENTRY   LOOP   ;
```

424

pgup decrements page by the current window height.
pgdn advances PG by window size if there is more to display.

SHOWDIR makes a window box on the screen, displays the files, and allows pageing up or down in the list until a key is pressed.

103

```
  \ File System - Directory Display

142 CONSTANT UPKEY
150 CONSTANT DNKEY

: pgup  ( - ) PG @   WHEIGHT @ - 0 MAX   PG !   ;
: pgdn  ( - ) NONE @ 0= IF  PG @  WHEIGHT @ + MAXFILES MIN
  PG !   THEN  ;

: SHOWDIR  ( - )   0 PG !   DETAILS @ IF   HELPSIZE
  ELSE    SELECTION    THEN   BOX
  BEGIN   CLS  0 0 TAB   WHEIGHT @ (DIR)   KEY  DUP UPKEY = IF
  DROP pgup FALSE  ELSE   DNKEY = IF   pgdn FALSE  ELSE   TRUE
  THEN   THEN   UNTIL   WORK WINDOW  ;
```

425

F/P number of files printed per page.

.DIR is used to print a disk directory on the printer. It advances to the top of a page, prints a header and prints up to F/P file entries.

104

```
  \ File System - Directory Printing
58 CONSTANT F/P

: .DIR  ( --- )
  0 ( entries printed)  MAXFILES 0 DO
     DUP 0= IF   PAGE .HEADER CR 1+   THEN
     I 'ENTRY C@ IF   CR I .ENTRY 1+   THEN
     DUP  F/P = IF   DROP 0   THEN
  LOOP   DROP
  CR CR FREECNT  22 SPACES . ."  Free blocks"  CR   ;
```

378

This module contains the definitions that manage the Sample Prep screens.

57

```
\ Sample Prep Screen Support - Load Block

71 LOAD        \ Words for changing attributes directly
58 59 THRU     \ Screen Maintenance
67 68 THRU     \ user input/output
60 64 THRU     \ Screen Maintenance
70 LOAD        \ Command Interpreter
65 66 THRU     \ ST/STP/PAUS/CONT and common Menu Labels
132 139 THRU   \ Status screen background
105 LOAD       \ help screen support
 69 LOAD       \ fake screen displays  ** TEMPORARY **
 15 LOAD       \ editor
 78 LOAD       \ filer screen
108 LOAD       \ print screen
 72 LOAD       \ status screen
84  LOAD       \ resolve forward references in screens
```

379

Pointer to current Screen data structure.

'SCRN returns the address of the current screen data structure.
Fn# returns the address of selected function number.
Fn#@ returns the currently selected function number.
Fn#! stores the current function number.
SCR# gets the address of the current screen ID number.
>FUNCT returns the address of an entry in the current screen table (pointed to by 'SCREEN) for the given function number.

FCHAR returns the command character for the given function number from the current screen.

58

```
  \ Screen Support - basic tools
VARIABLE 'SCREEN   VARIABLE CELLFLG   VARIABLE MENU-ON?
10 CONSTANT /CELL   23 CONSTANT 'BAR

: >INPUTLINE  24 0 #TAB ;   : >HLPLINE 22 10 #TAB ;
: >MSGLINE 20 0 #TAB ;   VARIABLE MSGON?

: 'SCRN  ( --- a )   'SCREEN @  ;
: Fn#    ( --- a )   'SCRN   ;
: Fn#@   ( --- n )   'SCRN @  ;
: Fn#!   ( n --- )   'SCRN !  ;
: SCR#   ( --- n )   'SCRN 6 +  ;
: >FUNCT    ( n --- a )
   5 * ( /entry) 7 + ( header) 'SCRN  + ;
: FCHAR  ( n --- c)   >FUNCT 4 + C@  ;
```

380

MSGFLG  if true, display selection message on line 23.
>MSGLINE positions cursor at column 0 of the help line.
>INPUTLINE puts the cursor on the last line of the screen.
LMARGN types spaces to center following text.
RMARGN fills reest of line with spaces to clear old text on line
CENTERED types the text at address "a" centered in a field sz chars wide.
.KEY prints the command char of the current function.

dotH" prints text centered on Message line.  Refer to FORTH's dot" definition on screen 86.
.F" compiles a string to be printed outside the window.
.C" compiles a string centered on an 80 char line.
.H" compiles a string to be printed centered on the prompt line

59

```
  \ Screen Support - Message and Prompt Formatting

: LMARGN  ( sz a --- )    C@ - 2/ #SPACES  ;
: RMARGN  ( sz a --- )    C@ - DUP 2/ -  #SPACES ;
: CENTERED ( sz a --- ) 2DUP  LMARGN  DUP COUNT #TYPE RMARGN ;

: dotF"  ( --- )   1 ?R@ COUNT
  CELLFLG @  IF  INVERSE  ELSE  UNDERLINE  THEN
  #TYPE NORMAL  ;
: dotC"  ( --- )   80  1 ?R@  CENTERED  ;
: dotH"  ( --- )   1 ?R@  CELLFLG @
     IF  >HLPLINE 60 SWAP  UNDERLINE CENTERED NORMAL
     ELSE  DROP  THEN  ;
: .F" COMPILE dotF" 34 STRING ; IMMEDIATE
: .C" COMPILE dotC" 34 STRING ; IMMEDIATE
: .H" COMPILE dotH" 34 STRING ; IMMEDIATE
```

381

/CELL Size of Menu Bar cell in bytes.
'BAR is the line number of the menu bar.
>CELL positions cursor at beginning of menu cell for the given function.
.CELL prints the label for a menu cell by executing the 2nd address in the function table.
MSGON MSGOFF turn the selection information on and off.
CELLOFF prints the cell label with normal video (white on black).
CELLON prints the cell label in reverse video.
.MENU fills the menu bar outline with the text fields defined in the screen pointed to by 'SCREEN.

60

```
  \ Screen Support - Menu Cells and Labels
: >CELL   ( n - 1# c# )   /CELL *   'BAR   SWAP   ;
: .CELL   ( n - )   DUP >CELL *TAB   >FUNCT 2+ @EXECUTE   ;
: .BAR   'BAR 1- 0 *TAB 79 *SPACES   'BAR 0 *TAB 79 *SPACES   ;

: CELLOFF   ( - )
  [ HEX ] 100 [ DECIMAL ] Fn#@ >CELL /CELL 1- NAT   ;
: .MENU   ( - )
  1 MENU-ON?·!
  UNDERLINE .BAR NORMAL
  0 CELLFLG !   8 0 DO
     I Fn#@ =   IF   1 CELLFLG !   THEN
     I .CELL   0 CELLFLG !
  LOOP   1 CELLFLG !   ;
: MENU-OFF   ( - )
  0 MENU-ON? !   .BAR   ;
```

382

NEWSCREEN switches the display to a new screen.

#SCRNS is incremented by each new screen definition and used as the screen ID. Contains the number of defined screens.
The screen ID is used by HELP to display the right help screen.
DEFSCRN is a compiler word that creates a Screen data structure. The structure consists of an index (0..7) of the currently selected function; a pointer to the previous screen; a pointer to a procedure to execute when this screen is selected and displayed; a unique screen ID number (screens are numbered sequentially from 1 to n as they are defined); and 8 function and 8 function entries, each containing three entries: the address of a function to execute, the address of a menu label displayer, and a command character that will execute the function.

61

```
  \ Screen Support - Screen Data Structure Definition

: NEWSCREEN  ( 'screen --- )
  DUP 'SCREEN @ = NOT
     IF   DUP 'SCREEN !   \ point to new screen
          .MENU           \ print the new menu
          4 + @EXECUTE    \ execute the screen proc
  ELSE   DROP   THEN.  ;

VARIABLE #SCRNS     \ number of defined screens

: DEFSCRN  ( --- )   CREATE  0 , ( func#)
  0 , ( link is filled in later)   ' ,  ( screen proc)
  1 #SCRNS +!  #SCRNS @  C,  ( screen ID#)
  8 0 DO  [COMPILE] (  ' , ( function)  ' , ( text) ASCII<  C,
  LOOP   DOES>  ( --- )   NEWSCREEN   ;
```

383

DO_FUNC uses given index to fetch function pointer and executes it.
<>FUNC moves the highlighted selector left or right on the menu bar. +n is right, -n is left.
+FUNC moves the selector to the right. The selector wraps around if in the rightmost position.
-FUNC moves the selector to the left. The selector moves to the rightmost position if on position 0.
SELECT executes the function pointed to by the current function index in the current Screen pointed to by 'SCREEN.
DESELECT exits the current menu and goes to the previously selected menu.
CHAR>FN compares a given character to the function characters in the current screen and executes the function it matches.

62

```
  \ Screen Support - Menu cell selection words

: DO_FUNC ( n --- )   CLRMSG   >FUNCT @EXECUTE   ;
: <>FUNC  ( n --- )
  CLRMSG   CELLOFF   Fn#@ + 7 AND   DUP Fn#!   .CELL   ;
: +FUNC   (  ---  )    1 <>FUNC   ;
: -FUNC   (  ---  )   -1 <>FUNC   ;
: SELECT  (  ---  )   Fn#@ DO_FUNC   ;
: DESELECT (  ---  )   CLRMSG   'SCRN  2+ @  NEWSCREEN   ;

: CHAR>FN  ( c --- )  8 0 DO   DUP  I >FUNCT 4 + C@ =
   IF  I DO_FUNC  LEAVE  THEN   LOOP DROP   ;
```

384

.TITLE prints the system title on the top line of the screen.

.STATUS prints the status line on line 2 of the screen. The contents of the fields will be updated by the STATUS task.

.BANNER displays the status the status header on the top 2 lines of the screen.

63

```
\ Screen Support - Status Header

: .TITLE
  10 20 TAB  ." SP 10,000  SAMPLE PREPARATION SYSTEM "
  12 34 TAB  ." VER 0.1"
  24 32 TAB  ." hit any key!"   KEY  ;

: .BANNER  0 0 TAB
  UNDERLINE  4 SPACES ." Status:"
  UNDERLINE  ."     READY    "
\  UNDERLINE  6 SPACES TODAY @ .DATE
\             1 SPACES @TIME .TIME   5 SPACES
  UNDERLINE  30 SPACES ." Method: No Method  "
  UNDERLINE  5 SPACES
  NORMAL  ;
```

385

MID prints the horizontal line for 1 cell.
1BOXTOP draws the top of one cell.
1BOXMID draws the middle line of a box.
1BOXBTM makes the bottom line of a box.
TOPP draws 7 box tops.
BOTM " bottoms
DVDRS " middles
.BAR prints the whole menu bar.

.FRAME builds the main screen outline: the status header and and an empty menu bar.

64

```
\ Screen Support - Menu Bar Screen Layout

: .FRAME   ( --- )
  PAGE .TITLE   PAGE .BANNER
  1 0 TAB   160 TOP !   ;
```

386

CMD is a function key routine that will accept a FORTH command from the keyboard and execute it, returning back to PREP. Characters are echoed on the inputline (line 25)
>CONTROL sends a command code and a command string pointer to the control task and waits for an acknowlegement message. Displays an error message if not a positive ack.

MTHDCTL sends a command to the control task and redisplays the start/stop and pause/continue menu fields to show new command selections. ( The commands depend on the current run status)
ST/STP is the start/stop menu command, either starts or stops a method.
PS/CNT pauses a running method or continues a paused method.

65

```
 \ Screen support - ST/STP/PAUS/CONT and common Menu Labels
\ : >CONTROL  ( a n --- )  TO_CONTROL SEND_MSG
\   FROM_CONTROL MSGWAIT  ACK = NOT IF .ERROR  ELSE  DROP  THEN

: ST/STP   ( - )  NULL STRT/STOP TO_CONTROL SEND_MSG   ;
: PS/CNT   ( - )  NULL PAUS/CONT TO_CONTROL SEND_MSG   ;

: WHICHSTATE  ( --- n )   RUN_STATUS @
  [ RUNBIT PAUSEBIT OR ] LITERAL   AND   ;
: SHO-CONTROL   ( - )
  DUP Fn#@ = NOT
     IF   0 CELLFLG !   THEN   .CELL   1 CELLFLG !   ;
VARIABLE LASTSTATE
: NEWSTATE?   ( - )
  WHICHSTATE LASTSTATE @ = NOT   MENU-ON? @   AND
     IF   0 SHO-CONTROL   1 SHO-CONTROL   THEN   ;
```

387

Use EMPTYCL for any undefined menu field.
HELPTXT shows the help command field.

WHICHSTATE returns status of method 0=idle, 1=pause, 2=running

STRTTXT shows the START or STOP command depending on current run status.

PAUSETXT shows PAUSE, blank or CONTINUE menu command depending on run status.

66

```
  \ Screen support - ST/STP/PAUS/CONT and common Menu Labels
: EMPTYCL   .F"          "  .H"   "  ;  \ empty cell

: HELPTXT   .F"   HELP   " .H" D

: STRTTXT   ( - )   WHICHSTATE DUP LASTSTATE !
    IF .F"   STOP   " .H" Stop Running"
    ELSE  .F"   START  "
       .H" Start Preparation Procedure"  THEN  ;

: PAUSTXT   ( - )   WHICHSTATE DUP LASTSTATE !
      0 CASE   IF   EMPTYCL
  ELSE 1 CASE   IF   .F"   PAUSE  "
          .H" Suspend procedure operation temporarily"
  ELSE   DROP   .F" CONTINUE "
          .H" Continue running procedure"   THEN THEN   ;
```

388

XRST is used after expect. Similar to RESET in FORTH which is un-findable.
INPUTTXT gets a text string from the keyboard and returns the address of the counted string (count in first byte).

TXTPROMPT is given the address of a counted string to type as a user prompt on the inputline. The address of the input string is returned.
KEYPROMPT types a given prompt string on the message line and awaits a keystroke. It clears the prompt and returns the key.

YES? returns true if user typed a "Y" or "y", false otherwise.

.ERROR types an error string (counted) on the message line.
.MSG types a (counted) message string.

67

```
  \ Screen Support - User Input / Output Words

: XRST 0 BLK !  0 >IN !  CNT C@ CNT 1+ C! ;

: INPUTTXT   ( --- a)  PAD 72 BLANK  S0 @ 80 $EXPECT XRST
  1 WORD DUP C@ 1+ PAD SWAP <CMOVE  PAD  ;
: TXTPROMPT   ( ap --- ai )  >INPUTLINE   COUNT $TYPE ( prompt)
   INPUTTXT   24 $CLINE  ;
: KEYPROMPT   ( a --- c )  >INPUTLINE  COUNT $TYPE  KEY
   24 $CLINE   ;
: YES?  ( a --- t)  KEYPROMPT  DUP 121 = SWAP 89 = OR  ;

: CLRMSG ( - )  MSGON? @ IF  20 $CLINE  0 MSGON? !  THEN  ;
: .MSG ( a - )  CLRMSG  >MSGLINE 80 SWAP CENTERED  1 MSGON? ! ;
: .ERROR ( a - )  .MSG  ;
```

389

0LEN? Returns true if the name length is 0.
ESC? Returns true if the escape key was the last char typed.
LEGAL? Returns true if all characters in name are legal.

FILENAME prompts the user with the given string, and processes his input. If return is typed with no chars, or the esc key is typed with any input, false and no input is returned to caller. If any non-legal characters are found, an error msg is displayed and user is re-prompted for input. A legal input will return the address of the counted input string and true.

68

```
  \ Screens Support - Input Words
HEX  0C8 CONSTANT ESC
: 0LEN?   ( a --- t )  C@ 0=   ;
: ESC?    ( a --- t )  DUP C@ +  C@ ESC =   ;
: LEGAL?  ( a --- t )  TRUE SWAP  COUNT OVER + SWAP  ( t a+n a )
   DO   I C@   21 7F WITHIN NOT IF   DROP FALSE  THEN   LOOP ;

: FILENAME  ( a --- 'nm t | f )
   BEGIN
      DUP TXTPROMPT
      DUP 0LEN?  IF   2DROP FALSE EXIT   THEN
      DUP ESC?   IF   2DROP FALSE EXIT   THEN
      DUP LEGAL? IF   SWAP DROP  TRUE EXIT   THEN
      DROP ( input)  $" Illegal name!  Retype" .ERROR  BELL
   AGAIN   ;
DECIMAL
```

390

These definitions are being temporarily used to display simulated "screens" until actual screens are built.

69

```
 \ Screen Support - Fake screen displays   ** TEMPORARY **

300 CONSTANT DUMMYSCREENS
DUMMYSCREENS       CONSTANT STSBLK
DUMMYSCREENS 1+    CONSTANT MTHDBLK
DUMMYSCREENS 2+    CONSTANT PRTRBLK
DUMMYSCREENS 3 +   CONSTANT SYTMBLK
DUMMYSCREENS 4 +   CONSTANT FLRBLK

: PSTATS  STSBLK BLK>SCRN   ; \ fake status
: PMTHD   MTHDBLK BLK>SCRN  ; \  "   method
: PRPRT   PRTRBLK BLK>SCRN  ; \  "   print
: PSYST   SYTMBLK BLK>SCRN  ; \  "   system
: PFILR   FLRBLK  BLK>SCRN  ; \  "   filer
```

391

CMD is a function key routine that will accept a FORTH command from the keyboard and execute it, returning back to PREP. Characters are echoed on the inputline (line 25)

70

```
 \ Screen Support - Command Interpreter

: CMD ( --- )
  CLRMSG
  0 24 80 0 WINDOW   (PAGE)   0 0 TAB
  QUERY   INTERPRET   WORK WINDOW  ;





                 e the command selector across the menu.
```

392

NAT is used to modify the attribute of screen text without modifying the contents of the charac

71

```

HEX CODE (NAT)    ( attribute n a - )
   W POP   1 POP   2 POP
   I PUSH   W I MOV
   DISPLAY LDA   0 ES LSG
   BEGIN
      26 C, ( ES:)   LODS
      2 HI 0 HI MOV B   STOS
   LOOP
   0 IS SSG   0 ES LSG   I POP
   NEXT   DECIMAL
: NAT   ( attribute ln# col# n - )
   ROT 80 *   ROT +   2*   (NAT)   ;
```

405

PREVSCR puts the link to the previous screen into a screen descriptor. This used after the 2 screens are defined to resolve the forward references. PREVSCR THIS PREV

This screen resolves the forward references in the screen link pointers. Load this block after all the screens have been loaded. Add the links for all screens that are defined in the system. These links are followed when the user exits a screen. The links point to the screen to "return" to. Note that the Status screen is the home screen, and points to itself.

84

```
\ Screen Support - Resolve forward references in Screens

: PREVSCR ( --- )   ' 2+ ' SWAP !   ;

\        this screen  previous screen
PREVSCR   STAT_SCR    STAT_SCR
PREVSCR   FILER_SCR   STAT_SCR
PREVSCR   PRNT_SCR    STAT_SCR

FORGET PREVSCR
 EXIT
```

406

85

407

86

S_FNLOAD causes the control task to load a function file. It prompts the user for a filename and sends a load command and the filename pointer to the control task.

```
\ Status Screen - Load Block

: SSTEP  ( - )  NULL 1STEP TO_CONTROL SEND_MSG  ;

: S_FNLOAD  ( - )  !" File to Load?: " FILENAME IF   1+
   FNLOAD  TO_CONTROL SEND_MSG   THEN   ;

73 74 THRU
EXIT
```

394

73

```
  \ Status - Menu label procedures
: PRNTTXT   .F"   Print  "
  .H" Print Utility" ;
: MTHDTXT   .F"  Methods "
  .H" Create or Modify a Method" ;
: LOADTXT   .F"   Load   "
  .H" Load a Method to Run"  ;
: SYSTXT    .F"  System  "
  .H" Access to more System Functions" ;
: FILETXT   .F"   Filer  " .H" Manage files"  ;
: 1STPTXT   .F"   1Step   " .H" Step Through the Procedure"  ;
: EDTRTXT  .F"  Editor  " .H" Edit Text Files"  ;
EXIT
```

395

74

```
  \ Status - Screen Definition
: STAT_PROC
   STAT-ON?  NOT
      IF   CLS STAT-ON STATUS-BKG   THEN   ;

\ f#   proc        text     char
DEFSCRN STAT_SCR   STAT_PROC
( 0 )  ST/STP      STRTTXT  0
( 1 )  PS/CNT      PAUSTXT  0
( 2 )  SSTEP       1STPTXT  1
( 3 )  S_FNLOAD    LOADTXT  1
( 4 )  FILER_SCR   FILETXT  f
( 5 )  PRNT_SCR    PRNTTXT  p
( 6 )  FEDIT       EDTRTXT  e
( 7 )  HELP        HELPTXT  h
```

399

F_DEL prompts the user for the filename to delete and deletes it if possible.

F_FMT Will format a diskette in drive 0. INITIALIZE actually formats the disk (erasing any data), INITBAT initializes the block allocation table, and INITDIR initializes the directory.

78

```
\ Filer Screen - Load Block

: F_DEL  ( - )  t" File to Delete?: " FILENAME  IF   1+ FDELETE
   IF  t" File not Found" .ERROR  THEN  THEN  'SCREEN @EXECUTE ;

35 4 +DRIVE LOAD  \ Load disk initialization

: F_FMT  ( - )  t" Erase all data on diskette? (Y/N)" YES? IF
   t" Insert diskette in drive 0.  Press return when ready"
   KEYPROMPT 13 = IF   t" FORMATTING..." .MSG   INITIALIZE
   INITBAT   INITDIR  FLUSH  t" Done" .MSG  THEN   THEN   ;

79 80 THRU
EXIT
```

400

79

```
  \ Filer - Menu Labels

: RNMTXT  .F"  Rename  " .H" Change a File Name"  ;
: CPYTXT  .F"   Copy   " .H" Copy One File to Another"  ;
: DELTXT  .F"  Delete  " .H" Delete a File"  ;
: FRMTTXT .F"  Format  " .H" Make a Blank Disk for Files" ;
```

401

The filer screen displays the disk directory.

80

```
  \ Filer - Screen Definition
: FILER_PROC
   STAT-OFF  CLS  1 DETAILS !  SHOWDIR   0 DETAILS !  ;

\ f#   proc   text      char
 DEFSCRN  FILER_SCR  FILER_PROC
( 0 )  ST/STP STRTTXT    0
( 1 )  PS/CNT PAUSTXT    0
( 2 )  BELL   RNMTXT     r
( 3 )  BELL   CPYTXT     c
( 4 )  F_DEL  DELTXT     d
( 5 )  F_FMT  FRMTTXT    f
( 6 )  BELL   EMPTYCL    0
( 7 )  HELP   HELPTXT    h
```

429

FRTBUSY When true, the printer is busy and can't be used by another task.
(FPRINT) prints all the blocks in the currently open file.
(DPRINT) prints the disk directory on the printer.

DO_PRT sets the printer busy flag and executes the given print routine. It waits for printer idle before returning.

FPRINT prompts the user for a filename, and sends it to the printer.

DPRINT querys the user before printing the disk directory on the printer. The directory is printed in detailed format.

108

```
\ Printer Screen - Load Block
VARIABLE  PRTBUSY
: (FPRINT)   TYPIST ACTIVATE  FLIST  FALSE PRTBUSY ! STOP ;
: (DPRINT)   TYPIST ACTIVATE  .DIR   FALSE PRTBUSY ! STOP ;

: DO_PRT   ( a --- )   TRUE PRTBUSY !
   ." Busy..." .MSG EXECUTE   BEGIN  PAUSE PRTBUSY @ 0= UNTIL
   ." Done" .MSG    ;

: FPRINT   ." Enter File to Print: "  FILENAME  IF  1+  FOPEN
   IF  ." File not found"  .ERROR EXIT   THEN  ['] (FPRINT)
   DO_PRT   FCLOSE   THEN   ;

: DPRINT  ." Print the disk directory? (Y/N)" YES? IF
   DETAILS @ 1 DETAILS !  ['] (DPRINT) DO_PRT DETAILS !   THEN ;
109 110 THRU
```

430

Here are the command labels that appear on the printer screen.

109

```
\ Printer - Menu Labels

: PDIRTXT  .F" Directory" .H" Print File Directory" ;
: PFILTXT .F"    File    " .H" Print a Disk File" ;
```

431

110

```
\ Printer - Screen Definition
: PRNT_PROC   STAT-OFF   CLS  ;

\ f#   proc       text     char
DEFSCRN PRNT_SCR   PRNT_PROC
( 0 )  ST/STP     STRTTXT   0
( 1 )  PS/CNT     PAUSTXT   0
( 2 )  DPRINT     PDIRTXT   d
( 3 )  FFRINT     PFILTXT   [illegible]
( 4 )  BELL       EMPTYCL   0
( 5 )  BELL       EMPTYCL   0
( 6 )  BELL       EMPTYCL   0
( 7 )  HELP       HELPTXT   h
```

## 426

1STHELP is the disk screen number of the first helpscreen.
#HELPS is the number of defined help screens.
HELPARRAY contains help screen numbers for each major system screen. The 0th entry is reserved for general system help. Each of these help screens is a "chapter" heading, with further helpscreens available by using up or down arrow keys.
SUBJECT points to one of the chapter screens in HELPARRAY.
HELPSCR is the current help screen #.
BLK>SCR displays a given disk block as text.
HELPSUBJ selects a help chapter based on given screen number.
FINDHELP gets current screen and selects the right help chapter.
+SUBJ advances +-n chapters from current chapter and shows help. Used for paging through help subjects.
+HSCR advances +-n screens from current help screen. Used to "flip" pages of help screens.

## 105

```
\ Help Screens - HELP Screen support
310 CONSTANT 1STHELP
  9 CONSTANT #HELPS
CREATE HELPARRAY
   0 ( reserved) C, 4 ( filer) C, 7 ( print) C, 0 ( status) C,
VARIABLE SUBJECT
VARIABLE HELPSCR
: BLK>SCRN  ( scr# --- )  CLS  0 0 TAB  16 0 DO  I 0 TAB DUP
    BLOCK  I 64 * + 64 >TYPE   LOOP  DROP   ;
: .HELP ( ---)  HELPSCR @  1STHELP  +  BLK>SCRN  ;
: HELPSUBJ ( scr# ---) DUP SUBJECT ! HELPARRAY + C@ HELPSCR ! ;
: FINDHELP  ( --- )   SCR# C@   HELPSUBJ  ;
\ : +SUBJ ( n ---) SUBJECT @ + 0 MAX #SCRNS @ MIN HELPSUBJ
\     .HELP   ;
: +HSCR ( n ---) HELPSCR @ + 0 MAX #HELPS MIN HELPSCR ! .HELP ;
106 107 THRU
```

## 427

H_HOME returns user to original help screen keyed where he is.
H_PGUP pages to next help subject
H_PGDN " previous "
H_UP pages to next help screen
H_DN " previous "

HELPKEYS is the function key table for help screens.

## 106

```
   \ Help - Function key table

: H_HOME  FINDHELP .HELP  ;
\ : H_PGUP  1 +SUBJ  ;
\ : H_PGDN -1 +SUBJ  ;
: H_UP   1 +HSCR  ;
: H_DN  -1 +HSCR  ;

CREATE HELPKEYS
( 80)      0      ,      0      ,      0      ,      0      ,
( 84)      0      ,      0      ,      0      ,      0      ,
( 88)      0      ,      0      ,      0      ,      0      ,
( 8C) ' H_HOME    ,      0      ,  ' H_UP     ,      0      ,
( 90)      0      ,      0      ,      0      ,      0      ,
( 94)      0      ,      0      ,  ' H_DN     ,      0      ,
( 98)      0      ,      0      ,      0      , ' SNAPSHOT ,
```

## 428

HELP displays the helpscreen keyed what the user is doing (what system screen is displayed), allows pageing through the helpscreens, and waits for undefined key before redisplaying current user screen.

## 107

```
   \ Help Screens - HELP

: HELPINFO  SELECTION BOX
." Help Keys: -----------"
."     PgUP     Prev Page  "  CR
."     PgDN     Next Page  "  CR
."     Home     This Subj  "  CR
."     PrtSc    Print Scrn "  CR
."     Esc      Exit Help  "      ;

: HELP  ( - )
   STAT-OFF  MENU-OFF
   HELPINFO    HELPSIZE BOX  FINDHELP .HELP   'FKEYS @
   ['] HELPKEYS 'FKEYS !  BEGIN   KEY -FUNCTION?  UNTIL
   'FKEYS !  WORK WINDOW
   'SCREEN @  0 'SCREEN !  EXECUTE  ;
```

336

This is the Function Editor that is used to edit user defined functions written in FORTH. It can also be used to edit any general text file, including parameter files and Method files.

This editor is based on the FORTH Inc. fucntion key editor found on Screen 72 of the Level 3 Source disk. It has been modified to use the output windows of sample prep, and uses the prep file system for all disk I/O.

15

```
\ Text File Editor - Load Screen

VARIABLE EDXIT  \ set true to exit the editor

74 4 +DRIVE LOAD
16 LOAD
75 4 +DRIVE LOAD
17 22 THRU
```

337

16

```
   \ File Editor - Function key table, cursor type
CREATE 'KEYS  50 ALLOT   'KEYS 50 ERASE

: 'FUNCTION ( k - a)   59 - 2*  'KEYS + ;
: :K ( k)   :  LAST @ @ CFA 2+  SWAP 'FUNCTION ! ;
: FUNCTION ( k)   DUP 59 84 WITHIN IF  'FUNCTION @EXECUTE
   ELSE DROP  THEN ;

HEX CREATE CT  7809 ,    ( cursor type)

CODE CHOICE   CT 1 MOV   1 HI 1 XCHG B   1 CT MOV   NEXT
                   ROP   THEN   ;
: +CURSOR ( a)   'CURSOR  CT @ cursor ;
: -CURSOR ( a)   'CURSOR  700 cursor ;
: BLINK   8000 CT +! ;
DECIMAL
```

338

LAD is the only reference to disk I/O. le messages whenever of BLOCK, but deals only with file relative block numbers.
LAD returns the address of the nth line of the current block, fetching it from the disk if necessary.
CLRL and any other word which modifies the text on the screen calls FUPDATE to mark the current disk block as modified.
The FUPDATED block will ultimatly be written out to the disk when that block's buffer needs to be reused by BUFFER, either by accessing other disk blocks, or by the file CLOSE operation when exiting the editor.
The directory and disk allocation information are updated when the file is closed.

17

```
   \ File Editor - Line operations
: LAD ( n - a)   C/L * SCR @ FBLOCK + ;
: CLAD ( - a)   LINE LAD ;
: <ADDR ( - a)   CLAD COL + ;
: COLS ( - n)   C/L COL - ;      : LINES ( - n)   L/S LINE - ;
: CLRL ( n)   DUP LAD C/L BLANK FUPDATE  0 SWAP (GO)
   C/L SPACES ;
: .LINE   <ADDR COLS >TYPE ;
: .BLOCK   LINE LINES DUP IF  1+ THEN 0 DO  DUP 0 OVER (GO)
   LAD C/L >TYPE  1+ LOOP  DROP ;
: xML ( n o)   SWAP LAD DUP ROT + C/L <CMOVE FUPDATE ;
: MLDN ( n)   C/L xML ;
: MLUP ( n)   C/L NEGATE xML ;

65 :K -LINE   <ADDR COLS BLANK FUPDATE  COLS SPACES ;
66 :K -BLOCK   -LINE LINE LINES 0 DO  1+ DUP CLRL LOOP  DROP ;
```

BAD ORIGINAL

366

EMPH_ON turns on both emphasized and double-strike modes.
EMPH_OFF resumes normal printing.
NXT_STATE points to the opposite print mode routine.
CUR_ATR stores the current printing attribute.

NORM causes printing to be normal brightness. (the 256 is replaced by the address of BRIGHT below)
BRIGHT causes printing to be emphasized and double struck.
Given the next char's attribute, BRIGHTNESS will flip the printer into the proper print mode if the attribute is different from the previous char's.
.CHR prints a character, replacing a null with a blank.
@.CHAR fetches the char and it's attribute from the screen and prints it. Note that screen memory is in different segment

45

```
\ SNAPSHOT words
MSG  EMPH_ON  4 C, 27 C, 69 C, 27 C, 71 C,
MSG  EMPH_OFF 4 C, 27 C, 70 C, 27 C, 72 C,
MSG  UNDL_ON  3 C, 27 C, 45 C, 49 C,
MSG  UNDL_OFF 3 C, 27 C, 45 C, 48 C,
VARIABLE CUR_ATR
: NORM   ( --- )   7 CUR_ATR !   EMPH_OFF UNDL_OFF   ;
: EMPH   ( --- )   112 CUR_ATR !  UNDL_OFF EMPH_ON   ;
: UNDL   ( --- )   1 CUR_ATR !   EMPH_OFF UNDL_ON   ;
: BRIGHTNESS  ( atr --- )   DUP 7 =
   IF NORM DROP
   ELSE 112 =   IF EMPH   ELSE UNDL   THEN THEN   ;
: .CHR  ( c --- )   DUP 0= IF   DROP 32   THEN   EMIT   ;
: @.CHAR  ( dadr --- )
   E@ DUP 255 AND  SWAP 256 / ( c atr) BRIGHTNESS .CHR ;
46 LOAD
```

367

1LINE prints the given line from screen memory. Reverse video chars will be emphasized.

FULLSCR prints the entire screen.

(SNAPSHOT) is the command to be executed by the printer task to print the screen contents.
SNAPSHOT sends the command from the terminal task to the printer task.

46

```
   \ SNAPSHOT - screen printing utility

: 1LINE ( l --- )
   NORM  80 * 2* DUP 160 + SWAP DO  I 11 @.CHAR  2 +LOOP ;

: FULLSCR ( --- )
   25 0 DO CR  I 1LINE  LOOP ;

: (SNAPSHOT)   ACTIVATE FULLSCR STOP ;

: SNAPSHOT TYPIST (SNAPSHOT) ;
```

368

47

438

These message tokens are used to communicate between the user and the control tasks. Messages sent to the control task consist of a command token from this list, and a pointer to a string. The text string is used to pass filenames to the file load commands, and possibly to pass a FORTH command string to a (yet undefined) command interpreter. All other commands can send a NULL pointer.
Each command sent to the control task will be followed by a response token and a text string pointer indicating success or failure upon trying to execute the command. An ACK response will send a null pointer, which can be ignored; while a NACK response will send a pointer to an error message which should be presented to the user.

117

```
\ Task Support  - Message Tokens, Load Block

\ Messages to control task:
1  CONSTANT  STRT/STOP   \ start or stop running
2  CONSTANT  PAUS/CONT   \ pause or continue running
3  CONSTANT  1STEP       \ do just one step
4  CONSTANT  MLOAD       \ load a method file
5  CONSTANT  FNLOAD      \ load a function file
6  CONSTANT  CTLRST      \ reset the control task
7  CONSTANT  #CTLCMDS    \ number of defined control commands

\ Responses from control task:
\ 40 CONSTANT  ACK       \ positive acknowlegement
\ 80 CONSTANT  NAK       \ error!
118 123 THRU
```

439

Each "message" consists of a 8 bit token, and a 16 bit string pointer.
SEND_MSG Waits until the message buffer is empty and puts the given message in the buffer. The message is taken by another task.
GET_MSG removes any message in the given message buffer and empties the buffer to allow another message to be placed.
MSGWAIT waits for a message to appear and then returns it.

The first byte of these message structures contains a message code (0 if no message waiting), bytes 1,2 are pointer to string.
TO_CONTROL contains a command for control if byte 0 not 0.
FROM_CONTROL contains the response to a command if byte 0 not 0.

118

```
  \ Task Support  - Task Communication words

CREATE TO_CONTROL   3 ALLOT  \ command to control task
CREATE FROM_CONTROL 3 ALLOT  \ response from control task

: SEND_MSG  ( ptr n a --- )  BEGIN  PAUSE  DUP C@ 0= UNTIL
  SWAP OVER C!  1+ !  ;

: GET_MSG  ( a --- ptr n)  DUP >R 1+ @   I C@   R> 3 ERASE   ;

: MSGWAIT  ( a --- ptr n)  BEGIN  PAUSE  DUP C@ UNTIL  GET_MSG ;

: CTL_ABORT
  1 FROM_CONTROL SEND_MSG   ABORT   ;
```

440

C# contains screen offset for typing to screen.
SCTAB positions C# to line, col of screen
>CRT "types" text to the screen without using FORTH's output routines. (useful for background tasks that dont have output routines defined.) Text is in inverse video.
>TERM same as >CRT but in normal video.

<# Start number formatting for output.
Format buffer is below the TOP user variable (ref FORTH scr 75)
#> Finish number formatting, gets address, count.
:00 Converts one decimal digit and one minutes digit (00 - 59)
(mins) Formats and prints the given value in the following format: 10:32 Used to display the time of day.

119

```
  \ Task Support  - Background task CRT printing
VARIABLE STAT-ATTR   HEX 700 STAT-ATTR ! DECIMAL
: SCTAB ( l c --- )  SWAP 80 * + 2* C# !  ;
: >TERM   ( adr u - )
  2* C# @   OVER C# +!   DUP ROT + SWAP DO
     DUP C@ STAT-ATTR @ OR   I CRTSEG E!   1+
  2 +LOOP   DROP   ;
HEX
: UND>TERM
  STAT-ATTR @ >R   100 STAT-ATTR ! >TERM   R> STAT-ATTR !   ;
DECIMAL
\ : SEXTAL 6 BASE ! ;
: <#  ( - )   TOP PTR ! ;
: #>  ( d --- a c)   2DROP   PTR @ TOP OVER -   ;
\ : :00 DECIMAL  # SEXTAL # DECIMAL 58 HOLD ;
\ : (mins)   ( n --- )   0 <# :00 # # #> UND>TERM  ;
```

## 441

C>TERM is the equivalent of EMIT for tasks without output routines

SP>TERM is the equivalent of SPACE for tasks without output routines.

CENT>TERM is the equivalent of CENTERED for tasks without output routines (CENTERED is defined in windows). This version automatically truncates strings that are too long.

## 120

```
  \ Task Support  - Background task CRT printing

: C>TERM
   'S 1 >TERM DROP   ;

: SP>TERM
   ?DUP
      IF   0 DO   BL C>TERM   LOOP
   THEN   ;

: CENT>TERM
   2DUP C@ MIN OVER C!
   2DUP C@ - 2/ SP>TERM
   DUP COUNT >TERM
   C@ - DUP 2/ - SP>TERM   ;
```

## 442

These variables are used to maintain the system status information. For each item in the system that needs it's status displayed, there will be a variable that indicates it's current state that will be maintained by any operation that affects the item (such as turning a relay on); there will also be a variable maintained by either the status task (for status header information) or the status screen updating software that contains the currently displayed state of the item. In this way the status software can compare if the displayed state matches the current state, and update the display (and the display state variable) if they dont agree. This allows for a somewhat speedier updating loop, since only one or two items usually change for each pass through the status update loop.

## 121

```
  \ Task Supoort - System Status Variables

CREATE RELAYS   3 ALLOT   RELAYS 3 ERASE   \ Relays 1-24
CREATE OLDRELAYS   3 ALLOT   OLDRELAYS 3 ERASE
CREATE RLYDEFAULTS   3 ALLOT   RLYDEFAULTS 3 ERASE

VARIABLE PBUSY    VARIABLE OLDPBUSY  \ 1 = busy
VARIABLE PRATE    VARIABLE OLDPRATE  \ Pump flow rate
VARIABLE PVOL     VARIABLE OLDPVOL   \ Pump volume
VARIABLE PDIR     VARIABLE OLDPDIR   \ Pump direction

VARIABLE  OLDTIME          \ previous time of day
VARAIBLE  OLDSTATUS        \ previous run_status
VARIABLE  CHANGEMETHOD     \ true when a new method is loaded
CREATE    METHODBUF  NMLEN ALLOT  \ current method file name
```

## 443

More system status information variables.

## 122

```
  \ Task Supoort - System Status Variables

CREATE RV-STAT-TBL 8 ALLOT \ Rotary valves 1-4
RV-STAT-TBL 8 ERASE
CREATE    RV-DEFAULTS 4 ALLOT \ Rotary valve initial positions
4 RV-DEFAULTS     C!    4 RV-DEFAULTS 1 + C!
0 RV-DEFAULTS 2 + C!    0 RV-DEFAULTS 3 + C!

VARIABLE MXTIME  VARIABLE OLDMXTIME  \  Mixing time
VARIABLE MXPWR   VARIABLE OLDMXPWR   \  Mixer power setting
VARIABLE MXDUTY  VARIABLE OLDMXDUTY  \  Mixer duty cycle
VARIABLE MXBUSY  VARIABLE OLDMXBUSY  \  1 = mixer is on

VARIABLE MPMSG  VARIABLE OLDMPMSG  \  Method message pointers
VARIABLE FPMSG  VARIABLE OLDFPMSG  \  Function message pointers
```

444

RUN_STATUS Contains bits which indicate the state of the control task.
The loading bits are used to recover from errors during a load operation. Normally, the load operation is completed and an acknowlegement is returned to the user task. But if an error occurs, the control task loop is exited and re-entered by the error handler. These bits are used to determine how to recover from the error and to send an appropriate error message.

123

```
   \ Task Suppoort - System Run Status
HEX
VARIABLE  RUN_STATUS      \ control task status
   \ Bits in RUN_STATUS:
    1 CONSTANT RUNBIT     \ true when running
    2 CONSTANT PAUSEBIT   \ true when in pause
    4 CONSTANT BUSYBIT    \ true when ending run
    8 CONSTANT STEPBIT    \ true when in single step mode
   10 CONSTANT FLOADBIT   \ true when loading functions
   20 CONSTANT MLOADBIT   \ true when loading a method
DECIMAL
   RUNBIT PAUSEBIT BUSYBIT STEPBIT FLOADBIT + + + +
      CONSTANT IDLEBITS   \ use this mask to test for idle
```

445

124

446

125

447

126

```
\ Status Task - Load Block

141 144 THRU   \ Relay status update routines
147 148 THRU   \ Rotary valve status update routines
150 152 THRU   \ Mixer status update routines
153 155 THRU   \ Pump status update routines
156 158 THRU   \ Programmable message update routines

127 129 THRU   \ Rest of status task
EXIT
```

448

127

```
  \ Status Task - status header strings

\  These routines return the address of string for status header
: PSE_ST  $"    PAUSE   "  ;
: RDY_ST  $"    READY   "  ;
: RUN_ST  $"   RUNNING  "  ;
: SS_ST   $" SINGLE STEP"  ;
: STEPST  $"  STEPPING  "  ;
: BSY_ST  $"    BUSY    "  ;
: ERR_ST  $" ERROR STATE"  ;
: LDG_ST  $"   LOADING  "  ;
```

449

SHOWCLOCK displays the time of day on the status header.
SHOWSTATUS displays the run status in the header.

STTIME updates the clock if current time is different from old time.
STRUN updates the run status if current status is different from whats displayed.

128

```
  \ Status Task - Status Header Updates
\ : SHOWCLOCK  ( n --- )   0 43 SCTAB (mins)   ;
: SHOWSTATUS ( n --- )  IDLEBITS AND
                                        0 CASE IF RDY_ST   ELSE
   [ RUNBIT               LITERAL ] CASE IF RUN_ST   ELSE
   [ RUNBIT PAUSEBIT   OR LITERAL ] CASE IF PSE_ST   ELSE
   [ RUNBIT STEPBIT    OR LITERAL ] CASE IF STEPST   ELSE
   [ RUNBIT PAUSEBIT STEPBIT
                    OR OR LITERAL ] CASE IF SS_ST    ELSE
   [ BUSYBIT              LITERAL ] CASE IF BSY_ST   ELSE
   [ FLOADBIT             LITERAL ] CASE IF LDG_ST   ELSE
                                     DROP    ERR_ST
   THEN THEN THEN THEN THEN THEN THEN
   0 12 SCTAB  COUNT UND>TERM  ;
\ : STTIME  @TIME  OLDTIME @ -  IF   @TIME DUP
\    OLDTIME !  SHOWCLOCK   THEN  ;
```

450

SHOWMETHOD If the first char of the current method file name is not 0, display the filename. Name is updated by control task when a valid method is loaded.
STMETHD updates the currently selected method name on the status header if the name has changed.

STATUSHEADER updates information at the top of the screens. Time, runtime, method name.

RUNNING is the main status task loop. It runs every .1 sec.

129

```
\ Status Task - Status Task Loop

: STRUN   RUN_STATUS @ OLDSTATUS @ -  IF  RUN_STATUS @ DUP
   OLDSTATUS !  SHOWSTATUS   THEN  ;
: SHOWMETHOD   0 62 SCTAB  METHODBUF @ IF  METHODBUF
   ELSE  $" no method "  1+  THEN   NMLEN UND>TERM ;
: STMETHD   CHANGEMETHOD @  IF  FALSE CHANGEMETHOD !  SHOWMETHOD
   THEN  ;

: STATUSHEADER  ( - )
   ( PAUSE STTIME )  PAUSE STRUN  PAUSE STMETHD  ;
: DEVICESTATUS  ( - )
   STRLYS  STRVLVS  STPUMP  STMIXER  STPMSG  ;

: RUNNING   ACTIVATE  2000 MS  ( wait for initialization)
     BEGIN  STATUSHEADER DEVICESTATUS   AGAIN  ;
```

451

130

452

131

462

BITMASK is a table of bit masks, indexed by a number from 0 to 7.

RLYBYTE# indicates which byte in the relay table we are currently indexing for status display.

RLYBYTE@ takes a table address from the stack (either old or new status table) and returns the currently indexed status byte from this table.

BITMASK@ returns a bitmask given a bit number (0-7) on the stack.

141

```
\ Status display - relay status updating - basic tools
HEX
CREATE BITMASK  1 C, 2 C, 4 C, 8 C, 10 C, 20 C, 40 C, 80 C,
DECIMAL

VARIABLE RLYBYTE#
ASSEMBLER BEGIN
  W POP   W 0 ADD   0 W MOV
  0 0 SUB   W ) 0 MOV B
  0 PUSH   NEXT
CODE RLYBYTE@
  RLYBYTE# 0 MOV   DUP JMP
CODE BITMASK@
  BITMASK # 0 MOV   JMP

FORTH
```

463

>RLY-DISP positions the cursor at the begining of the status display region for the indicated relay number on the stack.

142

```
  \ Status display - relay status updating - display array

: >RLY-DISP   ( n - )
  12 /MOD   21 * 36 +   SWAP 6 +   SWAP SCTAB   ;

VARIABLE STAT-FLAG
: STAT-ON?   PAUSE   STAT-FLAG @ ;
: STAT-ON   1 STAT-FLAG ! ;
: STAT-OFF   0 STAT-FLAG ! ;
```

464

DISP-RELAY displays the status of relay n as indicated by the on/off value on the stack (1 = ON).

SHO-1-RLY is the same as DISP-RELAY, but n indicates a relay relative to the currently indexed status table byte.

SHO-8-RLYS takes a bitmask from the stack, and displays all relays from the currently indexed status table that are indicated by this bitmask.

143

```
  \ Status display - relay status updating - display words
: DISP-RELAY   ( on/off n - )
  DUP >RLY-DISP   2* SWAP
    IF   1+   THEN
  2* CD-NAME-TBL + @ COUNT >TERM   ;

: SHO-1-RLY   ( on/off n' - )
  RLYBYTE# @ 8 * + DISP-RELAY   ;

: SHO-8-RLYS   ( bm - )
  RELAYS RLYBYTE@
  8 0 DO
    OVER I BITMASK@ AND   ?DUP
      IF   OVER AND I SHO-1-RLY
    THEN
  LOOP   2DROP   ;
```

465

CHANGED-RLYS? displays are relays in the currently indexed status table byte that have been modified sinse last displayed.

STRLYS displays all relays that have been modified sinse they were last displayed.

144

```
  \ Status display - relay status updating - top level

: CHANGED-RLYS?   ( - )
  RELAYS RLYBYTE@ DUP    OLDRELAYS RLYBYTE@
  XOR DUP
     IF   SHO-8-RLYS   OLDRELAYS RLYBYTE# @ + C!
     ELSE   2DROP
  THEN   ;

: STRLYS   ( - )
  STAT-ON? IF
     3 0 DO
        I RLYBYTE# !   CHANGED-RLYS?
     LOOP
  THEN   ;
```

466

145

467

146

468

POS#>PORT# converts a position number (1,4,7,10) to a port number (1,2,3,4).

>RV-DISP positions the cursor at the begining of the display region for the requested valve number on the stack.

DISP-RV displays the status of the requeted rotary valve. The value given on the stack (n) is twice the value of the valve number.

UPD-RV-STAT updates the status variables for the requested rotary valve. The value given on the stack (n) is twice the value of the valve number.

147

```
\ Status display - rotary valve updates - basics
:  POS#>PORT#   ( n - )
   3 /MOD +   ;
: >RV-DISP   ( n - )
   3 * 8 +   20   SCTAB   ;
: GET-RV-STR   ( n p# - a )
   DUP 0=  IF   2DROP $" Not Present "   EXIT   THEN
   DUP 3 <
      IF   1- 2* SWAP 4 * +   ELSE   3 - 2* SWAP 4 + 4 * +
   THEN   RV-NAME-TBL + @   ;
: DISP-RV   ( n - )
   DUP 2/ SWAP   OVER >RV-DISP
   RV-STAT-TBL + C@ POS#>PORT#
   GET-RV-STR COUNT >TERM   ;
: UPD-RV-STAT   ( n - )
   DUP RV-STAT-TBL + C@   SWAP RV-STAT-TBL 1+ + C!   ;
```

469

STRVLVS displays the current status of all rotary valves whose status has changed sinse it was last displayed.

148

```
\ Status display - rotary valve updates - basics

: STRVLVS
  STAT-ON?
     IF   RV-STAT-TBL   7 0 DO
          DUP I + C@   OVER I 1+ + C@   = NOT
             IF   I DISP-RV   I UPD-RV-STAT   THEN
     2 +LOOP   DROP
  THEN   ;
```

470

149

471

DISP-MXSTATE displays the current on/off status of the mixer.

DISP-MXTIME displays the current duration setting of the mixer.

DISP-MXPWR displays the current power setting of the mixer.

DISP-MXDUTY displays the current duty cycle setting of the mixer.

150

```
\ Status display - mixer status updating - display routines
: DISP-MXSTATE   ( on/off - )   13 12 SCTAB
  IF  [ HEX ] F00 STAT-ATTR !   $" ON " COUNT >TERM
     700 STAT-ATTR !   [ DECIMAL ]
  ELSE   $" OFF" COUNT >TERM THEN  ;

: DISP-MXTIME   ( n - )
  15 13 SCTAB   0 <# # # # #> >TERM   ;

: DISP-MXPWR   ( n - )   16 13 SCTAB   [ HEX ]
        0000 CASE IF $" 1/4"   ELSE 0001 CASE IF $" 1/2"
  ELSE 0100 CASE IF $" 3/4"   ELSE 0101 CASE IF $" FUL"
  THEN THEN THEN THEN   COUNT >TERM    [ DECIMAL ]   ;

: DISP-MXDUTY   ( n - )
  17 14 SCTAB   0 <# # # #> >TERM   ;
```

472

All of the following words display their information only if this information has been modified since it was last displayed.

MX-STATE? for the mixer's current on/off setting.

MX-TIME? for the mixer's current time setting.

MX-PWR? for the mixer's current power setting.

MX-DUTY? for the mixer's current duty cycle setting.

151

```
 \ Status display - mixer status updating - status checks
: MX-STATE?   MXBUSY @ DUP   OLDMXBUSY @   = NOT
     IF   DUP DISP-MXSTATE   OLDMXBUSY !
     ELSE   DROP   THEN   ;

: MX-TIME?   MXTIME @ DUP   OLDMXTIME @   = NOT
     IF   DUP DISP-MXTIME   OLDMXTIME !
     ELSE   DROP   THEN   ;

: MX-PWR?   MXPWR @ DUP   OLDMXPWR @   = NOT
     IF   DUP DISP-MXPWR   OLDMXPWR !
     ELSE   DROP   THEN   ;

: MX-DUTY?   MXDUTY @ DUP   OLDMXDUTY @   = NOT
     IF   DUP DISP-MXDUTY  OLDMXDUTY !
     ELSE   DROP   THEN   ;
```

473

STMIXER displays any mixer settings that may have changed since they were last displayed.

152

```
 \ Status display - mixer status updating - top level

: STMIXER   ( - )
  STAT-ON?
     IF   MX-STATE?   MX-TIME?   MX-PWR?   MX-DUTY?
  THEN   ;
```

474

DISP-PSTATE displays the current on/off status of the pump.

DISP-PVOL displays the current volume setting of the pump.

DISP-PRATE displays the current pumping rate setting of the pump.

DISP-PDIR displays the current direction setting of the pump.

153

```
\ Status display - pump status updating - display routines
: DISP-PSTATE   ( on/off - )   6 12 SCTAB
  IF   [ HEX ] F00 STAT-ATTR !   $" ON " COUNT >TERM
     700 STAT-ATTR !   [ DECIMAL ]
  ELSE   $" OFF" COUNT >TERM   THEN ;

: DISP-PVOL   ( n - )
  8 13 SCTAB   0 <# # # # #> >TERM   ;

: DISP-PRATE   ( n - )
  9 13 SCTAB   0 <# # # # #> >TERM   ;

: DISP-PDIR   ( for/rev - )
  10 13 SCTAB
  IF   $" FOR" COUNT >TERM
  ELSE   $" REV" COUNT >TERM   THEN   ;
```

475

All of the following words display their information only if this information has been modified since it was last displayed.

PUMP-STATE? for the pump's current on/off setting.

PUMP-VOL? for the pump's current volume setting.

PUMP-RATE? for the pump's current pumping rate setting.

PUMP-DIR? for the pump's current direction setting.

154

```
\ Status display - pump status updating - status checks
: PUMP-STATE?   PBUSY @ DUP   OLDPBUSY @   = NOT
     IF   DUP DISP-PSTATE   OLDPBUSY !
     ELSE   DROP   THEN   ;

: PUMP-VOL?   PVOL @ DUP   OLDPVOL @   = NOT
     IF   DUP DISP-PVOL   OLDPVOL !
     ELSE   DROP   THEN   ;

: PUMP-RATE?   PRATE @ DUP   OLDPRATE @   = NOT
     IF   DUP DISP-PRATE   OLDPRATE !
     ELSE   DROP   THEN   ;

: PUMP-DIR?   PDIR @ DUP   OLDPDIR @   = NOT
     IF   DUP DISP-PDIR   OLDPDIR !
     ELSE   DROP   THEN   ;
```

476

STPUMP displays any pump settings that may have changed since they were last displayed.

155

```
\ Status display - pump status updating - top level

: STPUMP   ( - )
  STAT-ON?
     IF   PUMP-STATE?   PUMP-VOL?   PUMP-RATE?   PUMP-DIR?
  THEN   ;
```

477

DISP-PMSG gets a string address and a flag that indicates whether this string is a method message string (1) or a function message string (0). It then places this string in the appropriate screen position. If the string pointer is 0, then then appropriate message area on the screen is cleared.

156

```
\ Status display - programable messages - display routine

: DISP-PMSG   ( str-addr mthd/func - )
     IF   2 9 SCTAB   60
     ELSE   4 4 SCTAB   28
  THEN   SWAP   ?DUP
     IF   CENT>TERM
     ELSE   SP>TERM
  THEN   ;
```

478

STMPMSG updates the method programmable message on the screen if it has been changed since last displayed.

STFPMSG updates the function programmable message on the screen if it has been changed since last displayed.

157

```
  \ Status display - programable messages - top level

: STMPMSG   ( - )
  MPMSG @ DUP   OLDMPMSG @   = NOT
     IF   DUP 1 DISP-PMSG   OLDMPMSG !
     ELSE   DROP
  THEN   ;

: STFPMSG   ( - )
  FPMSG @ DUP   OLDFPMSG @   = NOT
     IF   DUP 0 DISP-PMSG   OLDFPMSG !
     ELSE DROP
  THEN   ;
```

479

STPMSG updates status screen programmable messages whenever they change.

158

```
  \ Status display - programable messages - top level

: STPMSG   ( - )
  STAT-ON?
     IF   STMPMSG   STFPMSG
  THEN   ;
```

453

BRDR-PIECE defines self eaiting constats for sending border characters to the screen.

All border pieces, except for the horizontal piece, are definied using BRDR-PIECE. The pieces are:
TL for top left, TC for top center, etc...

BAR-STR is a string of horizontal characters used for drawing a horizontal bar.

132

```
\ Device status - background - basic tools
: BRDR-PIECE
  CREATE  ,   ( c - )
  DOES>   @ EMIT   ;
218 BRDR-PIECE TL   194 BRDR-PIECE TC   191 BRDR-PIECE TR
                    179 BRDR-PIECE VT
192 BRDR-PIECE BL   193 BRDR-PIECE BC   217 BRDR-PIECE BR

CREATE BAR-STR  20 ALLOT
: MAKE-STRING   ( - )
  BAR-STR   20 0 DO
     196 OVER C!   1+
  LOOP   DROP   ;
MAKE-STRING   FORGET MAKE-STRING
```

454

DRBAR draws a horizontal bar of n characters at the current cursor position.

DRTL and DRTR draw top left and top right sections of a box respictively.

DRTOP and DRBTM draw a complete top or bottom section for a box.

DR2SD draws the two sides of a box on one line.

DR3SD is the same as DR2SD, but is used for boxes that have a vertical center divider.

133

```
 \ Device status - background - drawing sections
: DRBAR   ( n - )   BAR-STR SWAP TYPE   ;

: DRTL   ( n - )   TL   1- DRBAR   ;
: DRTR   ( n - )   1- DRBAR   TR   ;

: DRTOP   ( n - )   TL   2- DRBAR   TR   ;
: DRBTM   ( n - )   BL   2- DRBAR   BR   ;

: DR2SD   ( y x n - )
   1- >R   2DUP TAB   VT
   R> + TAB   VT   ;
: DR3SD   ( y x n - )
   1- >R 2DUP TAB   VT
   I +   2DUP TAB   VT
   R> + TAB   VT   ;
```

455

PU/MIX-BOX draws a pump or mixer box at the location specified on the stack.

PUMP-BOX draws a pump box at the appropriate location, and places all the required labels and titles in and around it.

MIXER-BOX draws a mixer box at the appropriate location, and places all the required labels and titles in and around it.

134

```
  \ Device status - background - PUMP and MIXER boxes

: PU/MIX-BOX   ( top left - )
   2DUP TAB   17 DRTOP
   OVER 1+ DUP 3 + SWAP DO
      I 2 PICK 17 DR2SD
   LOOP
   SWAP 4 + SWAP TAB   17 DRBTM   ;
: PUMP-BOX
   4 3 TAB ." PUMP"   5 1 PU/MIX-BOX
   6 2 TAB ." VOLUME:"   7 2 TAB ." FLOW RATE:"
   8 2 TAB ." DIRECTION:"   ;
: MIXER-BOX
   11 3 TAB ." MIXER"   12 1 PU/MIX-BOX
   13 2 TAB ." DURATION:"   14 2 TAB ." POWER:"
   15 2 TAB ." % DUTY:"   ;
```

456

RV-BOX draws a single rotary valve box at the location requested on the stack, and labels it with the given number (n) on the stack.

RV-BOXES draws all four rotary valve boxes and labels them apropriately.

135

```
\ Device status - background - ROTARY VALVE boxes

: RV-BOX   ( top left n - )
  >R   2DUP TAB
  6 DRTL   35 EMIT   R> 48 + EMIT   7 DRTR
  SWAP 1+ 2DUP SWAP 15 DR2SD
  1+ SWAP TAB   15 DRBTM   ;

: RV-BOXES   ( - )
  4 20 TAB   ." ROTARY VALVES"
  19 2   4 0 DO
     3 + 2DUP SWAP   I 1+   RV-BOX
  LOOP   2DROP   ;
```

457

CD-BOX draws a contact device box with all its labels and titles.

136

```
\ Device status - background - CONTACT DEVICES box

: CD-BOX   ( - )
  2 48 TAB   ." CONTACT  CLOSURES"
  3 35   2DUP TAB
  7 DRTL ." FUNCTION" 6 DRBAR TC 6 DRBAR ." FUNCTION" 7 DRTR
  SWAP   12 0 DO
     1+ 2DUP SWAP 22 DR3SD
  LOOP
  1+ SWAP TAB   BL   20 DRBAR   BC   20 DRBAR   BR   ;
```

458

All the words in this and the following screen display thier respective information regardless of wether the status of any of them has been modified sinse it was last displayed.

SHO-RVLVS displays the current status of all rotary valves.

SHO-MIXER displays the current status of the mixer.

SHO-PUMP displays the current status of the pump.

137

```
\ Device status - background - updates at refresh time

: SHO-RVLVS   ( - )
  7 0 DO   I DISP-RV   2 +LOOP   ;

: SHO-MIXER   ( - )
  MXBUSY @ DISP-MXSTATE   MXTIME @ DISP-MXTIME
  MXPWR @ DISP-MXPWR   MXDUTY @ DISP-MXDUTY   ;

: SHO-PUMP   ( - )
  PBUSY @ DISP-PSTATE   PVOL @ DISP-PVOL
  PRATE @ DISP-PRATE   PDIR @ DISP-PDIR   ;
```

459

SHO-RLYS displays the current status of all relays.

SHO-PMSGS displays both programmable messages.

138

```
  \ Device status - background - updates at refresh time

: @RLY-STAT   ( n - on/off )
  8 /MOD   RELAYS + C@   SWAP BITMASK@ AND   ;

: SHO-RLYS   ( - )
  24 0 DO
     I @RLY-STAT I DISP-RELAY
  LOOP   ;

: SHO-PMSGS
  MPMSG @ 1 DISP-PMSG
  FPMSG @ 0 DISP-PMSG   ;
```

460

STATUS-BKG paints the whole status display, and updates its contents to the current value of all devices and messages.

139

```
  \ Device status - background - top level

: STATUS-BKG   ( - )
  \ Display all boxes and default text for background
  PUMP-BOX   MIXER-BOX
  RV-BOXES   CD-BOX
  \ Refresh all of the actual divece and message status
  WINDOWOFF
  SHO-RLYS   SHO-RVLVS   SHO-PUMP   SHO-MIXER   SHO-PMSGS
  WINDOWON   ;
```

461

140

501

180

```
\ Control Task - Load Block

181 182 THRU \ Basic tools
192 193 THRU  \ method structure words
183 189 THRU  \ Command processing
194 LOAD      \ Break execution words
207 LOAD      \ Relay Control
213 LOAD      \ Pump Control
225 LOAD      \ Hamilton Valves
234 LOAD      \ Mixer Operations
237 LOAD      \ Programmable messages
190 LOAD      \ Task loop, initialization
EXIT
```

502

MTHPTR If not 0, points to most recent valid method.
MTNMPTR is used for displaying the name of the method.

>MTHD-NAME places the name of the method in METHODBUF.

181

```
  \ Control Task - basics for methods

VARIABLE MTHPTR    \ Points to first word of method
VARIABLE MTNMPTR   \ Points to nfa of method

: >MTHD-NAME
   METHODBUF NMLEN BLANK
   MTNMPTR @ 4 +   COUNT 11 MIN
   METHODBUF SWAP CMOVE   ;
```

503

IDLE? returns true if a method is not running.
BUSY? returns true if cycling from running to idle.
PAUSE? returns true if in pause state.
RUN? returns true if running, pausing, or stepping.
STEP? is true if in single step mode.
RSP sends a response (a message pointer and a token) to a command from the user task.
ACKRSP responds with ok if command was accepted.
NAKRSP is an error response, string is used for error message.
startrun will perform necessary processing to start a run.
endrun will do what is necessary to end a run.
notready responds with not ready error.
MTHDOK? returns true if method exists and no load errors.
MTHDERR error if the method is not ok.

182

```
  \ Control Task - basics for status Checking
: statcheck  ( n --- t)   RUN_STATUS @  AND  ;
: IDLE?  ( --- t)     IDLEBITS statcheck NOT  ;
: BUSY?  ( --- t)     BUSYBIT  statcheck   ;
: PAUSE? ( --- t)     PAUSEBIT statcheck   ;
: RUN?   ( --- t)     RUNBIT   statcheck   ;
: STEP?  ( --- t)     STEPBIT  statcheck   ;

\ : RSP  ( ptr n --- )  FROM_CONTROL SEND_MSG  ;
\ : ACKRSP  ( --- )  " control ok"  ACK   RSP   ;
\ : NAKRSP  ( ptr --- )  NAK   RSP   ;
: startrun     ;
: endrun    ( perform end run operations)  ;
: notready   TRUE ABORT" Error: not ready!"   ;
: MTHDOK?   MTHPTR @  ;
: MTHDERR   TRUE ABORT" Error: No Method!"   ;
```

504

C_ST/STOP processes a start/stop command from the user.

183

```
\ Control Task - Start/Stop Run Control
: C_ST/STOP  ( ptr --- )  DROP
  BUSY? IF   ( cant start or stop when its busy)
     notready
  ELSE
     IDLE? IF   ( not running)
        MTHDOK? IF   ( start a new run)
           RUNBIT RUN_STATUS !   startrun
        ELSE  ( something wrong with the method)
           MTHDERR
        THEN
     ELSE  ( end the run)
           BUSYBIT RUN_STATUS !  endrun
     THEN
  THEN   ;
```

505

C_PS/CONT processes a pause/continue command from the user.

184

```
\ Control Task - Pause/Continue Run control
: C_PS/CONT  ( ptr --- )  DROP
  BUSY? IF
     notready
  ELSE
     IDLE? NOT IF
        PAUSE? IF
           RUN_STATUS @ [ STEPBIT PAUSEBIT OR NEGATE 1- ]
           LITERAL  AND  RUN_STATUS !
        ELSE
           PAUSEBIT RUN_STATUS +!
        THEN
     THEN
  THEN   ;
```

506

C_1STEP processes a single step command from the user.

185

```
\ Control Task - Single Step Run Control
: C_1STEP  ( ptr --- )  DROP
  BUSY? IF  notready
  ELSE
     IDLE? IF
        MTHDOK? IF    \ start a run in single step mode
           RUNBIT STEPBIT + RUN_STATUS !  startrun
        ELSE
           MTHDERR  THEN
     ELSE
        RUN_STATUS @
        PAUSE? IF    \ turn off pause to do one step.
           [ PAUSEBIT NEGATE 1- ] LITERAL AND
        THEN STEPBIT OR RUN_STATUS !
     THEN
  THEN   ;
```

513

LAST-END contains a pointer to the address of "endmethod" in the last occurance of END. If END is being compiled for the first time in a load, this pointer must be null.

@MTHD initializes the control task method parameters. It empties the dictionary space of the task, clears any outstanding status messages, resets LAST-END to 0, connects the tasks dictionary to the top of the main dictionary, cleares the old method name.

192

```
\ Method Execution - initialization

VARIABLE LAST-END  \ Points to "endmethod" in last END

: @MTHD
  EMPTY  0 MTHPTR !                          \ get rid of old method
  0 MFMSG !  0 FPMSG !                       \ Clear messages
  0 LAST-END !                               \ Iintialize ENDs
  OPERATOR CONTEXT HIS  CONTEXT 20 MOVE \ chain vocabulary
  0 METHODBUF !  TRUE CHANGEMETHOD !  ; \ clear method name
```

514

METHOD Defining word. Compiles a new method and puts it's starting address into MTHPTR.

endmethod Run time code for END. Terminates method execution.

END Compiling word inserts "endmethod" as end of method definition and stops compiling the method definition. Since methods must be able to nest, "endmethod" must execute only once, at the end of the last method defined. The variable LAST-END is used to replace earlier compiled addresses of "endmethod" with EXIT, effectively converting all but the last occurance of END into normal forth semicolons.

193

```
\ Method Execution - defining methods

: METHOD
  HERE MTNMPTR !
  : LAST @ @ CFA 2+ MTHPTR !   ;

CODE endmethod  BUSYBIT # RUN_STATUS MOV   ' EXIT JMP

: END
  LAST-END @ ?DUP
     IF  ['] EXIT 2- OVER !   THEN
  HERE LAST-END !
  COMPILE endmethod   SMUDGE   R> 0= STATE !  ;  IMMEDIATE
```

515

break Runtime code for B; Used in place of ";" to check for pause, stop, or continue commands from the user task. Exits the command loop if stop.

B; terminates a definition, causing a "break" to process commands from the user task and to allow other tasks to run.

194

```
\ Method Execution - breaking execution

: break  STEP? IF   PAUSEBIT RUN_STATUS +!   THEN
  BEGIN   PROCESS_CMDS  BUSY?  IF   CTL_LOOP   THEN
  PAUSE?  NOT   UNTIL   R> DROP  EXIT   ;

: B;  COMPILE break  SMUDGE R> 0= STATE ! ; IMMEDIATE
```

528

The upper port of the PIA generates the address and control (read/write), while the lower port is for data in/out.
These constants define the I/O addresses for the 6821 PIA chip on the Opto-22 AC 2 adapter card.

OUTDIR sets the PIA to all bits out for the given channel.

INDIR sets the data direction to input.

RLYSOUT outputs the data value to the PAMUX port (0-2).
(PAMUX is a parallel board connected to the PIA)
RLYSIN gets the current state of all the relays.

207

```
\ Relay Control
HEX
\ direction/data        control
310 CONSTANT CDA     311 CONSTANT CTLA  \ upper parallel port
312 CONSTANT CDB     313 CONSTANT CTLB  \ lower    "     "
: OUTDIR  ( a --- )  >R  0 I 1- OUTPUT   0 I OUTPUT   0FF I 1-
   OUTPUT  34 R> OUTPUT  ;
: INDIR   ( a --- )  >R  0 I 1- OUTPUT   0 I OUTPUT  0 I 1-
   OUTPUT   34 R> OUTPUT  ;
: RLYSOUT ( d a --- ) CTLB OUTDIR DUP CDA OUTPUT SWAP CDB OUTPUT
   DUP 40 + CDA OUTPUT  CDA OUTPUT  ;
: RLYSIN  ( a --- )  CTLB INDIR  DUP CDA OUTPUT  80 + CDA OUTPUT
   CDB INPUT  0 CDA OUTPUT  ;
DECIMAL   208  210 THRU
```

529

RLY contains the relay # after RELAY is executed
PRT contains the PAMUX port address after RELAY (0-2).
MSK contains the bit mask to isolate the relay bit.

RLYUPDATE  Given the new state (either on or off) for a relay, read in the current relay states for this group of 8, and set the new state for this relay. The current status for for these relays is saved in RELAYS for status updating. Note that RELAY must be executed before ON or OFF.
RELAY converts a relay number (1 - 24) into a port # and it's bit position in the port.
ON and OFF turn just the relay selected by RELAY on or off.
INIT_RLYS  sets all the relays to their user selected state. (defined by the bits in RLYDEFAULTS)

208

```
 \ Relay Control
VARIABLE RLY  \ These 3 variables are set by RELAY
VARIABLE PRT   VARIABLE MSK   VARIABLE SNS

: RLYUPDATE  ( n ---)
   MSK @ AND               \ isolate relay state bit
   PRT @ RLYSIN            \ get current state
   MSK @ -1 XOR AND  ( remove old state ) OR  \ insert new state
   PRT @ 2DUP  RELAYS + C! ( save relay status)  RLYSOUT ;
: RELAY   ( # --- )   1-  \ Converts 1-24 to 0-23
   DUP 0 20 WITHIN NOT ABORT" Relay # is out of range"
   DUP RLY ! 8 /MOD PRT !  BITMASK + C@ MSK ! ;
: (ON)    RLYDEFAULTS PRT @ + C@  INVERT   RLYUPDATE   ;
: (OFF)    RLYDEFAULTS PRT @ + C@  RLYUPDATE   ;
: INIT_RLYS
   CTLA OUTDIR CTLB OUTDIR 21 1 DO I RELAY (OFF) LOOP ;
```

530

NAMED is used to give a relay a name: " 4 RELAY NAMED METHANOL"
Later, use as:  METHANOL RELAY ON
IS_OFF is used to define the state of the relay when "off".
Allows a relay to be normally on rather than off.
Use:  4 RELAY  1 IS_OFF  makes "on" the default for relay 4.
Combine the two definitions: 3 RELAY NAMED WATER 0 IS_OFF
DELAY  waits a given number of milliseconds before returning.
Use it in user methods rather than FORTH's MS to allow recognizing the stop command.  Quits back to main loop if stop
MS is redefined to be used as a units descriptor in a method.
Use:  5 MS DELAY or 10 SEC DELAY.
MIN waits for several minutes.

209

```
  \ Relay Control - Method words

: ON    ( - )   (ON)  0;
: OFF   ( - )   (OFF)  0;

: SENSOR   ( # - )  1-  DUP 20 24 WITHIN
   NOT ABORT" Sensor # is out of range"   SNS !   ;
: (GET-SENSOR)  ( - on/off )   SNS @ 8 /MOD
   RLYSIN SWAP BITMASK@ AND NOT NOT   ;
: SWAIT  ( on/off )   BEGIN  PROCESS_CMDS  BUSY?
       IF  CTL_LOOP  THEN  DUP (GET-SENSOR) =  UNTIL  DROP  0;
: GET-SENSOR  ( # - )  SENSOR (GET-SENSOR)   ;
: ON-WAIT  ( - )  1 SWAIT   ;
: OFF-WAIT  ( - )  0 SWAIT   ;

: UPD-SENSORS  ( - )  2 RLYSIN RELAYS 2+ C!   ;
```

531

210

```
\ Relay Control - Method words

: NAMED  ( - )  CREATE  RLY @ C,  DOES> ( --- #) C@  ;
: IS_OFF  ( t ---)  IF  -1  ELSE  0  THEN   MSK @ AND
   RLYDEFAULTS PRT @ + DUP  C@ MSK @ INVERT AND  SWAP  OR ! ;
: DELAY  ( ms --- )
  COUNTER + BEGIN  PROCESS_CMDS  BUSY? IF  CTL_LOOP  THEN
  DUP COUNTER < UNTIL  DROP  ;
```

532

211

533

212

534

PI/O is the data input/output port for the pump controller.
PSTS Status port for I/O.
RCVRDY bit in PSTS is a 0 when data is available.
XMTRDY is a 1 when it is ok to transmit to the controller.
PREADY is a 1 when the it is ok to send a pump command.
P_STATUS@ returns the I/O status flags.
P_DATA@ returns the data byte from the controller.
P_DATA! writes a command byte to the controller.
P_CTS? returns true if it's ok to transmit a command.
P_RCVRDY? returns true if data waiting to be read.
P_READY? returns true if the controller is ready.
P_GETBYTE waits for a data byte and returns it.
P_INFLUSH reads any remaining data bytes before returning.

213

```
\ Pump Control - Communication Words
HEX
3EE CONSTANT PI/O
3EF CONSTANT PSTS
  1 CONSTANT RCVRDY
  2 CONSTANT XMTRDY
  4 CONSTANT PREADY
: P_STATUS@  ( --- n)  PSTS  INPUT   ;
: P_DATA@    ( --- n)  PI/O  INPUT   ;
: P_DATA!    ( n ---)  PI/O  OUTPUT  ;
: P_CTS?     ( --- t)  P_STATUS@  XMTRDY AND  ;
: P_RCVRDY?  ( --- t)  P_STATUS@  RCVRDY AND NOT  ;
: P_READY?   ( --- t)  P_STATUS@  PREADY AND  ;
: P_GETBYTE  ( --- n)  BEGIN  PAUSE  P_RCVRDY? UNTIL  P_DATA@ ;
: P_INFLUSH ( --- ) BEGIN  PAUSE P_RCVRDY?  WHILE  P_DATA@ DROP
   REPEAT   ;        DECIMAL 214 218 THRU
```

535

PMPBUF is used to build pump command strings in. First byte is count. Also contains the characters returned by the controller after a command was sent. Look here for results.
0BUF initializes the PMPBUF
+BUF! stores the new character and increments the string count. Nonprinting chars are ignored.
P_XMTWAIT flushes the input stream and waits until it's ok to transmit a new command to the controller.
P_RESULT waits for the controller's command response (a : or ?) A colon ":" signifies ok, while a "?" means error.

>PUMP sends the string whose address and count are on the stack to the pump. Aborts if returned char is not ":".

214

```
 \ Pump - Command Transmission

CREATE PMPBUF  20 ALLOT    HERE 1- CONSTANT NBUF
: 0BUF  0 PMPBUF C!  ;
HEX
: +BUF!  ( n --- )  20 MAX PMPBUF DUP C@ 1+ 2DUP SWAP C! + C! ;

: P_XMTWAIT ( --- )  BEGIN  P_INFLUSH  P_CTS?  UNTIL  ;

: P_RESULT ( --- n)  0BUF  BEGIN  P_GETBYTE  DUP +BUF! 3A 40
   WITHIN  UNTIL   PMPBUF DUP C@ + C@   ;

: >PUMP  ( a c --- )  0 DO  P_XMTWAIT  DUP C@  P_DATA! 1+ LOOP
   DROP   P_RESULT 3F = ABORT" pump command error"   ;
```

536

TESTING WORD

(# Starts formatting a double number at the end of PMPBUF.
#) Ends formatting, string is in PMPBUF and addr, count on stack
>STRNG converts a double number to a HEX format text string.

+CMDSTR builds a pump command string in PMPBUF given the address
PCMD initializes command buffer and copies string to it.
PPARM gets double number out of address and adds string to buffr
PSEND ends a command string with a ";" and sends it to the pump.

215

```
 \ Pump - Command Formatting
\ : p_cmd ( --- a n)  1 WORD COUNT ;
\ : XPUMP   p_cmd  >PUMP  PMPBUF COUNT TYPE  ;

: (#  NBUF PTR !  ;
: #)  ( --- a n)  2DROP PTR @ NBUF OVER -  ;
: >STRNG  ( d --- a n)  SWAP OVER DABS HEX (# #S SIGN #)
   DECIMAL  ;
HEX
: +CMDSTR ( a n --- ) 0 DO  DUP C@ +BUF!  1+ LOOP  DROP  ;
: PCMD  ( a --- )   0BUF   COUNT +CMDSTR  ;
: PPARM ( a --- )  2@  >STRNG  +CMDSTR  ;
: PSEND ( --- )  3B +BUF!  PMPBUF  COUNT >PUMP  ;
DECIMAL
```

## 537

RATE Pump flow rate in counts per second
VOL Amount to pump in counts
GAIN
ACCEL Acceleration rate of pump motor in counts/sec/sec
ZERO
POLE
DIRECTION contains the pump direction flag.

ML and ML/MIN set the flow and volume variables after converting from the given units to pump counts.

FORWARD and REVERSE set the pump direction parameter.

## 216

```
\ Pump - Variables

2VARIABLE  ACCEL     100000. ACCEL 2!
2VARIABLE  GAIN          0. GAIN  2!
2VARIABLE  POLE          0. POLE  2!
2VARIABLE  ZERO        232. ZERO  2!
2VARIABLE  RATE       2000. RATE  2!
2VARIABLE  VOL        1000. VOL   2!
\ variable PDIR is defined in task support; 1 = forward

: ml  ( n --- )  DUP PVOL !   0 20000  1 M*/  VOL 2!  ;
: ML  ml ;
: ml/min  ( n --- )  DUP PRATE !   0 20000 60 M*/  RATE 2!  ;
: ML/MIN  ml/min  ;
: FORWARD  ( n --- )  1 PDIR !  ;
: REVERSE  ( n --- )  0 PDIR !  ;
```

## 538

SENDPARM gets the address and length of command string, and address of a double variable and generates a complete pump command. Command looks like: "SP10000;". Refer to pump manual.

These commands all set pump controller variables.

SETALL sends the necessary variables to the pump.

## 217

```
\ Pump - Send Pump Parameters
: SENDPARM  ( ap ac n --- )  PCMD  PPARM  PSEND   ;
: SETFLOW   RATE   $" SP"   SENDPARM   ;
: SETVOL    VOL    $" PR"   SENDPARM   ;
: SETACCEL  ACCEL  $" AC"   SENDPARM   ;
: SETGAIN   GAIN   $" GN"   SENDPARM   ;
: SETZERO   ZERO   $" ZR"   SENDPARM   ;
: SETPOLE   POLE   $" PL"   SENDPARM   ;
: SETALL  SETFLOW SETVOL SETACCEL SETGAIN SETZERO SETPOLE  ;

: TELLPMP   ( ac --- )   PCMD  PSEND   ;
: P_ERROR?  $" TI" TELLPMP  PMPBUF HEX NUMBER DECIMAL 1 AND
      ABORT" Pump exessive position error"   ;
: PABORT   $" AB"  TELLPMP $" MO" TELLPMP   ;
: P_WAIT ( - )   BEGIN  PROCESS_CMDS  BUSY? IF   PABORT  THEN
   P_READY?  UNTIL  P_ERROR?   ;
```

## 539

TELLPMP Sends a 2 character pump command.
PABORT is an emergency stop, turns the motor off immediatly.
P_WAIT waits for operation complete, aborts if stop command.
PSTART starts a pump operation. Controls pump status flag.
PRESET causes controller to use it's default parameters.
PREVERSE pumps in reverse direction.
PFORWARD pumps in forward direction.
PDECIMAL Controller interprets numbers in decimal format.
PHEX Controller interprets numbers in Hex format (default).
PSERVO Puts controller in servo mode.
PDIRECTION sets the pump direction based on contents of DIRECTION.
PUMP sends an entire set of commands to start up the pump using the current pump parameters.
INIT_PUMP does the pump initialization.

## 218

```
\ Pump - Pump Commands

: PSTART  TRUE PBUSY !  $" BG" TELLPMP  P_WAIT  FALSE PBUSY ! ;
: P_OE   1. $" OE" PCMD >STRNG +CMDSTR PSEND   ;

: PRESET     $" RS"   TELLPMP   ;
: PREVERSE   $" DR"   TELLPMP   ;
: PFORWARD   $" DF"   TELLPMP   ;
: PDECIMAL   $" DC"   TELLPMP   ;
: PHEX       $" HX"   TELLPMP   ;
: PSERVO     $" SV"   TELLPMP   ;

: PDIRECTION  PDIR @ IF PFORWARD ELSE PREVERSE THEN  ;
: PUMP ( - )   PSERVO   PHEX   SETALL   PDIRECTION   PSTART  B;
: INIT_PUMP  ( - )  PABORT  PRESET  P_OE  ;
```

546

This code is used to manipulate the parity of characters that are send to and received from the Hamilton controller. the communication protocol for the device requires that the adressing character be send as an odd parity, while all other characters must be sent as even parity characters. The alternate way of manipulating the parity by programming the UART is not practical for reasons of speed and synchronization.

225

```
  \ Hamilton valves: basics and load block

VARIABLE RDPTR

CODE >EVEN-PAR   ( c - even-parity-c )   HEX
   0 POP   0 0 AND B
   7B ( JPO, ODD-PAR?)
      IF   80 #B 0 XOR
   THEN   0 PUSH
   NEXT   FORTH
: >ODD-PAR   ( c - odd-parity-c )
   >EVEN-PAR   80 XOR   ;                DECIMAL


226 232 THRU   \ Rest of Hamilton valve words
```

547

RBUFF is a wrap around receiving buffer, whose length may be modified through changing RBUFF-SIZE. This buffer is filled by the COLLECT loop, running under task REMOTE.

RDPTR, WRPTR, and RCOUNT are used to maintain RBUFF. The first two are a read poiter and a write pointer into the buffer, and the last one is a count of characters received.

SBUFF is a small buffer for storing the characters that we send to the controller.

226

548

RBUFF+ is an addition word that returns a 'wrapped around' result, corresponding to the size of RBUFF.

RBUFF@ gets the nth character of the most recent unread portion of the receive buffer.

RBUFF-CLEAR clears the first n characters of the most recent unread portion of the receive buffer.

ECHO? returns true if exactly n characters have been received at the serial port.

227

```
  \ Hamilton valves: receive buffer utility words

: RBUFF+    ( n m - wrapped[n+m] )
   + RBUFF-SIZE MOD   ;

\ : RBUFF@   ( n - c )
\    RDPTR @ RBUFF+ RBUFF + C@   ;

: RBUFF-CLEAR   ( - )
   WRPTR @ RDPTR !
   0 RCOUNT !   ;

: ECHO?   ( n - t )
   RCOUNT @ =   ;
```

549

>SERIAL sends a single character to the controller. Note that this send is done directly to the active serial port that is being used by task REMOTE for character collection. This is done so that REMOTE can continue responding to receive interrupts without any interference.

COMMAND! stores the chacaters for the command in SBUFF.

HAMILTON sends a command to the controller.

228

```
\ Hamilton valves: command output words

: COMMAND!   ( c1 c2 ... cn n - n )    DUP >R
  SBUFF + 1- SBUFF SWAP DO
    I C!
  -1 +LOOP   R>   ;

: HAMILTON   ( c1 c2 ... cn n - )
  COMMAND!   SBCTR !   SBUFF SBPTR !
  CALLER GET   RBUFF-CLEAR   SEND>SER
  50 MS   CALLER RELEASE   ;
```

550

229

551

RV-# contains the current valve number

RV-STAT-TABLE contains pairs of status variables ( old and new ) the four valves

RV-STAT returns the adress of the new status variable for the currently selected valve ( RV-# )

RV-DIRECTION takes a position number and returns returns a direction character ( + or - ) for the Hamilton command string. the valve will rotate either one position counter clockwise or one or two positions clockwise. The first rotation of the valve is always clockwise.

230

```
\ Hamilton valves: valve variables and utility words

VARIABLE RV-#

: RV-STAT   ( - stat-byte-addr )
  RV-# @ 1- 2*   RV-STAT-TBL +   ;

HEX : RV-DIRECTION   ( pos - direction-character )
  RV-STAT C@ -
  DUP -3 =   SWAP 9 =   OR
     IF   2D
     ELSE   2B
  THEN   ;   DECIMAL
```

552

These are the top level commands for the hamilton rotary valve controller. RVAVLE selects a current valve as in the phrase 3 RVALVE. POSITION selects a valve position corresponding to the position numbers that appear on the top of the valve assembly, and sends the valve to that position. PORT allows the user to use conventionl numbers for valve positions, namely -1- for up, -2- for right, -3- for down, and -4- for left. The following are examples of usage:

```
1 RVALVE 3 PORT  =  1 RVALVE 7 POSITION
2 RVALVE 4 PORT  =  2 RVALVE 10 POSITION
```

231

```
\ Hamilton valves: valve driving words

: RVALVE   ( valve-# - )
  RV-# !  ;

: POSITION   ( Hamilton-#-pos - )   >R
  [ HEX ] 30 >ODD-PAR   RV-# @ 30 + >EVEN-PAR
  I RV-DIRECTION >EVEN-PAR   I 30 + >EVEN-PAR
  D >EVEN-PAR   5 HAMILTON
  R> RV-STAT C!
  [ DECIMAL ] 2000 MS
  0 ECHO? 11 ECHO? OR NOT
     ABORT" Hamilton Error"   0;

: PORT   ( normal-#-pos - )
  1- 3 * 1+   POSITION   ;
```

553

INIT-HAM-COMM is called on powerup to initialize the hamilton controller.

INIT-HAMILTON initializes communication with the controller and puts the valves into their default positions.

232

```
\ Hamilton valves: initialization
: INIT-HAM-COMM
  [ HEX ] 30 >ODD-PAR   30 >EVEN-PAR   D >EVEN-PAR
  3 HAMILTON
  [ DECIMAL ] 400 MS   3 ECHO? 9 ECHO? OR NOT
     ABORT" Hamilton power error"
  [ HEX ] 30 >ODD-PAR   49 >EVEN-PAR   D >EVEN-PAR
  3 HAMILTON
  [ DECIMAL ] 250 MS   6 ECHO? NOT
     ABORT" Hamilton init error"   ;   DECIMAL
: INIT_HAMILTON   ( - )
  500 MS   INIT-HAM-COMM
  5 1 DO
     I RVALVE   RV-DEFAULTS I 1- + C@   ?DUP
        IF   PORT 2000 MS   THEN
  LOOP   ;
```

554

233

## 555

MX-MSB and MX-LSB contain the numbers for the relays that are used to control the mixing power.

MX-RLY contains the number of the relay that turns the mixer on or off.

1/4 is used to set MX-MSB to 0 and MX-LSB to 0.
1/2 is used to set MX-MSB to 0 and MX-LSB to 1.
3/4 is used to set MX-MSB to 1 and MX-LSB to 0.
FULL is used to set MX-MSB to 1 and MX-LSB to 1.

## 234

```
\ Mixer operations - constants, load block

       18  CONSTANT  MX-MSB
       19  CONSTANT  MX-LSB
       20  CONSTANT  MX-RLY

HEX    0000  CONSTANT  1/4
       0001  CONSTANT  1/2
       0100  CONSTANT  3/4
       0101  CONSTANT  FULL     DECIMAL

235 236 THRU  \ Rest of mixer operations
```

## 556

SET-PWR-BIT turns one of the power control relays on or off as needed.

MIX-CYCLE turns the mixer on and off for one complete duty cycle. If the duty percentage is 100, then the mixer is left on.

## 235

```
\ Mixer operations - basics

: SET-PWR-BIT   ( on/off rly# - )
  SWAP 255 AND
     IF RELAY (ON)   ELSE RELAY (OFF)   THEN  ;

: MIX-CYCLE   ( n - )
  MXDUTY @ 10 *
  MX-RLY RELAY (ON)   DUP DELAY
  1000 SWAP -   ?DUP
     IF   MX-RLY RELAY (OFF)   DELAY   THEN  ;
```

## 557

%DUTY determines the duty cycle percentage for the mixing operation.

POWER determines the power setting of the mixer.

SECONDS and SECOND determine the mixer's duration of operation.

MIX activates the mixer using the current parameters found in the mixer variables MXDUTY, MXPWR, and MXTIME.

## 236

```
\ Mixer operations - top level operations
: %DUTY   ( n - )
  MXDUTY !  ;

: POWER   ( n - )
  MXPWR !  ;

: SECONDS   ( n - )
  MXTIME !  ;        : SECOND SECONDS ;

: MIX   ( - )
  1 MXBUSY !
  MXPWR @   DUP ><   MX-MSB SET-PWR-BIT   MX-LSB SET-PWR-BIT
  MXTIME @ 0 DO   MIX-CYCLE   LOOP   MX-RLY RELAY (OFF)
  MX-MSB RELAY (OFF)   MX-LSB RELAY (OFF)
  0 MXBUSY !   ;
```

333

Read the year and set the FORTH system year.
Read the time and set FORTH's clock.

The MONTHS array is used to convert the current day and month into FORTH's internal date format. Refer to screens 30 and 31 in the Level 3 listing.

SETDATE gets the current day and month from the battery clock on the AST card and sets FORTH's date.

Initialize FORTH's day, date, and time from the AST card clock.
Sample prep

12

```
\ Clock - Set FORTH'S time and date


: SETYEAR YR@ 1980 + A.D. ;
: SETTIME HR@ 100 * MN@ + 0 FST ;

CREATE MONTHS
    0 , 0 , 31 , 59 , 90 , 120 , 151 , 181 , 212 , 243 , 273 ,
    304 , 334 , 367 ,

: SETDATE DY@ MO@ 2* MONTHS + @ 58 OVER < LEAP @ * +
    JAN0 @ + +  NOW  ;

SETYEAR SETTIME SETDATE
FORGET CLK@
```

334

These definitions are for the AST SixPac Plus card with the Ricoh RP5C15 clock chip.
CLK@ reads a value from one of the AST card clock registers.

Read the Year
Month
Day
Hour
Minute
Second from the Battery clock.

13

```
   \ AST Card Clock Calender words - For RICOH RP5C15 chip
   \ ( for newer AST Six Pack Plus cards)
HEX
: CLK@ ( a --- n )   2C0 OUTPUT 2C1 INPUT 0F AND ;
DECIMAL
: 2DGTS ( a --- n )  DUP CLK@ 10 * SWAP 1- CLK@ + ;
: YR@  ( --- yr )    12 2DGTS ;
: MO@  ( --- mo )    10 2DGTS ;
: DY@  ( --- dy )    8  2DGTS ;
: HR@  ( --- hr )    5  2DGTS ;
: MN@  ( --- mn )    3  2DGTS ;
: SC@  ( --- sc )    1  2DGTS ;
EXIT
```

335

14

```
   \ AST Card Clock Calender words - For National MM58167A chi
   \ (for older AST Six Pack Plus cards)
HEX
: CLK@ ( a --- n )   2C0 + INPUT  ;
DECIMAL
: CLVAL  ( a --- n)  CLK@ DUP 16 / 10 * SWAP 15 AND + ;
: YR@  ( --- yr )    10  CLK@ 80 + ;
: MO@  ( --- mo )    7  CLVAL ;
: DY@  ( --- dy )    6  CLVAL ;
: HR@  ( --- hr )    4  CLVAL ;
: MN@  ( --- mn )    3  CLVAL ;
: SC@  ( --- sc )    2  CLVAL ;
EXIT
```

348

27

'QUIT is a user variable in each task that contains the address to exectute when an error occurs.
The error handler for each task should process the error if possible; saving state information for debugging (like SCR, >IN, etc); and re-enter the main task loop to allow recovery. This will prevent system lockups on errors.
Initialized to QUIT for now (normal FORTH system error response)
ERRORS is executed when ABORT is called. It gets the error routine address for this task and starts interpreting it.
Modify the ABORT routine in FORTH to vector to ERRORS instead of QUIT.
****************************************************************
SYSTEM NOTE: If the FORTH system is ever recompiled, the ABORT routine itself should be modified to implement the above behaviour. It is not good practice to poke in code changes after the system is up and running.

```
\ System Error Handling

' QUIT   'QUIT !
: QUITS   'QUIT @ >R ;
' QUITS   ' ABORT 7 + !

' (abort")   'ABORT !
: ABORTS   'ABORT @EXECUTE ;
' ABORTS 2-   ' abort" 2+ !

CODE RESET   U R MOV   \ clear the return stack
          S0 U) S MOV   \ clear parameter stack
       0 0 SUB  0 PUSH  \ put a safety 0 on stack
                NEXT
\ copy of definition in screen 90 level 4 listing.
```

349

28

350

29

339 18

These definitions are the same as screen 77 in FORTH level 3 listing, except that FUPDATE is used in place of UPDATE when writing to a disk file.

```
   \ File Editor - Line & character operations
67 :K LHOLD   CLAD 'LINE C/L CMOVE ;
: (DUPL)   LINES ?DUP IF  0 DO  14 I - MCDN LOOP  THEN ;
61 :K INSL   (DUPL)  LINE CLRL .BLOCK ;
63 :K DUPL   (DUPL) .BLOCK ;
64 :K SPLIT   LINES IF  (DUPL) -LINE CLAD C/L +
   COL BLANK  LINE +L  .BLOCK  L# !  THEN ;
62 :K XL   LHOLD  LINES ?DUP IF  0 DO  LINE I + 1+ MLUP LOOP
   THEN  L/S LAD C/L BLANK  .BLOCK ;
83 :K XC   <ADDR DUP  DUP 1+ SWAP COLS 1- CMOVE
   BL SWAP COLS 1- + C! FUPDATE  .LINE ;
: INSERT ( c)   DUP EMIT  MODE C@ IF  COLS 1- IF  <ADDR DUP
      DUP 1+ COLS 1- <CMOVE  C! +C FUPDATE .LINE  ELSE <ADDR C!
   THEN  ELSE <ADDR C! +C THEN  FUPDATE ;
: xDELETE   -C 60  MODE C@ IF  XC  ELSE BL <ADDR C! FUPDATE
      SPACE  THEN ;
```

340 19

EOL and PUT are the same except for FUPDATE.

.MODE displays the current editing mode on the bottom line of editing window

XDISPLY types the contents of the nth screen of the current file

XEDIT is called when leaving the editor to close the file, put the window back in order, and rebuild the current screen.

```
   \ File Editor - Display function keys
79 :K EOL   CLAD C/L -TRAILING DUP IF  1+  THEN  63 MIN C# !
   DROP ;
: ?VISIBLE ( c - c t)   DUP 31 127 WITHIN ;
68 :K PUT   C/L 0 DO  'LINE I + C@ ?VISIBLE NOT IF
      2R> 2DROP  BELL EXIT  THEN DROP  LOOP
   MODE C@ DUP IF  (DUPL) THEN  'LINE CLAD C/L CMOVE FUPDATE
   IF .BLOCK  ELSE 0 C# ! 60 .LINE  THEN ;

: .MODE   17 38 TAB  MODE C@ IF ." Insert "
   ELSE ." Replace"  THEN ;

: XDISPLY ( scr#)  PAGE  (FLIST) .MODE ;

: XEDIT  FCLOSE  WORK WINDOW
   'SCREEN @  0 'SCREEN !  EXECUTE  ;
```

341 20

ESCape sets the exit flag so we'll leave the editor.

(edit) is the editor command interpreting loop. It gets key strokes, updates the cursor position, and executes function keys until the exit flag is set

>EDIT throws 2 return addresses away off the stack and reenters the editing loop.

```
   \ File Editor - Command Interpreter
: CASE ( n n - n 0, t)   OVER - IF 0  ELSE DROP 1  THEN ;
: INSERTION ( c)   ?VISIBLE IF INSERT
      ELSE  13 CASE IF  ( Return)  0 C# ! +L
      ELSE  12 CASE IF  ( Bksp)  xDELETE
      ELSE  09 CASE IF  ( Tab)  +C +C +C
      ELSE 153 CASE IF  ( ESC)  TRUE EDXIT !
      ELSE  14 CASE IF  ( PrtSc)  CHOICE
   THEN THEN THEN THEN THEN THEN ;
: FKEY ( - k, k -1)   KEY  'KEY C@ 58 > IF  ( Function key)
   DROP  'KEY C@ -1  THEN ;
: (edit)  ( blk#)   HOME XDISPLY  BEGIN  60
      +CURSOR FKEY -CURSOR  DUP 1+ IF  INSERTION
        ELSE DROP FUNCTION  THEN EDXIT @ UNTIL ;
CODE >EDIT   ' (edit) 2+ # I MOV   4 # R ADD   NEXT
```

342

cant do an empty-buffers without loosing directory and BAT information too. Solution is to Copy the existing file to a "xxxx.BAK" file, edit that one, and just delete it if the user wants to forget any changes.

+0 (the plus function key) is supposed to flip between a screen and it's shadow or documentation block. In FORTH, the convention is to have documentation blocks a fixed offset above source blocks (typically 1 drive higher so that source and documentation are on seperate drives). How should documentation blocks be handled? Perhaps a different file type where the source code would be in "xyzabc.txt" and it's shadow would be in "xyzabc.doc". This means we need multiple open files, which the file system doesnt currently support.

21

```
  \ File Editor - Function keys
( Key 59)  ' FLUSH  59 'FUNCTION !

\ 60 :K RECALL   EMPTY-BUFFERS  0 pg  >EDIT ;
73 :K UP   1 pg >EDIT ;
81 :K DOWN   -1 pg >EDIT ;
\ 78 :K +0   (0) >EDIT ;
82 :K /MODE  MODE C@ 0=  MODE C!  .MODE ;

9 14 KEYS + C!
```

343

EDMENU displays the editing commands in the selection window.

FEDIT is the main entry point to the editor. It trys to open an existing file and if it is not found, it prompts before creating a new file.

22

```
  \ File Editor - Menu Display, Entry point
: EDMENU  ( - )
  SELECTION BOX (PAGE)
  ." COMMANDS: -----------"
  ." F1: FLUSH  F2: RECALL F3: SPREAD "
  ." F4: DEL LINF5: DUP LINF6: SPLIT  F7: DEL EOLF8: DEL EOS"
  ." F9: HOLD   F10: PUT   ESC: EXIT -"  ;

: (FEDIT)   STAT-OFF  MENU-OFF
  FALSE EDXIT ! EDMENU  EDITING WINDOW 0 (edit) XEDIT ;

: FEDIT  OPEN?  !" Enter Filename: " FILENAME IF 1+  DUP FOPEN
  IF   !" Create a new file? (Y/N)"  YES?  NOT
    IF  DROP EXIT  THEN   FCREATE  IF
        !" Create Error" .ERROR  EXIT    THEN
  ELSE  DROP  THEN  (FEDIT)  THEN   ;
```

344

23

558

SET-MPMSG sets method message to the address of in line string.

SET FPMSG sets function message to the address of in line string.

BRKT-STR compiles a sharp braket delimited <<str...>> string from the input stream into the dictionary.

237

```
\ Programmable method and function messages - basics

: SET-MPMSG   ( - )
   1 ?R@ MPMSG !   ;

: SET-FPMSG   ( - )
   1 ?R@ FPMSG !   ;

: BRKT-STR
   -1 >IN +!   60 WORD DROP   62 STRING   ;


238 LOAD  \ Message turnoff commands
```

559

MESSAGE compiles a message and makes it the method message at execution time.

MESSAGE-OFF turns off the method message, if any.

FMESSAGE compiles a message and makes it the function message at execution time.

FMESSAGE-OFF turns off the function message, if any.

238

```
   \ Programmable method and function messages - top level

: MESSAGE   ( - )
   COMPILE SET-MPMSG   BRKT-STR   ;   IMMEDIATE

: MESSAGE-OFF   ( - )
   0 MPMSG !   ;

: FMESSAGE   ( - )
   COMPILE SET-FPMSG   BRKT-STR   ;   IMMEDIATE

: FMESSAGE-OFF   ( - )
   0 FPMSG !   ;
```

560

239

561

RV-NAME-TBL is a table of pointers to strings that contain the names for the rotary vavle positions.

CD-NAME-TBL is a table of pointers to strings that contain the names for the contact device positions.

These load commands compile new strings and put their addresses in the given table.

240

```
\ System configuration tables and load screen

241 LOAD   \ String table generation words

CREATE RV-NAME-TBL   32 ALLOT
CREATE CD-NAME-TBL   96 ALLOT

RV-NAME-TBL       300 LOAD  \ Rotary valve names
CD-NAME-TBL       301 LOAD  \ Contact device functions 1-12
CD-NAME-TBL 48 +  302 LOAD  \ Contact device functions 13-24
```

562

IS-PTR is a pointer to the location at which we compile the string's address. It serves as an index into a table.

IS-LEN is the required length of the strings that are being compiled.

CONFIGURE and CHARACTER set IS-PTR and IS-LEN in a clean syntax. See the last note in this block.

CSTRING compiles a string and places its address into a table, advancing IS-PTR for the next string.

STRINGS compiles the required number of strings.

The syntax of usage is: CONFIGURE n # CHARACTER STRINGS. The adress of the table is given on the stack before starting.

241

```
\ Configuration tables - creating string tables
VARIABLE IS-PTR
VARIABLE IS-LEN

: CONFIGURE
   IS-PTR !   ;
: CHARACTER
   IS-LEN !   ;

: CSTRING
   -2 ALLOT   -1 >IN +!   60 WORD   DROP
   HERE 2+ IS-LEN @ BLANK   62 WORD
   IS-LEN @ OVER C!   IS-PTR @ !   2 IS-PTR +!
   IS-LEN @ 1+ 2+ ALLOT   ;
: STRINGS
   0 DO   CSTRING   LOOP   ;
```

563

242

621

300

```
\ Configuration screen for rotary valve names
CONFIGURE 16 13 CHARACTER STRINGS

valve# |          Port #1                  Port #2
-------|---------------------------------------------------------
   1   |       <Fill Sprayer >          <  To Waste   >
   2   |       < Solvent #2  >          < To LC Loop  >
   3   |       <             >          <             >
   4   |       <             >          <             >

valve# |          Port #3                  Port #4
-------|---------------------------------------------------------
   1   |       < Sample Line >          < Sample Loop >
   2   |       < LC Bypass   >          < Solvent #1  >
   3   |       <             >          <             >
   4   |       <             >          <             >
```

622

301

```
\ Configuration screen for contact device functions 1 thru 12
CONFIGURE 24 20 CHARACTER STRINGS
cd# |       OFF function             ON function
----|--------------------------------------------------------
  1 |  <1:Sample Loop Bypass>   <1:  Sample Loop       >
  2 |  <2:Sample Loop Bypass>   <2:  Sample Loop       >
  3 |  <3:  Manifold - Cup  >   <3:  Cup To Waste      >
  4 |  <4: Pump - Manifold  >   <4: Gas To Manifold    >
  5 |  <                    >   <                      >
  6 |  <6: Fill Gas Reserve >   <6:Empty Gas Reserve   >
  7 |  <7:Pressurize Sprayer>   <7:     Spray          >
  8 |  <                    >   <                      >
  9 |  <                    >   <                      >
 10 |  <                    >   <                      >
 11 |  <11:     Vent Cup    >   <11: Pressurize Cup    >
 12 |  <                    >   <                      >
```

623

302

```
\ Configuration screen for contact device functions 13 thru 24
CONFIGURE 24 20 CHARACTER STRINGS
cd# |       OFF function             ON function
----|--------------------------------------------------------
 13 |  <                    >   <                      >
 14 |  <                    >   <                      >
 15 |  <                    >   <                      >
 16 |  <                    >   <16:LC Fill Position   >
 17 |  <                    >   <17:  LC Inject        >
 18 |  <                    >   <                      >
 19 |  <                    >   <                      >
 20 |  <                    >   <                      >
 21 |  <                    >   <                      >
 22 |  <      OFF           >   <      ON              >
 23 |  <      OFF           >   <      ON              >
 24 |  <      OFF           >   <      ON              >
```

631 310

```
           <<<< HELP FOR STATUS SCREEN >>>>

This is the System Status Screen.  The display shows the
current state of each system element.

F1 is the Start/Stop key.  Use it to control method operation.
F2 is the Pause/Continue key.  Use it to suspend a run.
F3 allows a direct command to be entered  (for debugging only).
F4 allows exiting back to the FORTH system.
NUM LOCK  causes the current screen display to be copied to the
  printer.
<- ->  Keys move the command selector across the menu.
+   Causes the currently selected command to be executed
- or ESC  Exits the current Screen.
Type the first character of the command name to execute it
        [ Hit Any Key to Exit the Help Screens ]
```

632 311

```

This is second status help screen.
```

633

312

This is third status help screen.

634

313

This is fourth status help screen.

635

314

<<<< HELP FOR FILER SCREEN >>>>

The filer provides some utility commands for manipulating disk files. Files can be copied, deleted and renamed, and a new disk can be formatted.
The directory listing of the disk is displayed. If there are more files than can be shown on the screen at one time, you can use the page up or page down keys to see them.

[ Hit Any Key to Exit the Help Screens ]

636

315

637

316

638

317

<<<< HELP FOR PRINTER SCREEN >>>>

The printer utility allows files and disk directories to be sent to the printer.

[ Hit Any Key to Exit the Help Screens ]

639

640

641

```
( Sample Prep Task definitions )

300 TERMINAL PSTATUS
PSTATUS CONSTRUCT

2000 TERMINAL CONTROL
CONTROL CONSTRUCT

: HALT  ACTIVATE STOP  ;

\ 6307 PSTATUS 'TYPE HIS !
\ 'TAB @ PSTATUS 'TAB HIS !
```

318

319

320

```
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬¬
```

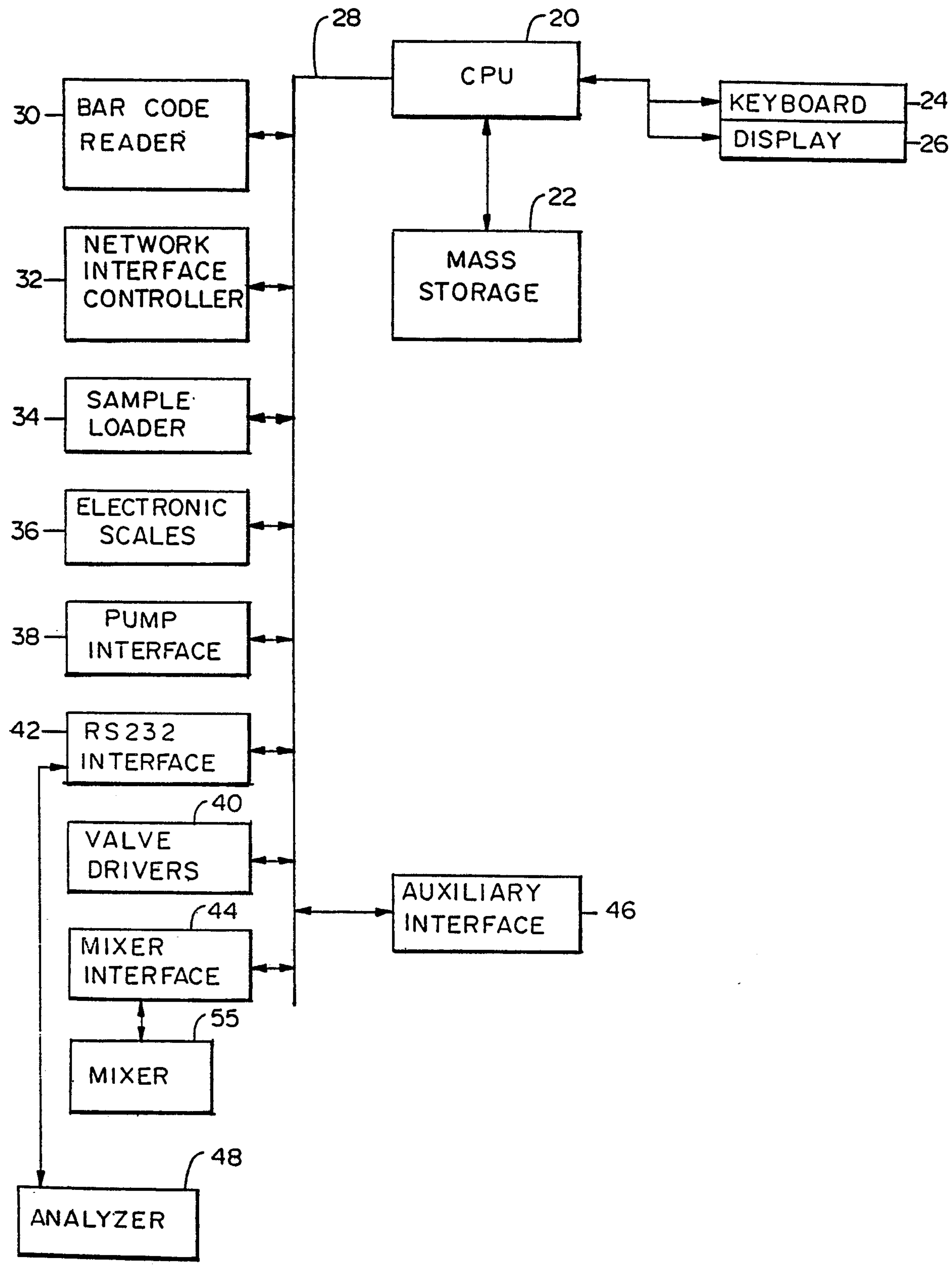
28
20
CPU
BAR CODE READER
30
KEYBOARD
24
DISPLAY
26
22
MASS STORAGE
NETWORK INTERFACE CONTROLLER
32
SAMPLE LOADER
34
ELECTRONIC SCALES
36
PUMP INTERFACE
38
RS232 INTERFACE
42
40
VALVE DRIVERS
AUXILIARY INTERFACE
46
44
MIXER INTERFACE
55
MIXER
48
ANALYZER

FIG. 1

FIG. 2

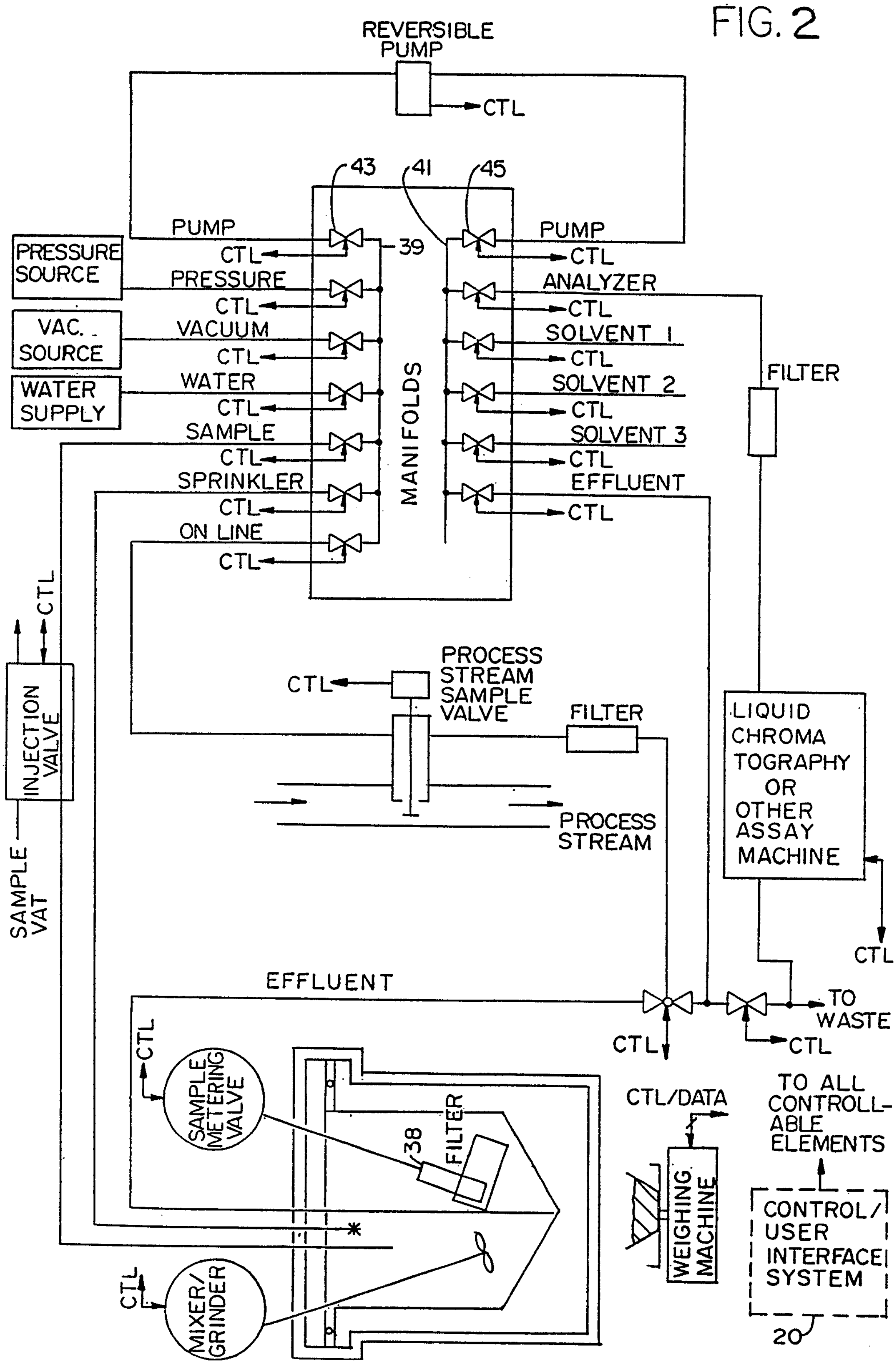
REVERSIBLE PUMP
CTL
43
41
45
39
PUMP
PRESSURE SOURCE
PRESSURE
VAC. SOURCE
VACUUM
WATER SUPPLY
WATER
SAMPLE
SPRINKLER
ON LINE
MANIFOLDS
ANALYZER
SOLVENT 1
SOLVENT 2
SOLVENT 3
EFFLUENT
FILTER
INJECTION VALVE
SAMPLE VAT
PROCESS STREAM SAMPLE VALVE
PROCESS STREAM
LIQUID CHROMA TOGRAPHY OR OTHER ASSAY MACHINE
TO WASTE
SAMPLE METERING VALVE
38
MIXER/ GRINDER
CTL/DATA
WEIGHING MACHINE
TO ALL CONTROLL-ABLE ELEMENTS
CONTROL/ USER INTERFACE SYSTEM
20

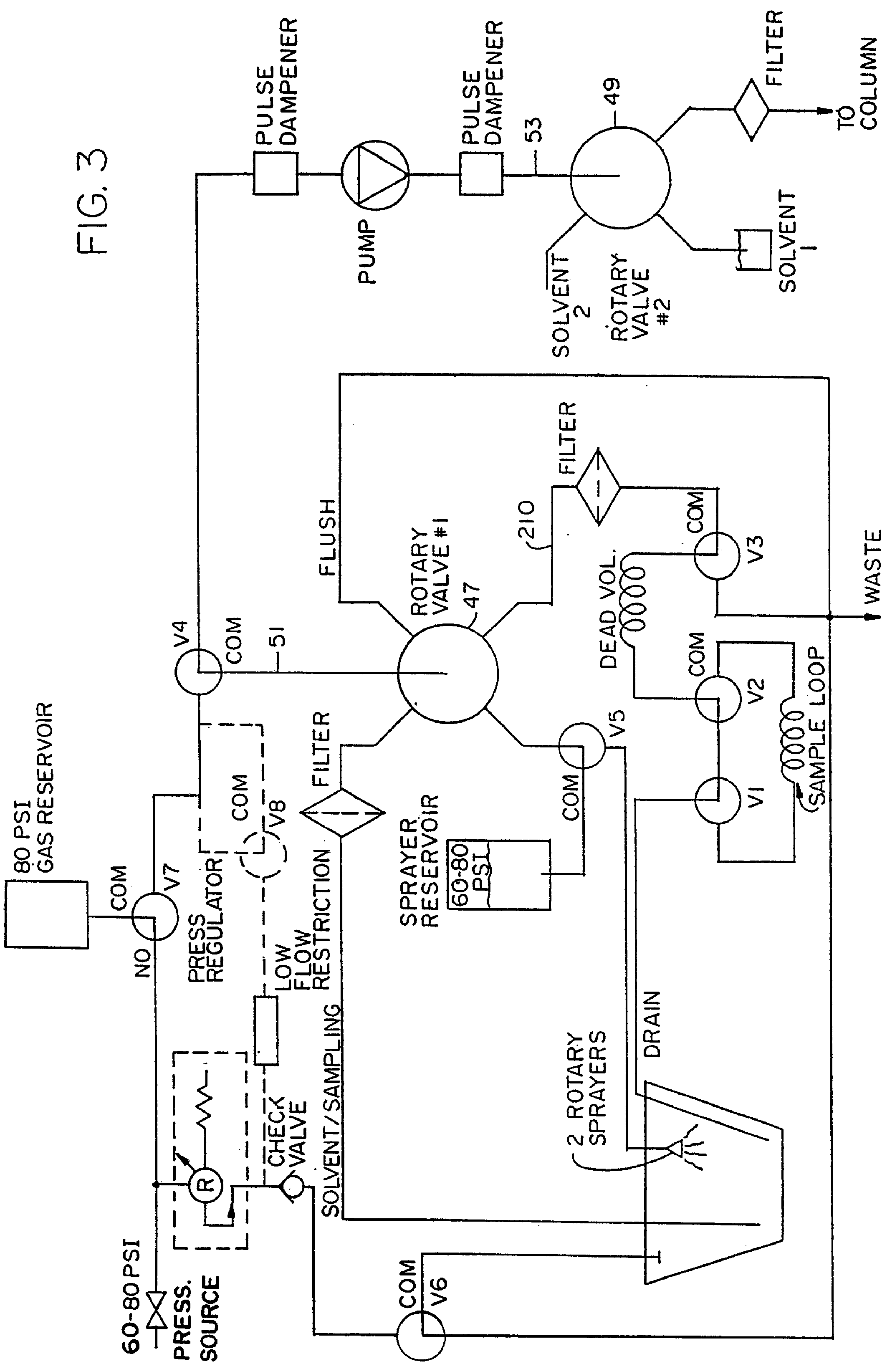

FIG. 3
80 PSI GAS RESERVOIR
COM
V7
NO
60-80 PSI
PRESS. SOURCE
PRESS REGULATOR
R
CHECK VALVE
LOW FLOW RESTRICTION
COM
V8
V4
COM
51
PULSE DAMPENER
PUMP
PULSE DAMPENER
53
49
FILTER
TO COLUMN
SOLVENT 2
ROTARY VALVE #2
SOLVENT 1
FLUSH
ROTARY VALVE #1
47
210
FILTER
COM
V3
WASTE
DEAD VOL.
COM
V2
SAMPLE LOOP
V1
FILTER
COM
V5
SPRAYER RESERVOIR
60-80 PSI
SOLVENT/SAMPLING
DRAIN
2 ROTARY SPRAYERS
COM
V6

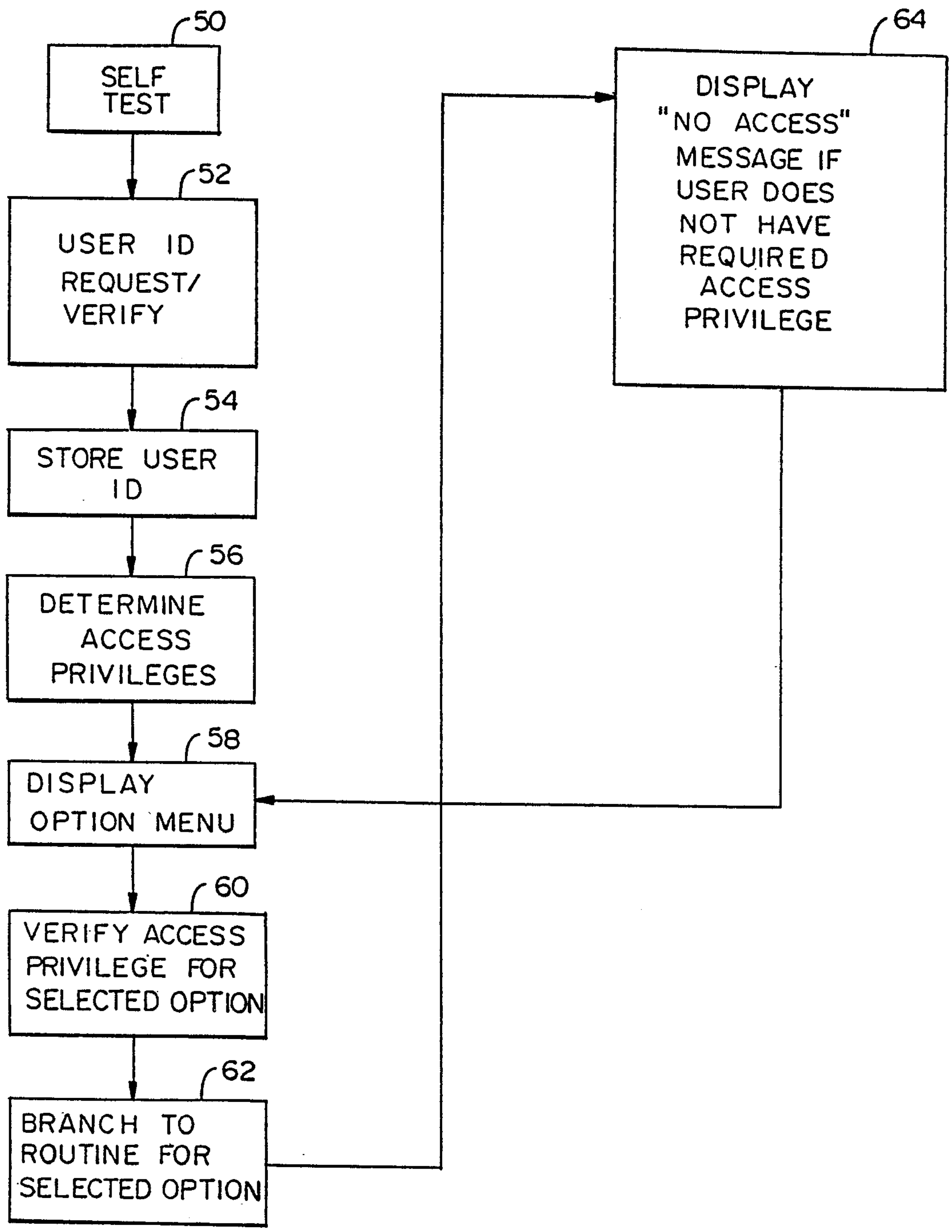
50
SELF TEST
52
USER ID REQUEST/ VERIFY
54
STORE USER ID
56
DETERMINE ACCESS PRIVILEGES
58
DISPLAY OPTION MENU
60
VERIFY ACCESS PRIVILEGE FOR SELECTED OPTION
62
BRANCH TO ROUTINE FOR SELECTED OPTION
64
DISPLAY "NO ACCESS" MESSAGE IF USER DOES NOT HAVE REQUIRED ACCESS PRIVILEGE

FIG. 4

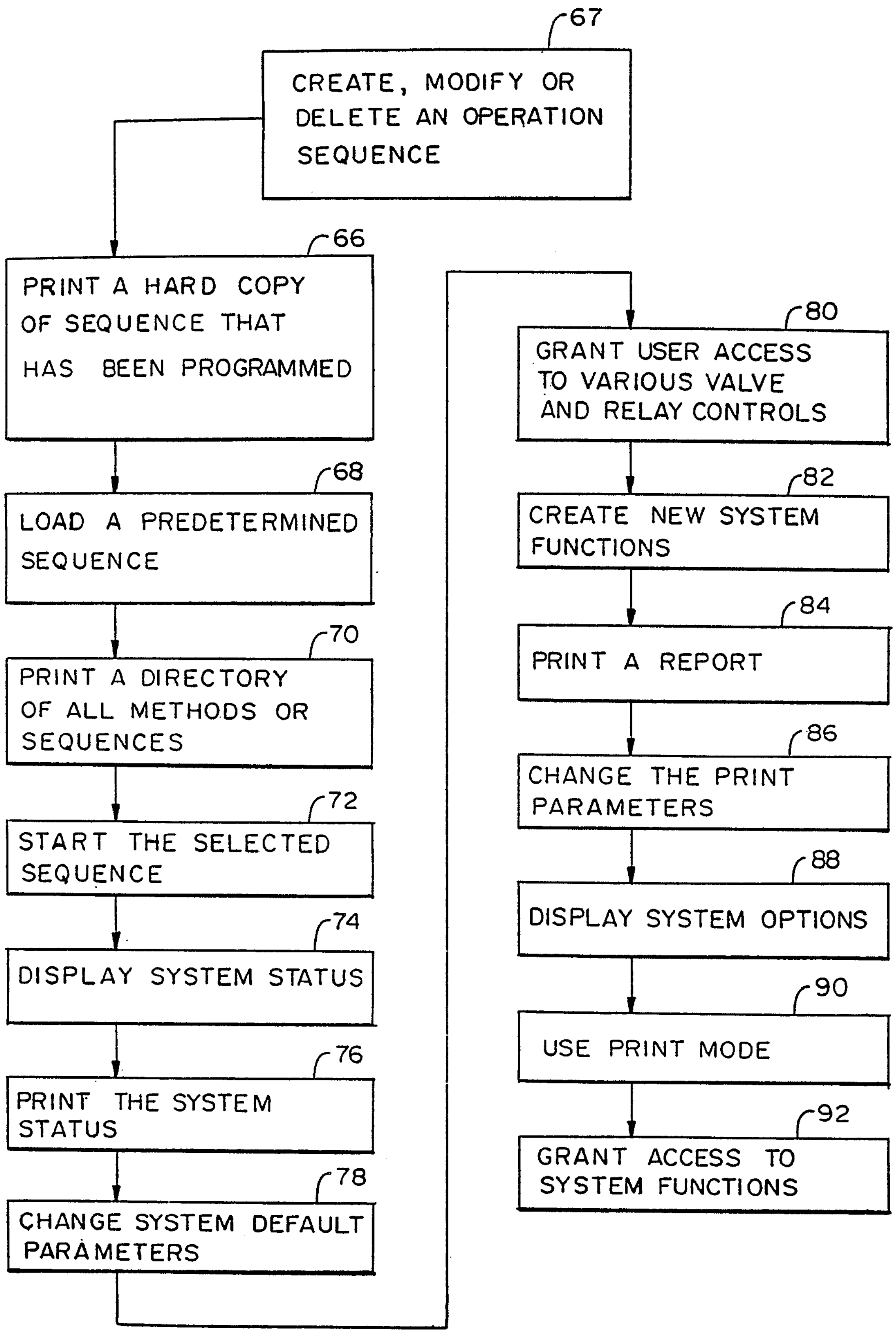
67
CREATE, MODIFY OR DELETE AN OPERATION SEQUENCE
66
PRINT A HARD COPY OF SEQUENCE THAT HAS BEEN PROGRAMMED
68
LOAD A PREDETERMINED SEQUENCE
70
PRINT A DIRECTORY OF ALL METHODS OR SEQUENCES
72
START THE SELECTED SEQUENCE
74
DISPLAY SYSTEM STATUS
76
PRINT THE SYSTEM STATUS
78
CHANGE SYSTEM DEFAULT PARAMETERS
80
GRANT USER ACCESS TO VARIOUS VALVE AND RELAY CONTROLS
82
CREATE NEW SYSTEM FUNCTIONS
84
PRINT A REPORT
86
CHANGE THE PRINT PARAMETERS
88
DISPLAY SYSTEM OPTIONS
90
USE PRINT MODE
92
GRANT ACCESS TO SYSTEM FUNCTIONS

FIG. 5

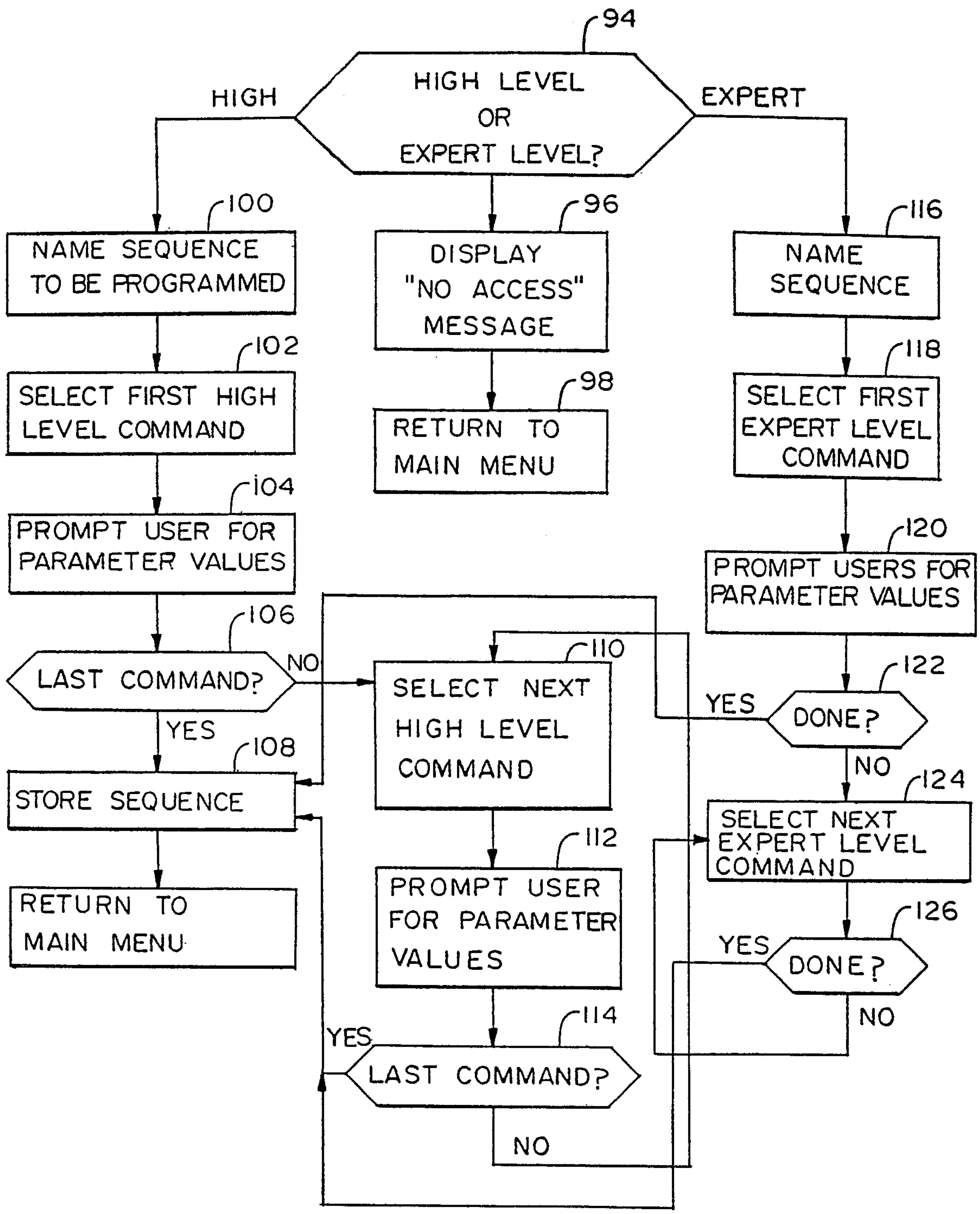
94
HIGH LEVEL OR EXPERT LEVEL?
HIGH
EXPERT
100
NAME SEQUENCE TO BE PROGRAMMED
96
DISPLAY "NO ACCESS" MESSAGE
116
NAME SEQUENCE
102
SELECT FIRST HIGH LEVEL COMMAND
98
RETURN TO MAIN MENU
118
SELECT FIRST EXPERT LEVEL COMMAND
104
PROMPT USER FOR PARAMETER VALUES
120
PROMPT USERS FOR PARAMETER VALUES
106
LAST COMMAND?
NO
YES
110
SELECT NEXT HIGH LEVEL COMMAND
122
DONE?
YES
NO
108
STORE SEQUENCE
124
SELECT NEXT EXPERT LEVEL COMMAND
112
PROMPT USER FOR PARAMETER VALUES
RETURN TO MAIN MENU
126
DONE?
YES
NO
114
LAST COMMAND?
YES
NO

FIG. 6

European Patent Office

# EUROPEAN SEARCH REPORT

Application Number

EP 87 81 0739

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | ELECTRONIQUE INDUSTRIELLE, no. 93, 15th September 1985, pages 91-96, Paris, FR; P. METAYER et al.: "Production automatisée: un terminal intelligent pour le dialogue opérateur d'exploitation" * Chapter: "Modes de fonctionnement" * --- | 1 | G 05 B 19/00<br>G 01 N 35/00<br>G 01 N 1/28 |
| A | ELEKTRONIK, vol. 18, 6th September 1985, pages 135-138, Munich, DE; B. HEINKE: "Programmerstellung für SPS heute; Komfortabel durch Personal-Computer und Makro-Assembler" * Whole document * --- | 1 | |
| A | EP-A-0 083 502 (FANUC LTD) * Abstract * --- | 1 | |
| A | US-A-3 744 034 (G.T. PAUL) * Abstract * --- | 5 | |
| A | US-A-4 586 151 (W.J. BUOTE) --- | | TECHNICAL FIELDS SEARCHED (Int. Cl.4) |
| A | PATENT ABSTRACTS OF JAPAN, vol. 8, no. 254 (P-315)[1691], 21st November 1984; & JP-A-59 125 403 (NIPPON KAYAKU K.K.) 19-07-1984 --- | | G 05 B<br>G 06 F<br>G 01 N |
| A | EP-A-0 155 751 (GLAXO GROUP LTD) ----- | | |

The present search report has been drawn up for all claims

| Place of search | Date of completion of the search | Examiner |
|---|---|---|
| THE HAGUE | 23-03-1988 | ANTHONY R.G. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document